# EUROPÄISCHE PATENTSCHRIFT

(11) **EP 2 643 426 B1**
(45) Veröffentlichungstag und Bekanntmachung des Hinweises auf die Patenterteilung: **09.11.2016**
(21) Anmeldenummer: 11791434.1
(22) Anmeldetag: 14.11.2011
(51) Int. Cl.: C09K 19/30, C09K 19/34, C09K 19/42, C09K 19/04

(54) **FLÜSSIGKRISTALLINES MEDIUM**
LIQUID CRYSTALLINE MEDIUM
MILIEU CRISTALLIN LIQUIDE

(30) Priorität: 27.11.2010 DE 102010052796
(43) Veröffentlichungstag der Anmeldung: 02.10.2013
(73) Patentinhaber: Merck Patent GmbH, 64293 Darmstadt (DE)
(72) Erfinder: HIRSCHMANN, Harald, 64291 Darmstadt (DE); WITTEK, Michael, 64390 Erzhausen (DE); CZANTA, Markus, 64289 Darmstadt (DE); SCHULER, Brigitte, 63762 Grossostheim (DE); REIFFENRATH, Volker, 64380 Rossdorf (DE)
(86) Internationale Anmeldenummer: PCT/EP2011/005728
(87) Internationale Veröffentlichungsnummer: WO 2012/069151

(56) Entgegenhaltungen:
- EP-A1- 0 073 378
- EP-A2- 0 122 389
- EP-A2- 0 728 829
- WO-A1-2010/017868
- WO-A1-2011/092973
- DE-A1- 3 022 818
- DE-A1- 10 140 419
- US-A1- 2004 011 996
- US-A1- 2009 190 085
- US-A1- 2009 197 018
- BEZBORODOV V S ET AL: "LIQUID CRYSTALLINE 1,4-DISUBSTITUTED CYCLOHEXENYLENE DERIVATIVES", LIQUID CRYSTALS: AN INTERNATIONAL JOURNAL OF SCIENCE AND TECHNOLOGY, TAYLOR & FRANCIS, GB, Bd. 26, Nr. 2, 1. Februar 1999 (1999-02-01), Seiten 271-280, XP000800608, ISSN: 0267-8292, DOI: 10.1080/026782999205416

## Beschreibung

Die vorliegende Erfindung betrifft ein flüssigkristallines Medium (FK-Medium), dessen Verwendung für elektrooptische Zwecke und dieses Medium enthaltende FK-Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur. Daneben gibt es auch Zellen, die mit einem elektrischen Feld parallel zur Substrat- und Flüssigkristallebene arbeiten, wie beispielsweise die IPS-Zellen ("in-plane switching"). Vor allem die TN-, STN-, FFS- (Fringe Field Switching)- und IPS- Zellen, sind derzeit kommerziell interessante Einsatzgebiete für die erfindungsgemäßen Medien.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d. h., in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d. h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Addressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Neben Flüssigkristallanzeigen, die eine Hintergrundbeleuchtung verwenden, also transmissiv und gegebenenfalls transflektiv betrieben werden, sind besonders auch reflektive Flüssigkristallanzeigen interessant. Diese reflektiven Flüssigkristallanzeigen benutzen das Umgebungslicht zur Informationsdarstellung. Somit verbrauchen sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive Anzeigen auch bei hellen Umgebungsverhältnissen noch gut abzulesen. Dies ist bereits von einfachen reflektiven TN-Anzeigen, wie sie in z. B. Armbanduhren und Taschenrechnern verwendet werden, bekannt. Jedoch ist das Prinzip auch auf hochwertige, höher auflösende Aktiv-Matrix angesteuerte Anzeigen wie z. B. TFT-Displays anwendbar. Hier ist wie bereits bei den allgemeinen üblichen transmissiven TFT-TN-Anzeigen die Verwendung von Flüssigkristallen mit niedriger Doppelbrechung (Δn) nötig, um eine geringe optische Verzögerung (d · Δn) zu erreichen. Diese geringe optische Verzögerung führt zu einer meist akzeptablen geringen Blickwinkelabhängigkeit des Kontrastes (vgl. DE 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Für TV- und Videoanwendungen werden Displays mit schnellen Schaltzeiten benötigt, um Multimedia-Inhalte, wie z. B. Filme und Videospiele, realitätsnah wiedergeben zu können. Solche geringen Schaltzeiten lassen sich besonders dann realisieren, wenn Flüssigkristallmedien mit geringen Werten für die Viskosität, insbesondere der Rotationsviskosität γ₁ und mit einer hohen optischen Anisotropie (Δn) verwendet werden.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- erhöhte Beständigkeit gegenüber UV-Strahlung (längere Lebensdauer)
- kleine Schwellenspannung.

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Moderne LCD-Flachbildschirme erfordern immer schnellere Schaltzeiten, um Multimedia-Inhalte, wie z.B. Filme, Videospiele, etc., realitätsnah wiedergeben zu können. Diese wiederum erfordert nematische Flüssigkristallmischungen, die eine sehr kleine Rotationsviskosität γ₁ mit einer hohen optischen Anisotropie Δn aufweisen. Um die geforderten Rotationsviskositäten der Flüssigkristallmischungen zu erhalten, müssen die eingesetzten Konzentrationen einzelner Komponenten häufig maximiert werden. Dies führt wiederum häufig dazu, dass die LC-Mischungen bei tiefen Temperaturen nicht stabil sind, d. h. zum Beispiel auskristallisieren, und in eine unerwünschte smektische Phase übergehen. Sofern diese Probleme in einem Display auftreten, führt dies in der Regel zu einem Ausfall des Displays und damit zu einem irreparablen Schaden des LCD-Flachbildschirms.

Der Erfindung liegt die Aufgabe zugrunde, Medien insbesondere für derartige MFK-, TN-, STN-, OCB-, posititve VA-, FFS- oder IPS-Anzeigen bereitzustellen, welche die oben angegebenen gewünschten Eigenschaften besitzen und die oben angegebenen Nachteile nicht oder nur in geringerem Maße zeigen. Insbesondere sollten die FK-Medien schnelle Schaltzeiten und niedrige Rotationsviskositäten bei gleichzeitig hoher Doppelbrechung aufweisen. Darüber hinaus sollten die FK-Medien einen hohen Klärpunkt, eine hohe dielektrische Anisotropie und eine niedrige Schwellenspannung aufweisen.

Es wurde nun gefunden, dass diese Aufgabe gelöst werden kann, wenn man Flüssigkristallmischungen enthaltend eine oder mehrere Verbindungen der Formel I verwendet. Die Verbindungen der Formel I unterdrücken bereits in geringen Konzentrationen in der LC-Mischung den Übergang zu smektischen Phasen.

Gegenstand der Erfindung ist ein flüssigkristallines Medium, dadurch gekennzeichnet, dass es eine oder mehrere Verbindungen der Formel I, 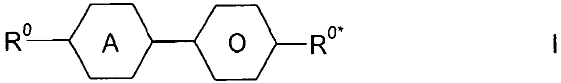 worin
- R⁰ und R^{0*}: jeweils unabhängig voneinander einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 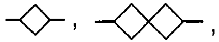 -O-, -CO-O-, -O-CO- so ersetzt sein können, dass O-Atome nicht direkt miteinander verknüpft sind, und worin auch ein oder mehrere H-Atome durch Halogen ersetzt sein können,
- Ring A: einen 1,4-Cyclohexylenring oder 1,4-Cyclohexenylenring, worin auch eine oder zwei CH₂-Gruppen durch -O-und/oder -S- ersetzt sein können,
bedeuten,
enthält, und zusätzlich eine oder mehrere Verbindungen ausgewählt aus den Verbindungen der Formeln VI-1a bis VI-1d, VI-2a bis VI-2f, X, XI, XII, XIII-XVI, XIX bis XXVII, 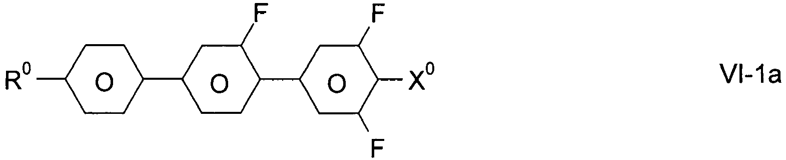 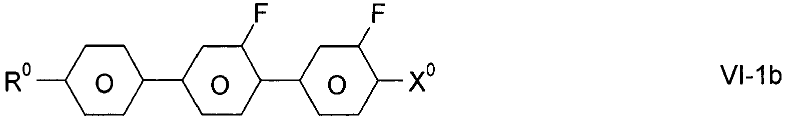 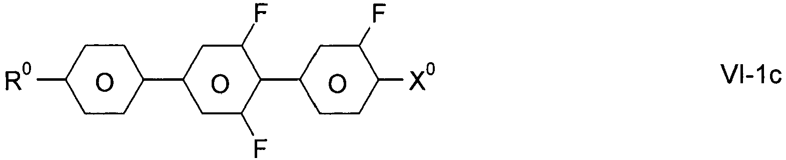 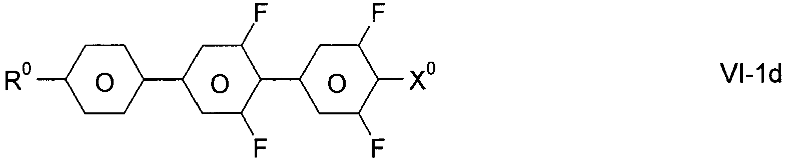 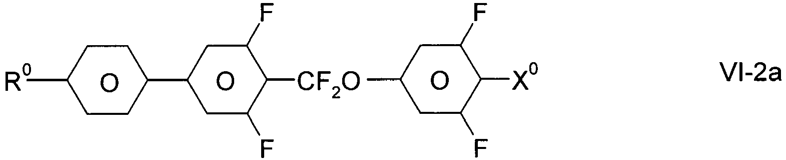 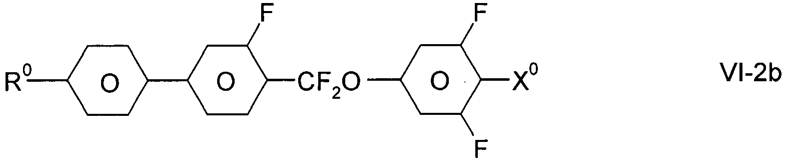 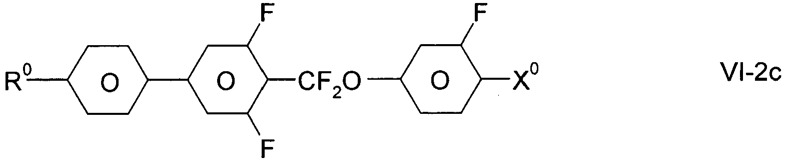 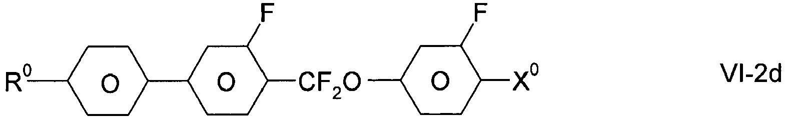 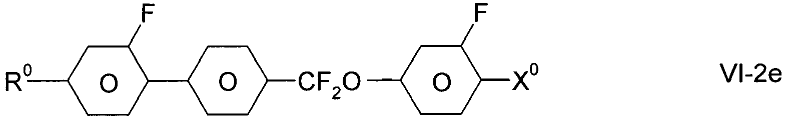 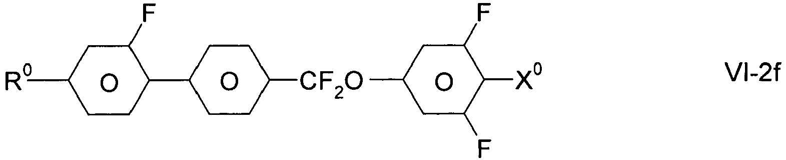 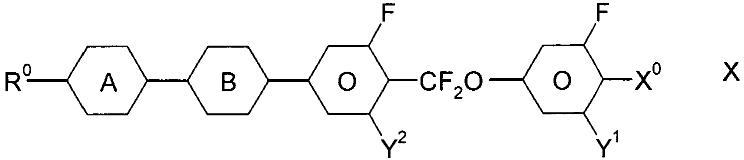 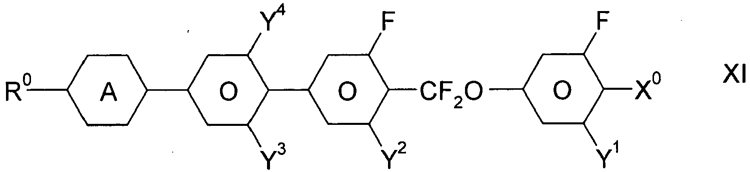 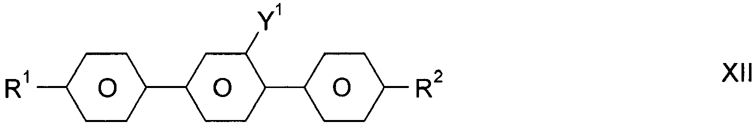 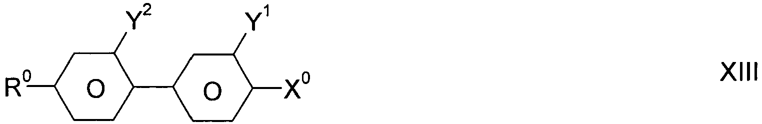 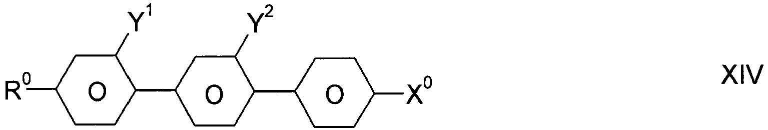 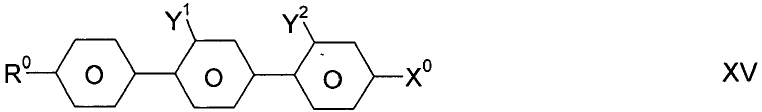 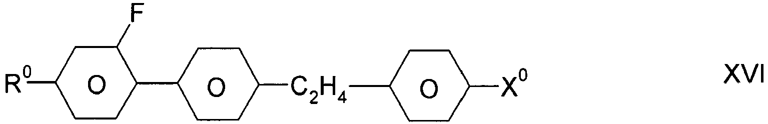 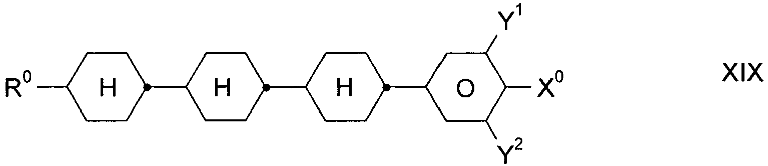 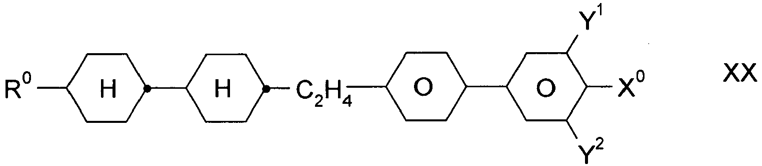 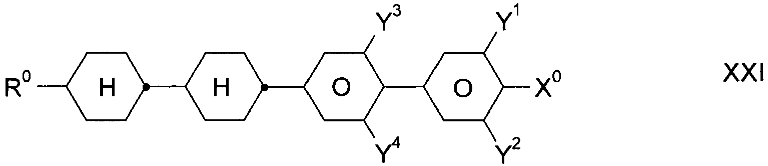 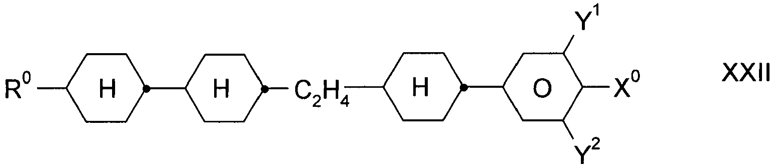 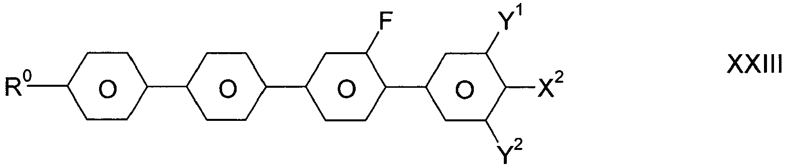 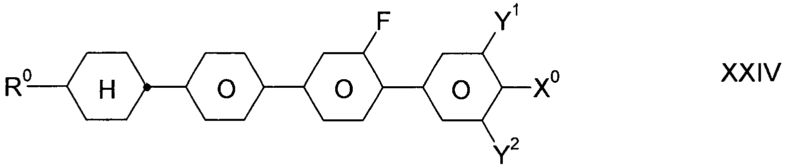 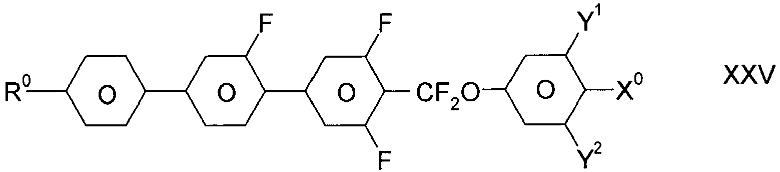 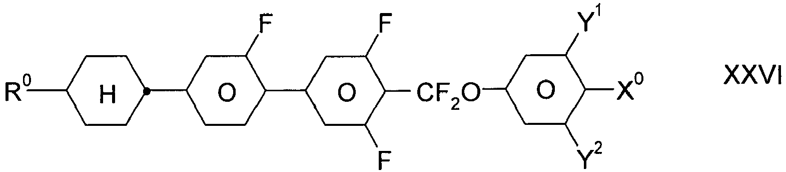 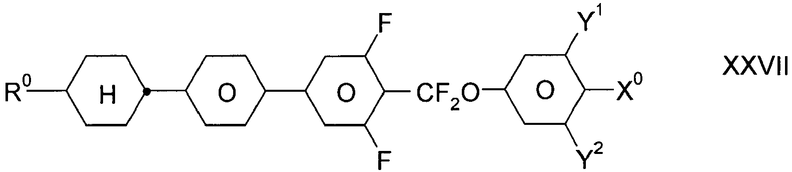 worin
- Y¹⁻⁴: jeweils unabhängig voneinander H oder F
- X⁰: F, Cl, ein- oder mehrfach fluorierter Alkyl- oder Alkoxyrest mit 1 bis 6 C-Atomen, ein oder mehrfach fluorierter Alkenyl- oder Alkenyloxyrest mit 2 bis 6 C-Atomen 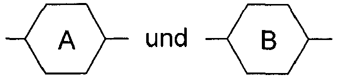 jeweils unabhängig voneinander 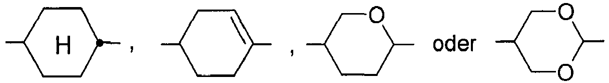
- R¹ und R²: jeweils unabhängig voneinander n-Alkyl, Alkoxy, Oxaalkyl, Fluoralkyl, Alkenyloxy oder Alkenyl mit jeweils bis zu 9 C-Atomen,
bedeuten,
enthält.

Überraschenderweise wurde gefunden, dass FK-Medien enthaltend Verbindungen der Formel I ein sehr gutes Verhältnis von Rotationsviskosität γ₁ und Klärpunkt, einen hohen Wert für die optische Anisotropie Δε und eine hohe Doppelbrechung Δn, sowie schnelle Schaltzeiten, eine niedrige Schwellenspannung, einen hohen Klärpunkt, eine hohe positive dielektrische Anisotropie und einen breiten nematischen Phasenbereich aufweisen und sehr stabil bei tiefen Temperaturen (≤ - 20 °C) sind. Weiterhin sind die Verbindungen der Formel I sehr gut in flüssigkristallinen Medien löslich. Die Verbindungen der Formel I sind beispielsweise bekannt aus der EP 122389 A, US 2004/011996 A, EP 728829 A, DE 3022818 A, US 2009/190085 A, DE 10140419 A, US 2009/197018 A, EP 0073378 A; Liquid Crystals: An International Journal of Science and Technology, 26 (2), 1999, S. 271-280, V. S. Bezborodov et al.; WO 2010/017868 A.

Die Verbindungen der Formel I besitzen einen breiten Anwendungsbereich. In Abhängigkeit von der Auswahl der Substituenten können sie als Basismaterialien dienen, aus denen flüssigkristalline Medien zum überwiegenden Teil zusammengesetzt sind; es können aber auch den Verbindungen der Formel I flüssigkristalline Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Falls in den oben- und untenstehenden Formeln R⁰ und/oder R^{0*} einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxabutyl (= 2-Methoxyethyl), 2-, 3-oder 4-Oxapentyl, 2-, 3-, 4- oder 5-Oxahexyl, 2-, 3-, 4-, 5- oder 6-Oxaheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Falls R⁰ und/oder R^{0*} einen Alkylrest bedeutet, in dem eine CH₂-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl. Diese Reste können auch ein- oder mehrfach halogeniert sein.

In den Verbindungen der Formel I bedeuten R⁰ vorzugsweise einen Alkenlyrest, insbesondere CH₂=CH, CH₃CH=CH, CH₂=CHC₂H₄, C₂H₅CH=CH, insbesondere CH₃CH=CH oder CH₂=CHC₂H₄.

R^{0*} bedeutet in den Verbindungen der Formel I vorzugsweise geradkettiges Alkyl, geradkettiges Alkoxy und geradkettiges Alkenyl, vorzugsweise mit 1-3 C-Atomen bzw. 2-3 C-Atomen. Ganz besonders bevorzugt bedeutet R^{0*} OCH₃, CH₃, C₂H₅, C₂H₄CH=CH₂.

Die Ring A bedeutet in der Formel I vorzugsweise einen 1,4-Cylclohexylenring, ferner einen Dioxan- oder Pyranring.

Bevorzugte Verbindungen der Formel I werden nachfolgend genannt, 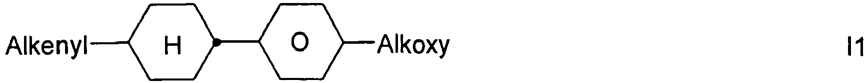 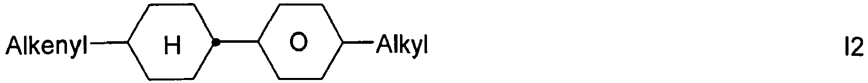 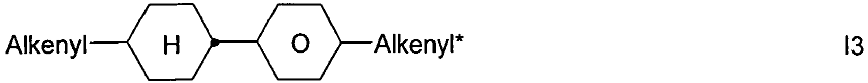 worin
- Alkenyl und Alkenyl*: jeweils unabhängig voneinander einen geradkettigen Alkenylrest mit 2 bis 6 C-Atomen, vorzugsweise einen Alkenylrest mit maximal 3 C-Atomen,
- Alkoxy: einen geradkettigen Alkoxyrest mit 1 bis 6 C-Atomen
und
- Alkyl: einen geradkettigen Alkylrest mit 1 bis 6 C-Atomen
bedeuten.

Insbesondere bevorzugt sind die folgenden Verbindungen:

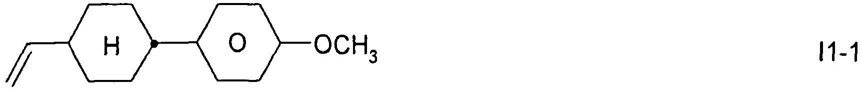

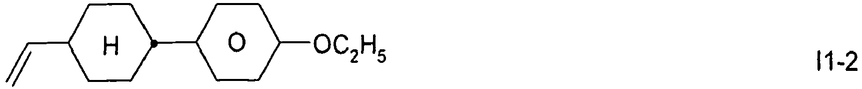

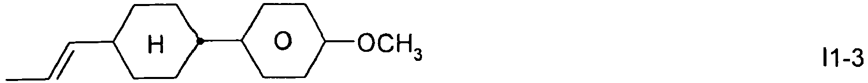

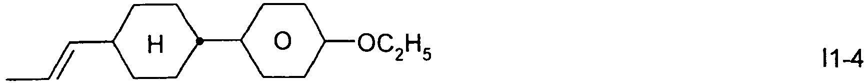

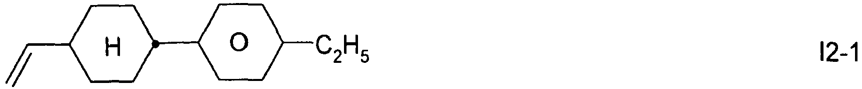

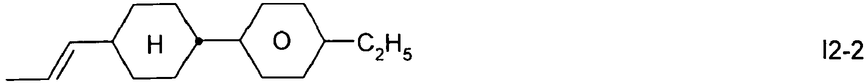

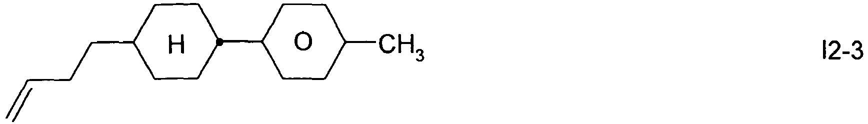

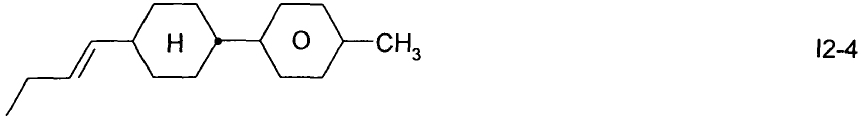

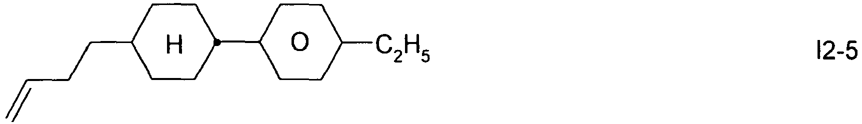

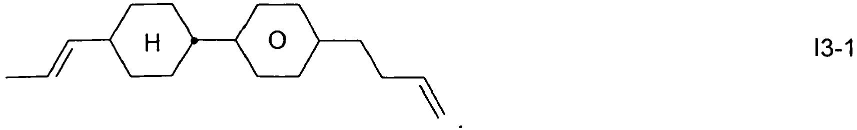

Besonders bevorzugte Verbindungen sind die Verbindungen der Formeln I2-2, I2-3 und I2-4.

Insbesondere bevorzugt sind Mischungen enthaltend die Verbindung der Formel 12-3.

Die Verbindungen der Formel I sind in reinem Zustand farblos und bilden flüssigkristalline Mesophasen in einem für die elektrooptische Verwendung günstig gelegenen Temperaturbereich. Chemisch, thermisch und gegen Licht sind sie stabil. Die Verbindungen zeichnen sich aber insbesondere dadurch aus, dass sie in den flüssigkristallinen Medien die smektischen Phasen unterdrücken.

Die Verbindungen der Formel I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Weitere bevorzugte Ausführungsformen sind im Folgenden angegeben:
- Das Medium enthält zusätzlich eine oder mehrere neutrale Verbindungen der Formeln II und/oder III, 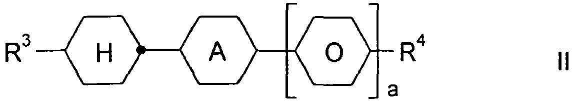 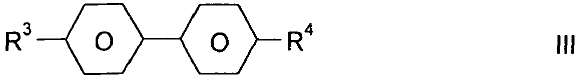 worin
   - A: 1,4-Phenylen oder trans-1,4-Cyclohexylen bedeutet,
   - a: 0 oder 1 ist, wobei im Fall a = 0 Ring A trans-1,4-Cyclohexylen bedeutet,
   - R³: Alkenyl mit 2 bis 9 C-Atomen bedeutet,
   und R⁴ die für R⁰ in Formel I angegebene Bedeutung besitzt und vorzugsweise Alkyl mit 1 bis 12 C-Atomen oder Alkenyl mit 2 bis 9 C-Atomen bedeutet.
- Die Verbindungen der Formel II sind vorzugsweise ausgewählt aus folgenden Formeln, 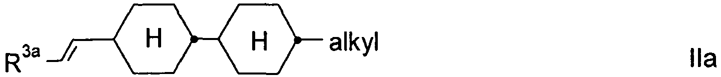 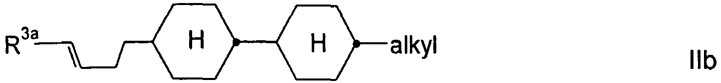 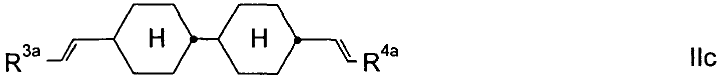 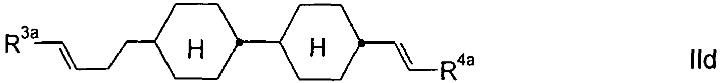 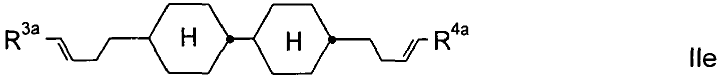 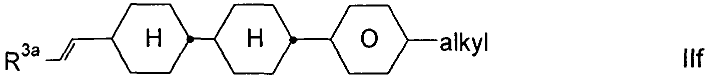 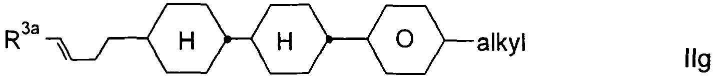 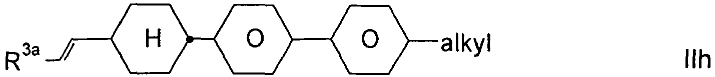 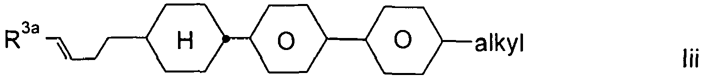
worin R^{3a} und R^{4a} jeweils unabhängig voneinander H, CH₃, C₂H₅ oder C₃H₇ bedeuten, und "alkyl" eine geradkettige Alkylgruppe mit 1 bis 8 C-Atomen bedeutet. Besonders bevorzugt sind Verbindungen der Formeln IIa und IIf, insbesondere worin R^{3a} H oder CH₃ bedeutet, und Verbindungen der Formel IIc, insbesondere worin R^{3a} und R^{4a} H, CH₃ oder C₂H₅ bedeuten.

Weiterhin sind Verbindungen der Formel II bevorzugt, die eine nichtendständige Doppelbindung in der Alkenylseitenkette aufweisen:

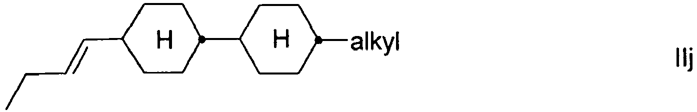

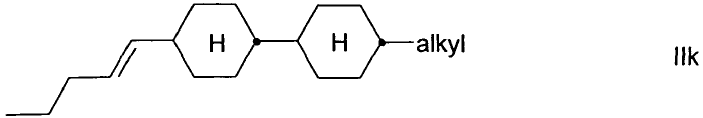

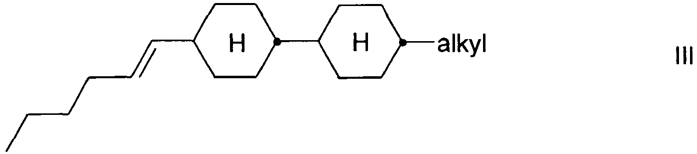

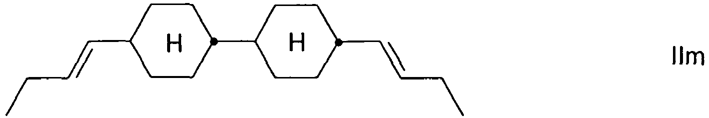

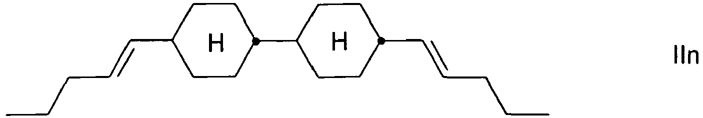

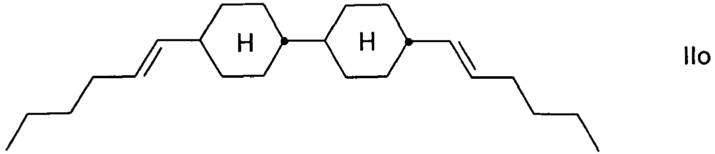

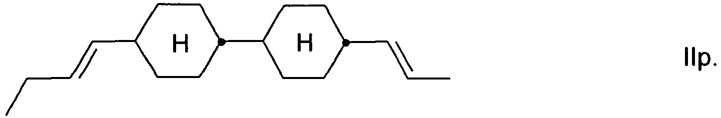

Ganz besonders bevorzugte Verbindungen der Formel II sind die Verbindungen der Formeln

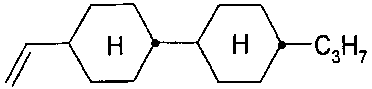

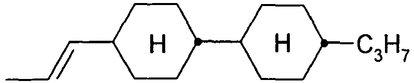

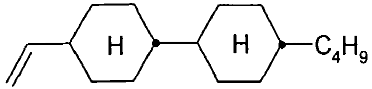

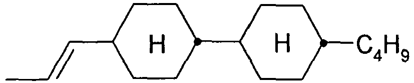

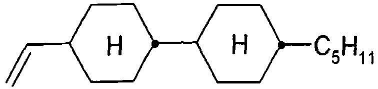

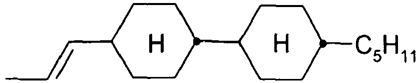

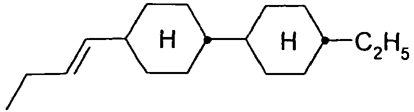

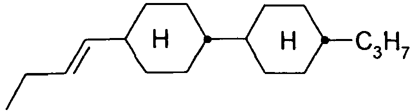

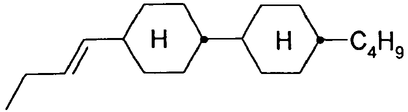

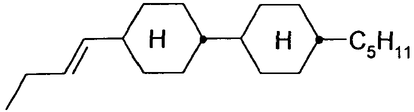

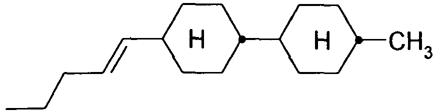

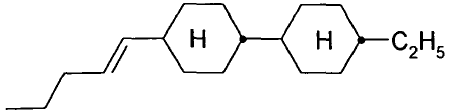

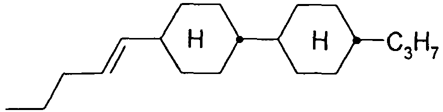

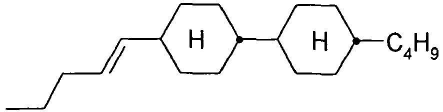

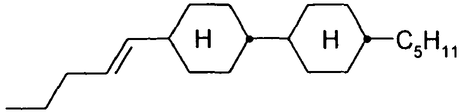

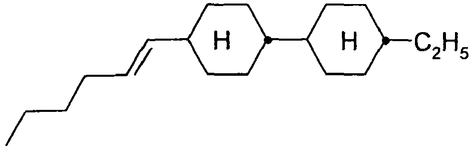

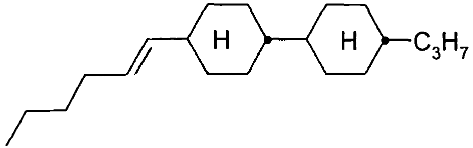

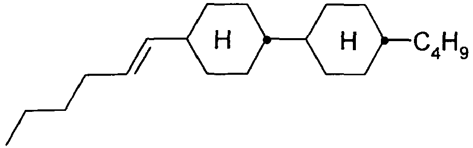

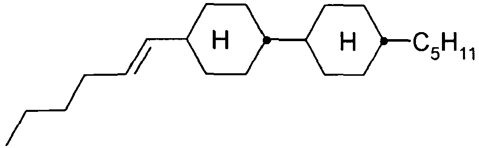

Besonders bevorzugt enthalten die erfindungsgemäßen flüssigkristallinen Medien neben einer oder mehrerer Verbindungen der Formel I 5 - 70 Gew.% an Verbindungen der Formel 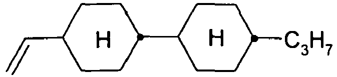 und/oder 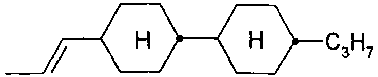
- Die Verbindungen der Formel III sind vorzugsweise ausgewählt aus den folgenden Formeln, 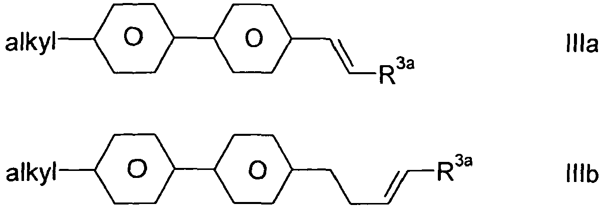 worin "alkyl" und R^{3a} die oben angegebenen Bedeutungen haben und R^{3a} vorzugsweise H oder CH₃ bedeutet. Besonders bevorzugt sind Verbindungen der Formel IIIb;
- Das Medium enthält vorzugsweise zusätzlich eine oder mehrere Verbindungen ausgewählt aus den Formeln IV bis VIII, 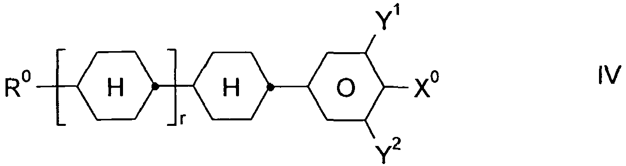 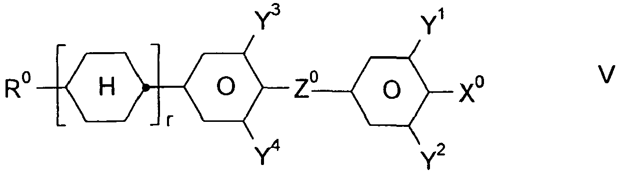 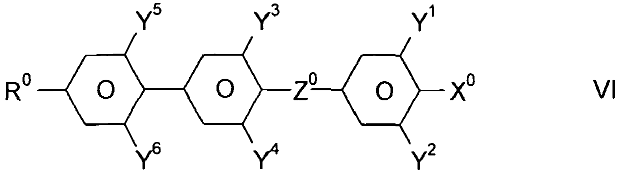 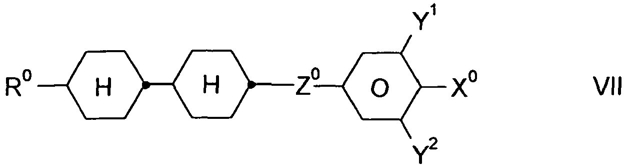 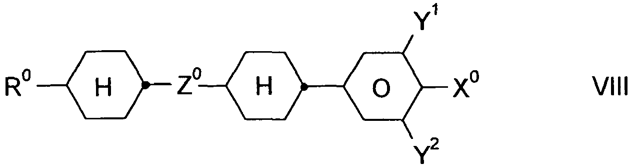
worin
- R⁰: die in Formel I angegebenen Bedeutungen besitzt,
- X⁰: F, Cl, ein- oder mehrfach fluorierter Alkyl- oder Alkoxyrest mit jeweils 1 bis 6 C-Atomen, ein- oder mehrfach fluorierter Alkenyl- oder Alkenyloxyrest mit jeweils 2 bis 6 C-Atomen,
- Y¹⁻⁶: jeweils unabhängig voneinander H oder F,
- Z⁰: -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- oder -OCF₂-, in den Formeln V und VI auch eine Einfachbindung, und
- r: 0 oder 1
bedeuten.

In den obenstehenden Formeln ist X⁰ vorzugsweise F, Cl oder ein ein- oder mehrfach fluorierter Alkyl- oder Alkoxyrest mit 1, 2 oder 3 C-Atomen oder ein ein- oder mehrfach fluorierter Alkenylrest bzw. Alkenyloxyrest mit 2 oder 3 C-Atomen. X⁰ ist besonders bevorzugt F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CH₂F, OCFHCF₂CF₃, OCFHCF₂CHF₂, OCH=CF₂, OCF=CF₂, OCF₂CHFCF₃, OCF₂CF₂CF₃, OCF₂CF₂CClF₂, OCClFCF₂CF₃, CF=CF₂, CF=CHF, OCH=CF₂, OCF=CF₂, oder CH=CF₂. Ganz besonders bevorzugt bedeutet X⁰ F oder OCF₃.

In den Verbindungen der Formel IV bis VIII bedeutet X⁰ vorzugsweise F oder OCF₃, ferner OCHF₂, CF₃, CF₂H, Cl, OCH=CF₂. R⁰ ist vorzugsweise geradkettiges Alkyl oder Alkenyl mit bis zu 6 C-Atomen.
- Die Verbindungen der Formel IV sind vorzugsweise ausgewählt aus den folgenden Formeln, 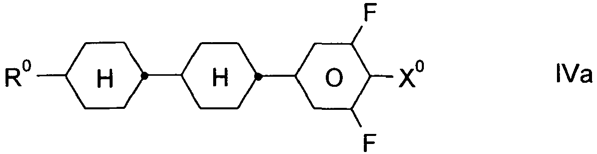 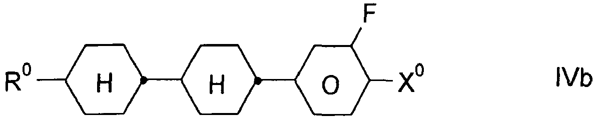 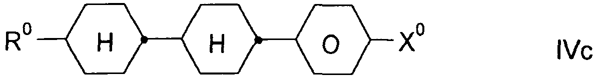 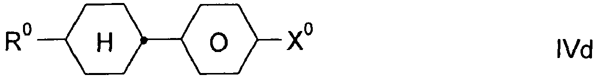 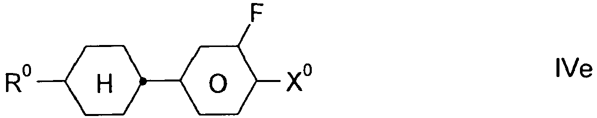 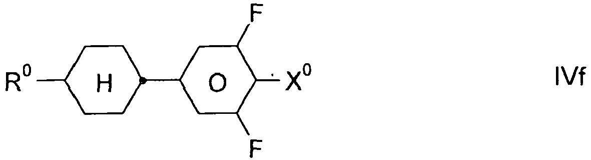
worin R⁰ und X⁰ die oben angegebenen Bedeutungen haben.

Vorzugsweise bedeutet in Formel IV R⁰ Alkyl mit 1 bis 8 C-Atomen und X⁰ F, Cl, OCHF₂ oder OCF₃, ferner OCH=CF₂. In der Verbindung der Formel IVb bedeutet R⁰ vorzugsweise Alkyl oder Alkenyl. In der Verbindung der Formel IVd bedeutet X⁰ vorzugsweise Cl, ferner F.
- Die Verbindungen der Formel V sind vorzugsweise ausgewählt aus den Formeln Va bis Vj, 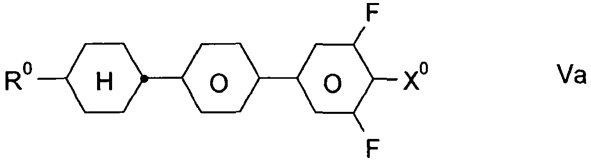 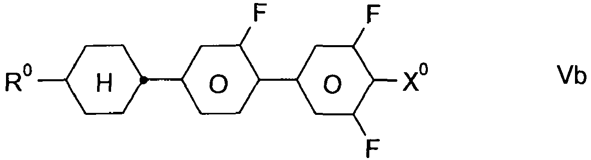 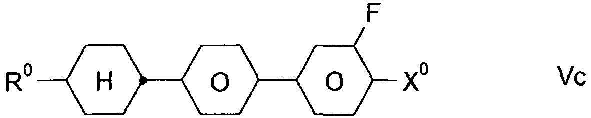 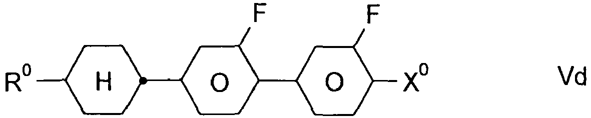 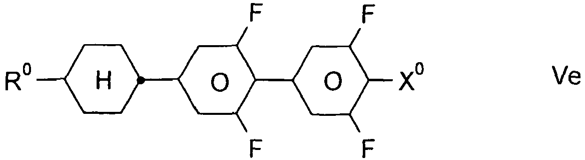 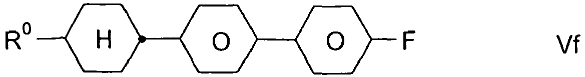 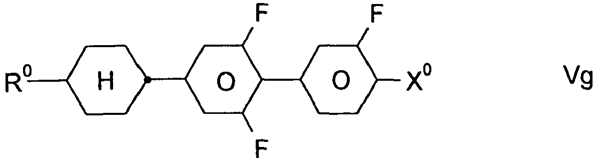 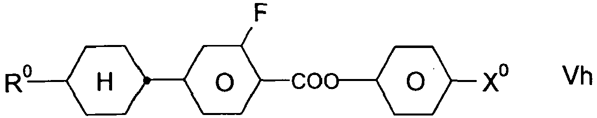 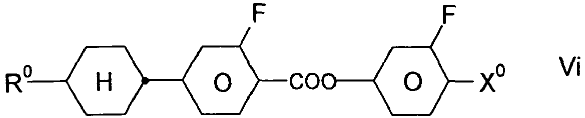 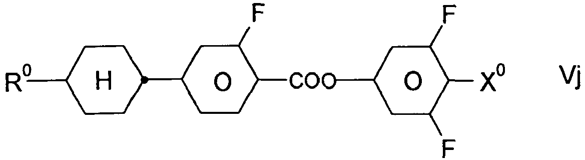 worin R⁰ und X⁰ die oben angegebenen Bedeutungen haben. Vorzugsweise bedeutet in Formel V R⁰ Alkyl mit 1 bis 8 C-Atomen und X⁰ F;
- Das Medium enthält eine oder mehrere Verbindungen der Formel VI-1, 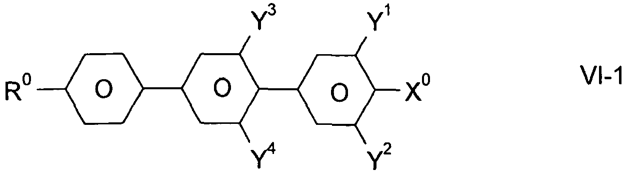 besonders bevorzugt solche ausgewählt aus den folgenden Formeln, 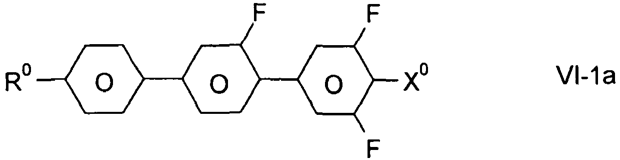 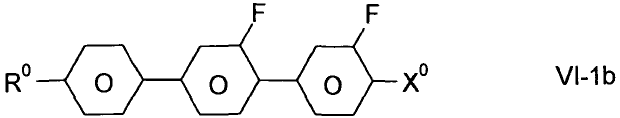 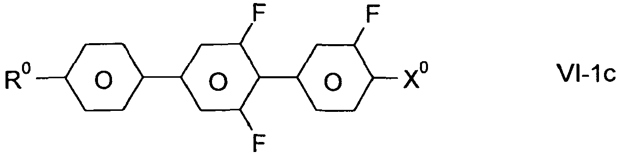 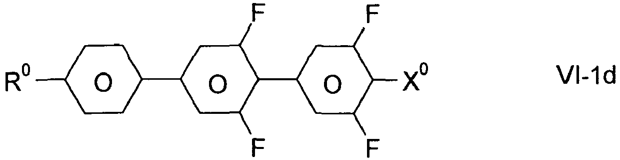 worin R⁰ und X⁰ die oben angegebenen Bedeutungen haben.

Vorzugsweise bedeutet in Formel VI R⁰ Alkyl mit 1 bis 8 C-Atomen und X⁰ F, ferner OCF₃.
- Das Medium enthält eine oder mehrere Verbindungen der Formel VI-2, 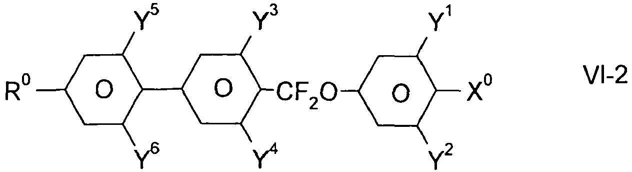 besonders bevorzugt solche ausgewählt aus den folgenden Formeln, 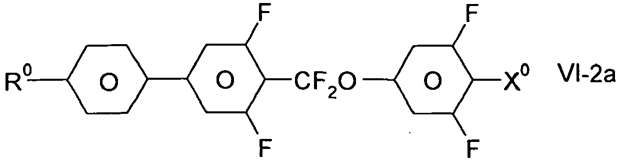 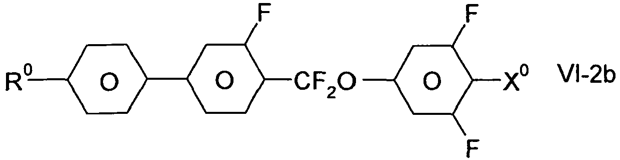 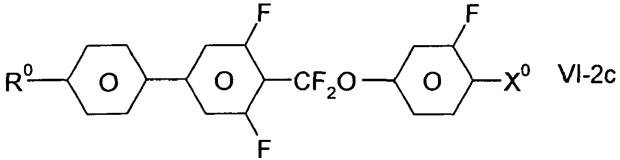 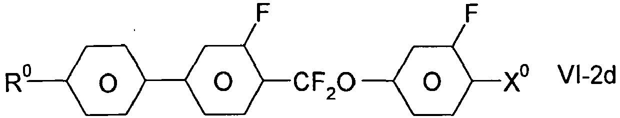 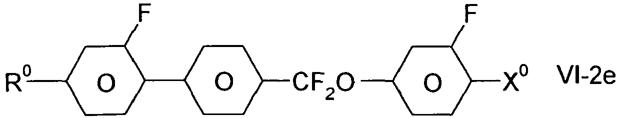 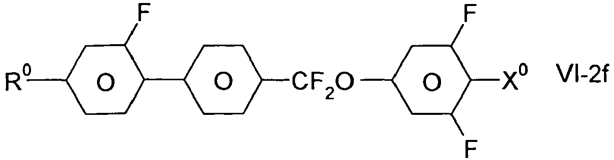 worin R⁰ und X⁰ die oben angegebenen Bedeutungen haben.

Vorzugsweise bedeutet in Formel VI R⁰ Alkyl mit 1 bis 8 C-Atomen und X⁰ F;
- Das Medium enthält vorzugsweise eine oder mehrere Verbindungen der Formel VII, worin Z⁰ -CF₂O-, -CH₂CH₂ oder -COO-, bedeutet, besonders bevorzugt solche ausgewählt aus folgenden Formeln, 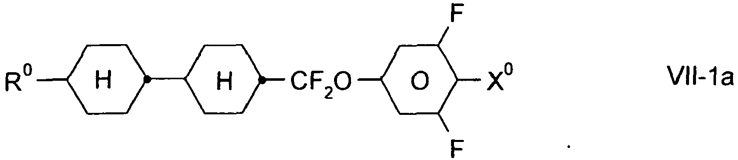 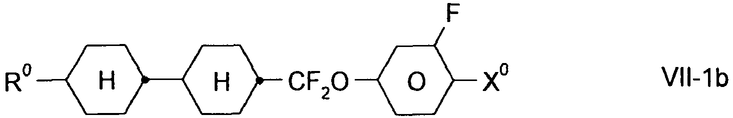 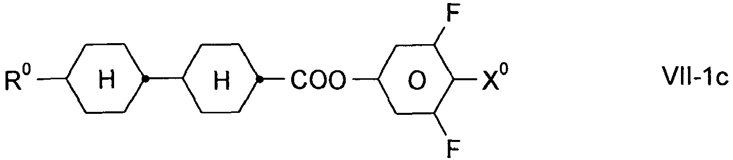 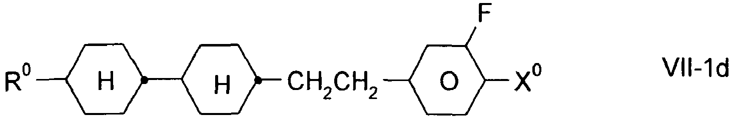 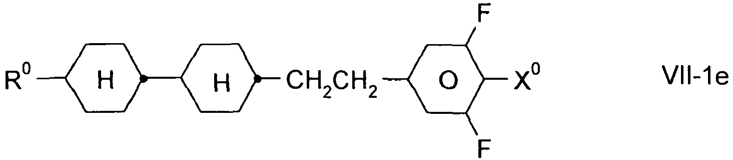
worin R⁰ und X⁰ die oben angegebenen Bedeutungen haben. Vorzugsweise bedeutet in Formel VII R⁰ Alkyl mit 1 bis 8 C-Atomen und X⁰ F, ferner OCF₃.

Die Verbindungen der Formel VIII sind vorzugsweise ausgewählt aus den folgenden Formeln, 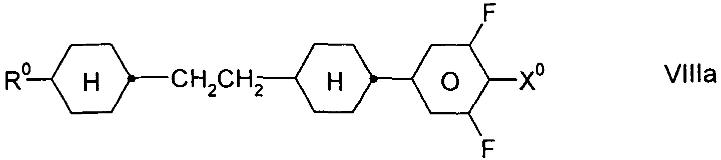 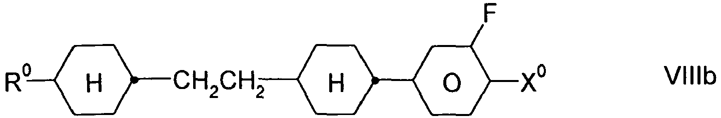 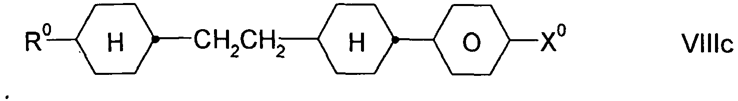 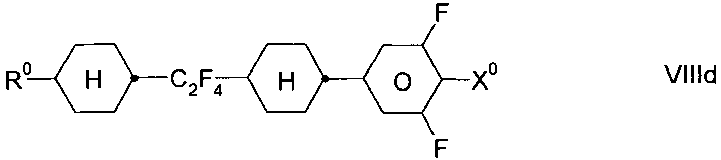 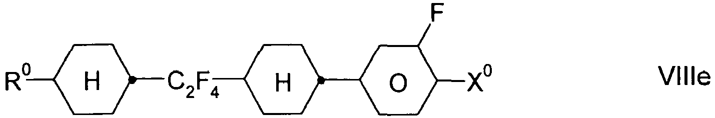 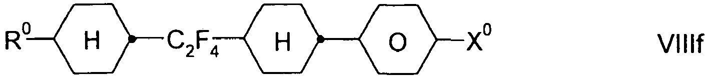 worin R⁰ und X⁰ die oben angegebenen Bedeutungen haben. Vorzugsweise bedeutet in Formel VIII R⁰ einen geradkettigen Alkylrest mit 1 bis 8 C-Atomen. X⁰ bedeutet vorzugsweise F.
- Das Medium enthält zusätzlich eine oder mehrere Verbindungen der folgenden Formel, 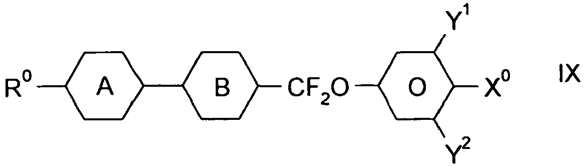 worin R⁰, X⁰, Y¹ und Y² die oben angegebene Bedeutung besitzen, und 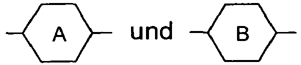 jeweils unabhängig voneinander 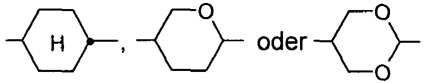 bedeuten,
   wobei die Ringe A und B nicht beide gleichzeitig 1,4-Cyclohexylen bedeuten;
- Die Verbindungen der Formel IX sind vorzugsweise ausgewählt aus folgenden Formeln, 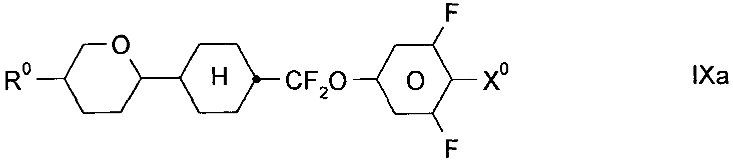 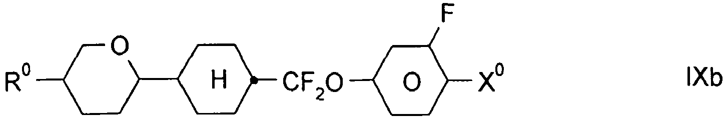 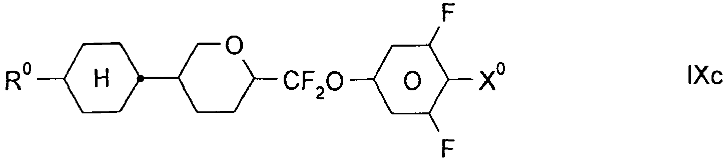 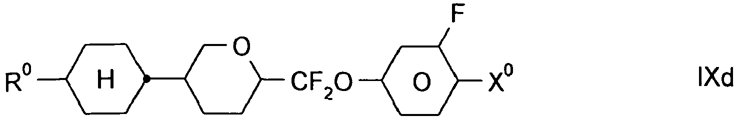 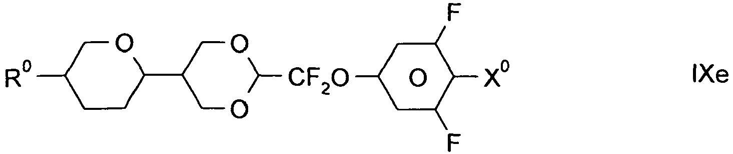 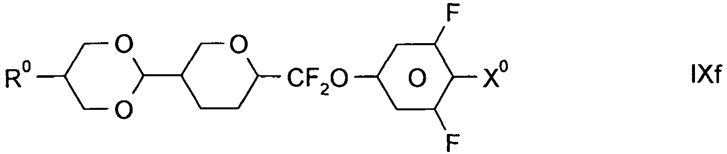 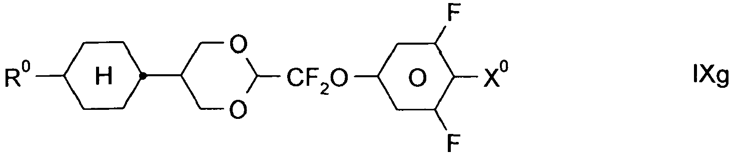 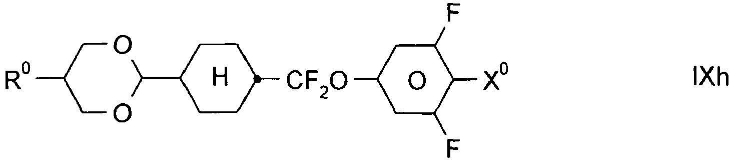 worin R⁰ und X⁰ die oben angegebenen Bedeutungen haben. Vorzugsweise bedeutet in Formel IX R⁰ Alkyl mit 1 bis 8 C-Atomen und X⁰ F. Besonders bevorzugt sind Verbindungen der Formel IXa;
- Das Medium enthält zusätzlich eine oder mehrere Verbindungen ausgewählt aus den folgenden Formeln, 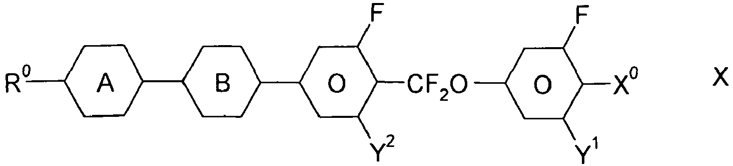 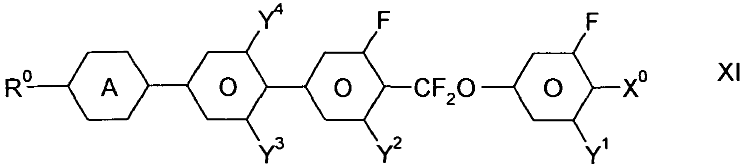 worin R⁰, X⁰ und Y¹⁻⁴ die in Formel I angegebene Bedeutung besitzen, und 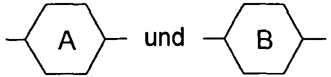 jeweils unabhängig voneinander 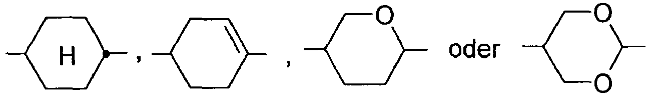 bedeuten;
- Die Verbindungen der Formeln X und XI sind vorzugsweise ausgewählt aus den folgenden Formeln, 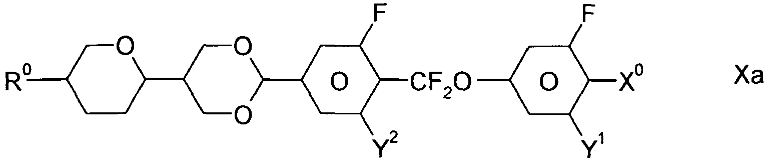 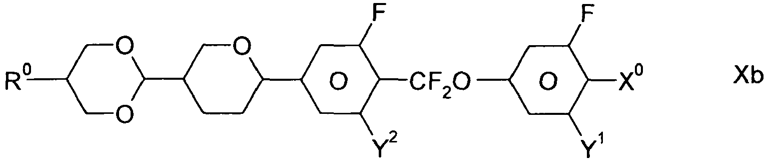 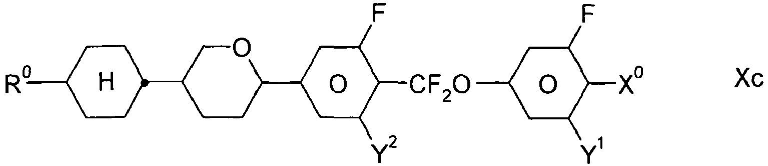 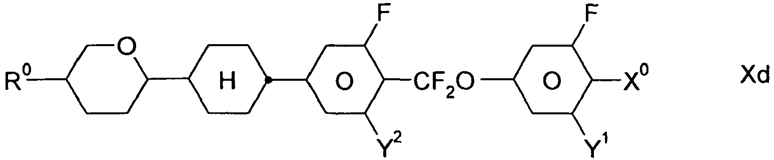 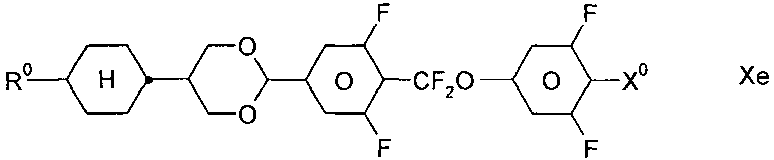 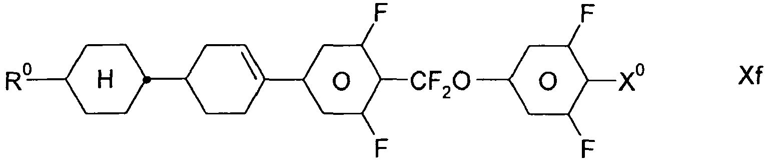 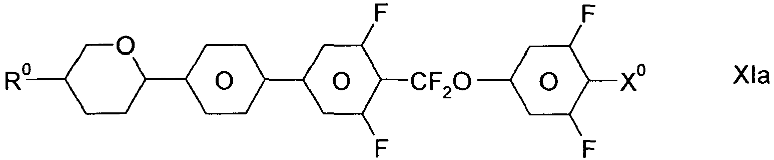 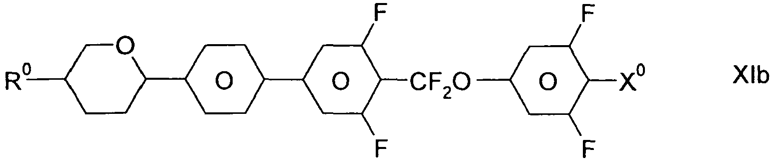 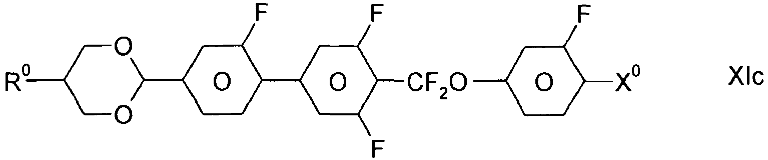 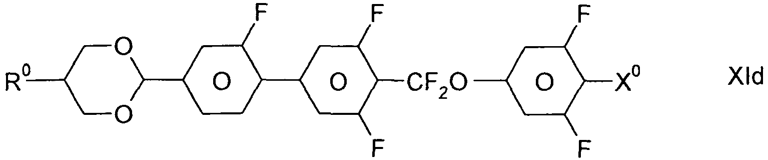 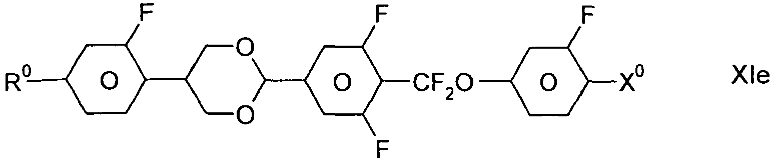 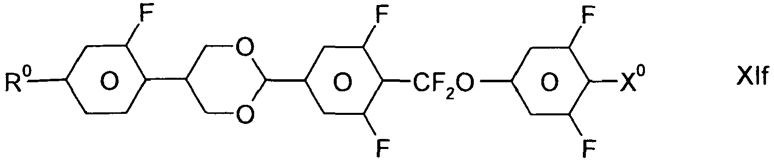 worin R⁰ und X⁰ die oben angegebenen Bedeutungen haben. Vorzugsweise bedeutet R⁰ Alkyl mit 1 bis 8 C-Atomen und X⁰ F. Besonders bevorzugte Verbindungen sind solche, worin Y¹ F und Y² H oder F, vorzugsweise F, bedeuten;
- Das Medium enthält zusätzlich eine oder mehrere Verbindungen der folgenden Formel, 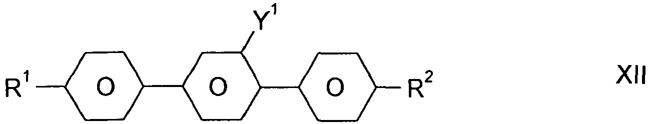 worin R¹ und R² jeweils unabhängig voneinander n-Alkyl, Alkoxy, Oxaalkyl, Fluoralkyl, Alkenyloxy oder Alkenyl mit jeweils bis zu 9 C-Atomen bedeuten, und vorzugsweise jeweils unabhängig voneinander Alkyl mit 1 bis 8 C-Atomen bedeuten. Y¹ bedeutet H oder F.

Bevorzugte Verbindungen der Formel XII sind die Verbindungen der Formel, 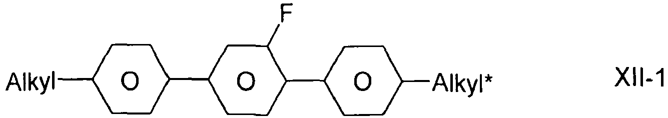 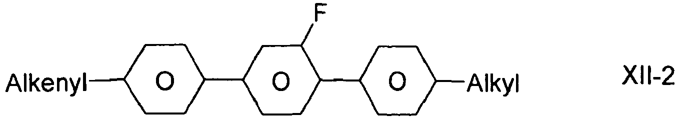 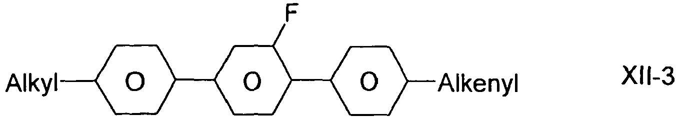 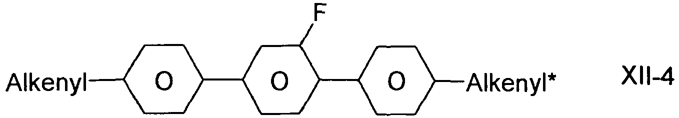 worin
- Alkyl und Alkyl*: jeweils unabhängig voneinander einen geradkettigen Alkylrest mit 1 bis 6 C-Atomen, und
- Alkenyl und Alkenyl*: jeweils unabhängig voneinander einen geradkettigen Alkenylrest mit 2 bis 6 C-Atomen
bedeuten.

Besonders bevorzugt sind die Verbindungen der Formeln XII-1 und XII-3.

Eine besonders bevorzugte Verbindung der Formel XII-3 ist die Verbindung der Formel XII-3a:

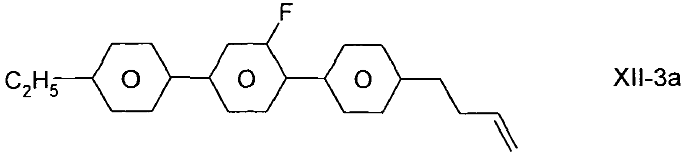

Die Verbindungen der Formel XII werden vorzugsweise in Mengen von 3 - 30 Gew.% eingesetzt.
- Das Medium enthält zusätzlich eine oder mehrere Verbindungen ausgewählt aus folgenden Formeln, 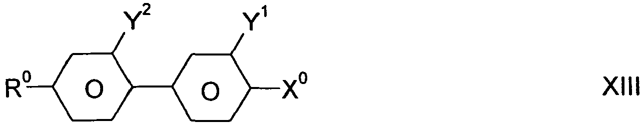 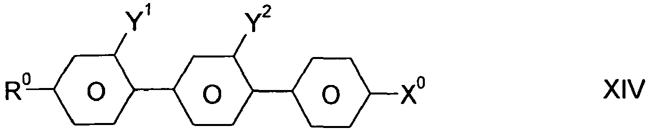 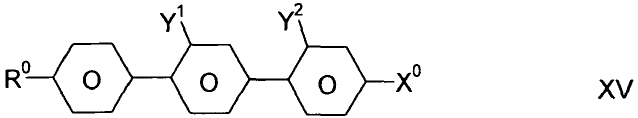 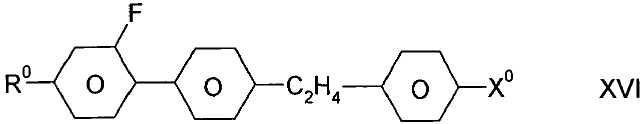 worin R⁰, X⁰, Y¹ und Y² die oben angegebenen Bedeutungen haben. Vorzugsweise bedeutet R⁰ Alkyl mit 1 bis 8 C-Atomen und X⁰ F oder Cl;
- Die Verbindungen der Formeln XIII und XIV sind vorzugsweise ausgewählt aus den Verbindungen der Formeln, 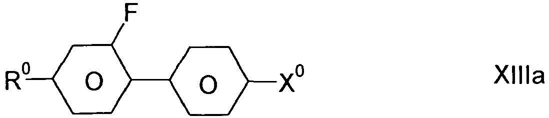 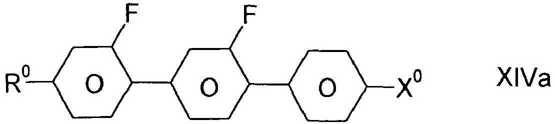 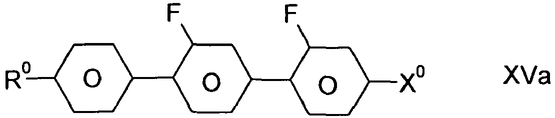 worin R⁰ und X⁰ die oben angegebenen Bedeutungen haben. Vorzugsweise bedeutet R⁰ Alkyl mit 1 bis 8 C-Atomen. In den Verbindungen der Formel XIII bedeutet X⁰ vorzugsweise F oder Cl.
- Das Medium enthält zusätzlich eine oder mehrere Verbindungen der Formeln D1, D2 und/oder D3 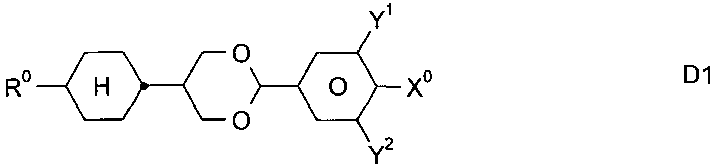 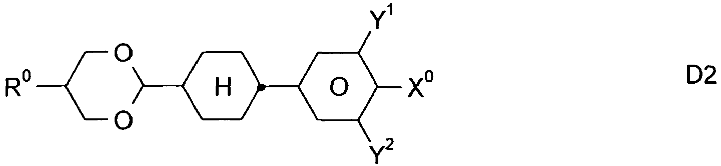 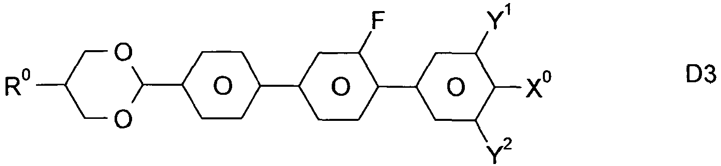 worin Y¹, Y², R⁰ und X⁰ die oben angegebene Bedeutung besitzen. Vorzugsweise bedeutet R⁰ Alkyl mit 1 bis 8 C-Atomen und X⁰ F.

Besonders bevorzugt sind Verbindungen der Formeln, 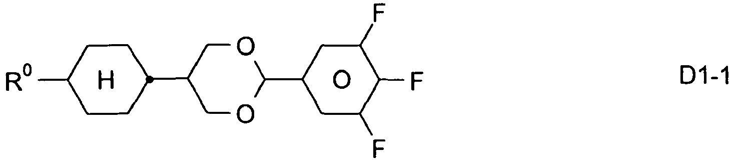 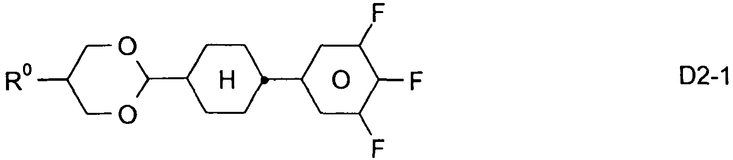 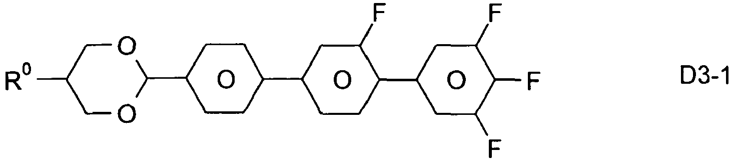 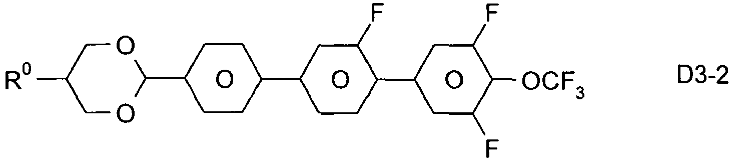 worin R⁰ die oben angegebenen Bedeutungen hat und vorzugsweise geradkettiges Alkyl mit 1 bis 6 C-Atomen, insbesondere C₂H₅, n-C₃H₇ oder n-C₅H₁₁ bedeutet.
- Das Medium enthält zusätzlich eine oder mehrere Verbindungen der folgenden Formel, 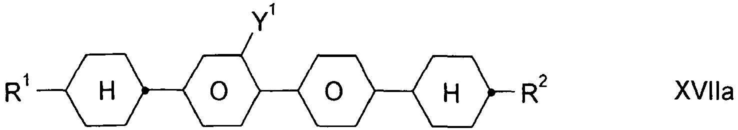 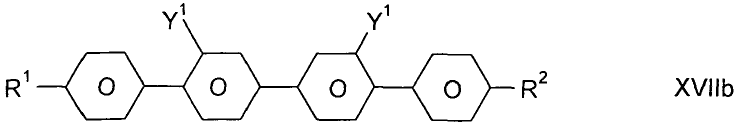 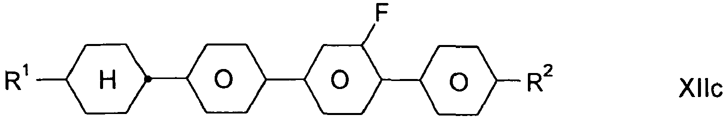 worin Y¹, R¹ und R² die oben angegebenen Bedeutungen besitzen. R¹ und R² bedeuten vorzugsweise jeweils unabhängig voneinander Alkyl mit 1 bis 8 C-Atomen; Y¹ bedeutet vorzugsweise F;
- Das Medium enthält zusätzlich eine oder mehrere Verbindungen der folgenden Formel, 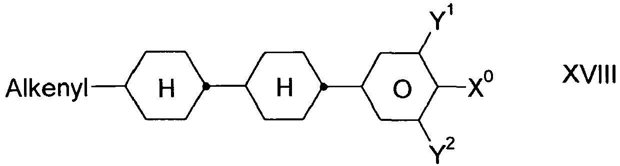 worin X⁰, Y¹ und Y² die oben angegebenen Bedeutungen besitzen und "Alkenyl" C₂₋₇-Alkenyl bedeutet. Besonders bevorzugt sind Verbindungen der folgenden Formel, 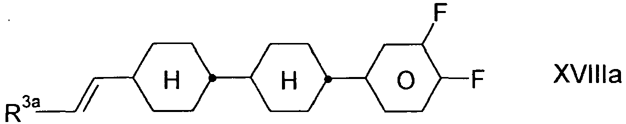 worin R^{3a} die oben angegebene Bedeutung hat und vorzugsweise H bedeutet;
- Das Medium enthält zusätzlich eine oder mehrere Vierkern-Verbindungen ausgewählt aus den Formeln XIX bis XXVII, 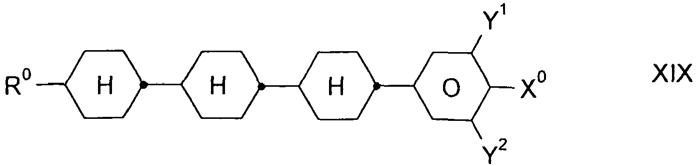 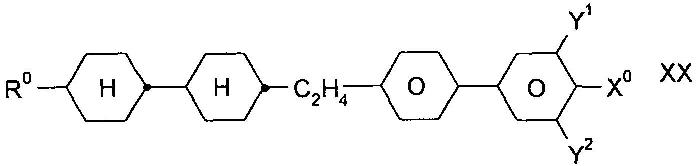 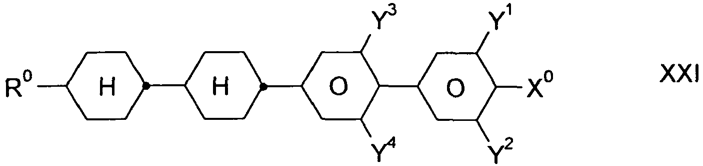 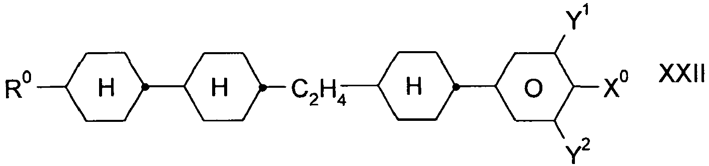 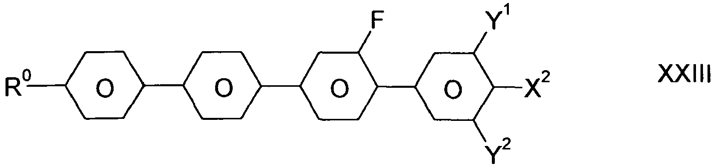 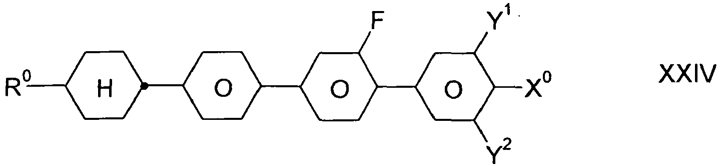 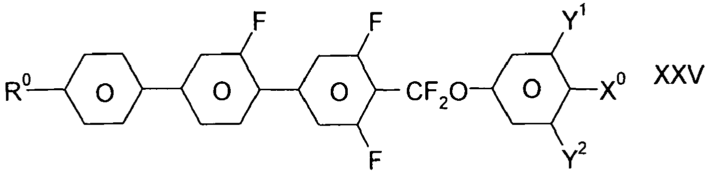 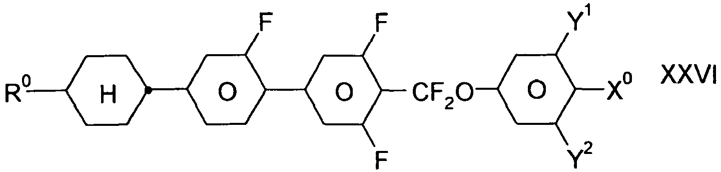 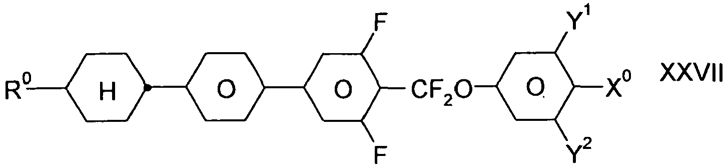 worin Y¹⁻⁴, R⁰ und X⁰ jeweils unabhängig voneinander eine der oben angegebenen Bedeutungen haben. X⁰ ist vorzugsweise F, Cl, CF₃, OCF₃ oder OCHF₂. R⁰ bedeutet vorzugsweise Alkyl, Alkoxy, Oxaalkyl, Fluoralkyl oder Alkenyl mit jeweils bis zu 8 C-Atomen.
- In den vorstehend und nachfolgend genannten Formeln bedeutet 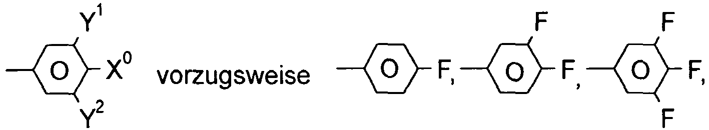 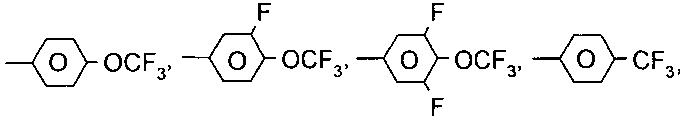 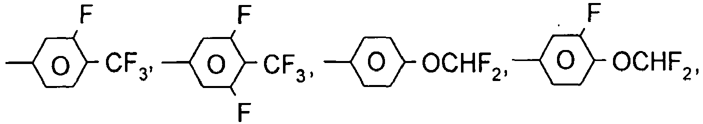 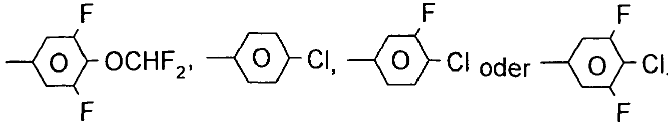
- R⁰ ist vorzugsweise geradkettiges Alkyl oder Alkenyl mit 2 bis 7 C-Atomen;
- X⁰ ist vorzugsweise F, ferner OCF₃, Cl oder CF₃;
- Das Medium enthält vorzugsweise eine, zwei oder drei Verbindungen der Formel I; insbesondere mindestens eine Verbindung der Formel I2.
- Das Medium enthält vorzugsweise eine oder mehrere Verbindungen ausgewählt aus der Gruppe der Verbindungen der Formeln I, II, III, V, VI-1, VI-2, XII, XIII, XIV, XVII, XXIII, XXV.
- Das Medium enthält vorzugsweise eine oder mehrere Verbindungen der Formel VI-1;
- Das Medium enthält vorzugsweise eine oder mehrere Verbindungen der Formel VI-2;
- Das Medium enthält vorzugsweise 0,5-25 Gew.%, bevorzugt 1-20 Gew.%, besonders bevorzugt 1-10 Gew.%, an Verbindungen der Formel I;
- Der Anteil an Verbindungen der Formeln II-XXVII im Gesamtgemisch beträgt vorzugsweise 20 bis 99 Gew.%;
- Das Medium enthält vorzugsweise 25-80 Gew.%, besonders bevorzugt 30-70 Gew.% an Verbindungen der Formel II und/oder III;
- Das Medium enthält vorzugsweise 5-40 Gew.%, besonders bevorzugt 10-30 Gew.% an Verbindungen der Formel V;
- Das Medium enthält vorzugsweise 3-30 Gew.%, besonders bevorzugt 6-25 Gew.% an Verbindungen der Formel VI-1;
- Das Medium enthält vorzugsweise 2-30 Gew.%, besonders bevorzugt 4-25 Gew.% an Verbindungen der Formel VI-2;
- Das Medium enthält 5-40 Gew.%, besonders bevorzugt 10-30 Gew.% an Verbindungen der Formel XII;
- Das Medium enthält vorzugsweise 1-25 Gew.%, besonders bevorzugt 2-15 Gew.% an Verbindungen der Formel XIII;
- Das Medium enthält vorzugsweise 5-45 Gew.%, besonders bevorzugt 10-35 Gew.% an Verbindungen der Formel XIV;
- Das Medium enthält vorzugsweise 1-20 Gew.%, besonders bevorzugt 2-15 Gew.% an Verbindungen der Formel XVI.
- Das Medium enthält zusätzlich eine oder mehrere Verbindungen der Formeln St-1 bis St-3, 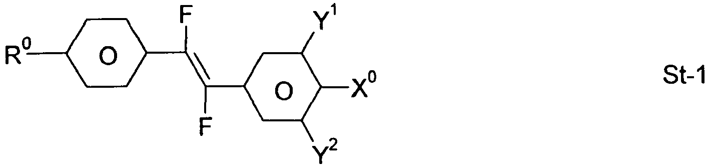 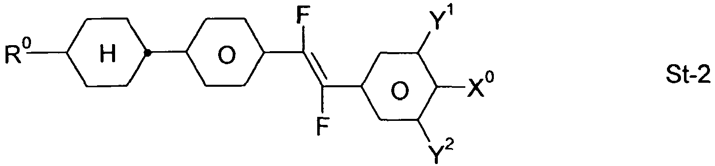 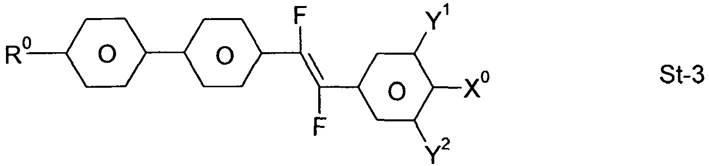 worin R⁰, Y¹, Y² und X⁰ die oben angegebenen Bedeutungen haben. R⁰ bedeutet vorzugsweise geradkettiges Alkyl, vorzugsweise mit 1-6 C-Atomen. X⁰ ist vorzugsweise F oder OCF₃. Y¹ bedeutet vorzugsweise F. Y² bedeutet vorzugsweise F. Weiterhin sind Verbindungen bevorzugt, worin Y¹=F und Y²=H bedeuten. Vorzugsweise werden die Verbindungen der Formeln St-1 bis St-3 in Konzentration von 3 - 30 Gew.% in den erfindungsgemäßen Mischungen eingesetzt, insbesondere von 5 - 25 Gew.%.
- Das Medium enthält zusätzlich eine oder mehrere Pyrimidin- oder Pyridin-Verbindungen den Formeln Py-1 bis Py-5, 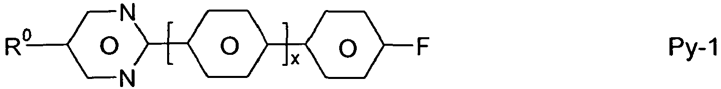 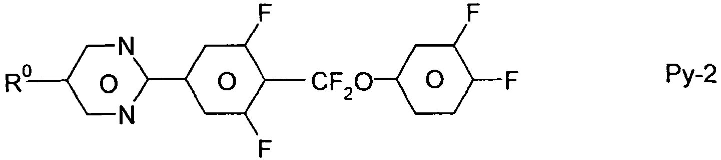 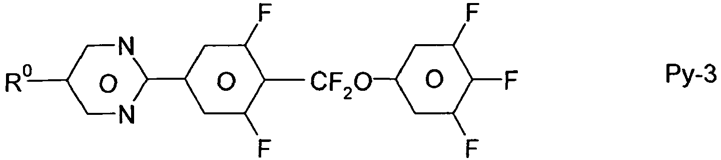 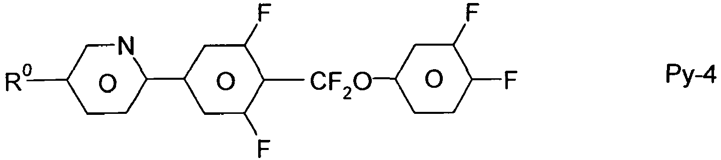 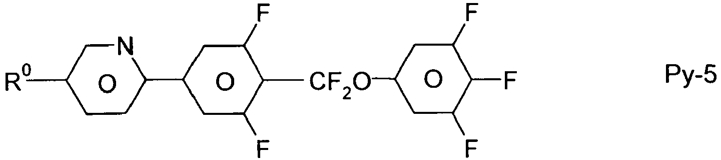
worin R⁰ vorzugsweise geradkettiges Alkyl mit 2-5 C-Atomen ist. x bedeutet 0 oder 1, vorzugsweise ist x=1. Bevorzugte Mischungen enthalten 3 - 30 Gew.%, insbesondere 5 - 20 Gew.% dieser Pyri(mi)din-Verbindung(en).

Es wurde gefunden, dass bereits ein relativ geringer Anteil an Verbindungen der Formel I im Gemisch mit üblichen Flüssigkristallmaterialien, insbesondere jedoch mit einer oder mehreren Verbindungen der Formeln II bis XXVII zu einer beträchtlichen Erhöhung der Lichtstabilität und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Gleichzeitig zeigen die Mischungen sehr niedrige Schwellenspannungen und sehr gute Werte für die VHR bei UV-Belastung.

Der Ausdruck "Alkyl" bzw. "Alkyl*" umfasst in dieser Anmeldung geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-6 Kohlenstoffatomen sind im allgemeinen bevorzugt.

Der Ausdruck "Alkenyl" bzw. "Alkenyl*" umfasst in dieser Anmeldung geradkettige und verzweigte Alkenylgruppen mit 2-7 Kohlenstoffatomen,insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1 E-Propenyl, 1 E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst in dieser Anmeldung geradkettige Gruppen mit mindestens einem Fluoratom, vorzugsweise einem endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" bzw. "Alkoxy" umfasst in dieser Anmeldung geradkettige Reste der Formel CₙH₂ₙ₊₁-O-(CH₂)ₘ, worin n und m jeweils unabhängig voneinander 1 bis 6 bedeuten. m kann auch 0 bedeuten. Vorzugsweise ist n = 1 und m 1-6 oder m = 0 und n = 1-3.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten. Die erfindungsgemäßen Mischungen zeichnen sich insbesondere durch hohe K₁-Werte aus und besitzen somit deutlich schnellere Schaltzeilen als die Mischungen aus dem Stand der Technik.

Das optimale Mengenverhältnis der Verbindungen der oben genannten Formeln hängt weitgehend von den gewünschten Eigenschaften, von der Wahl der Komponenten der oben genannten Formeln und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der oben genannten Formeln in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die gewünschte Verbesserung der Eigenschaften der Mischung ist jedoch in der Regel umso größer je höher die Gesamtkonzentration an Verbindungen der oben genannten Formeln ist.

In einer besonders bevorzugten Ausführungsform enthalten die erfindungsgemäßen Medien Verbindungen der Formel IV bis VIII, worin X⁰ F, OCF₃, OCHF₂, OCH=CF₂, OCF=CF₂ oder OCF₂-CF₂H bedeutet. Eine günstige synergistische Wirkung mit den Verbindungen der Formel I führt zu besonders vorteilhaften Eigenschaften. Insbesondere Mischungen enthaltend Verbindungen der Formeln I und VI, bzw. I und XI, bzw. I und VI und XI zeichnen sich durch ihre niedrigen Schwellenspannungen aus.

Die einzelnen Verbindungen der oben genannten Formeln und deren Unterformeln, die in den erfindungsgemäßen Medien verwendet werden können, sind entweder bekannt, oder sie können analog zu den bekannten Verbindungen hergestellt werden.

Gegenstand der Erfindung sind auch elektrooptische Anzeigen, wie z. B. TN-, STN-, TFT-, OCB-, IPS-, FFS-, positiv VA-, PS-TN, PS-IPS, PS-VA, PS-FFS- oder MFK-Anzeigen, mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Weiterhin sind die erfindungsgemäßen Mischungen auch für positiv-VA-Anwendungen geeignet, auch HT-VA-Anwendungen genannt. Hierunter versteht man elektrooptische Anzeigen mit einer In-plane Ansteuerelektroden-Konfiguration und homeotroper Anordnung des Flüssigkristallmediums mit positiver dielektrischer Anisotropie.

Insbesondere bevorzugt sind die erfindungsgemäßen Mischungen für TN-TFT-Display-Anwendungen mit kleiner Operationsspannung, d.h. besonders bevorzugt für Notebook-Anwendungen.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und hoher optischer Anisotropie übertreffen bei weitem bisherige Materialien aus dem Stand der Technik.

Die erfindungsgemäßen Mischungen sind insbesondere für mobile Anwendungen und high-Δn-TFT-Anwendungen wie z. B. PDAs, Notebooks, LCD-TV und Monitore geeignet.

Die erfindungsgemäßen Flüssigkristallmischungen ermöglichen es, bei Beibehaltung der nematischen Phase bis -20 °C und bevorzugt bis -30 °C, besonders bevorzugt bis -40 °C, und des Klärpunkts ≥ 70 °C, vorzugsweise ≥ 75 °C, gleichzeitig Rotationsviskositäten γ₁ von ≤ 120 mPa·s, besonders bevorzugt 100 mPa·s zu erreichen, wodurch hervorragende MFK-Anzeigen mit schnellen Schaltzeiten erzielt werden können.

Die dielektrische Anisotropie der erfindungsgemäßen Flüssigkristallmischungen Δε ist vorzugsweise ≥ +8, besonders bevorzugt ≥ +12. Die Mischungen sind außerdem durch kleine Operationsspannungen gekennzeichnet. Die Schwellenspannung der erfindungsgemäßen Flüssigkristallmischungen ist vorzugsweise ≤ 1,5 V, insbesondere 1,2 V.

Die Doppelbrechung Δn der erfindungsgemäßen Flüssigkristallmischungen ist vorzugsweise ≥ 0,08, insbesondere ≥ 0,10 und ganz besonders bevorzugt ≥ 0,11.

Der nematische Phasenbereich der erfindungsgemäßen Flüssigkristallmischungen ist vorzugsweise mindestens 90°, insbesondere mindestens 100° breit. Vorzugsweise erstreckt sich dieser Bereich mindestens von -25 °C bis +70 °C.

Sofern die erfindungsgemäßen Mischungen in FFS-Anwendungen zum Einsatz kommen, besitzen die Mischungen vorzugsweise einen Wert für die dielektrische Anisotropie von 3-12 und einen Wert für die optische Anisotropie von 0,07-0,13.

Es versteht sich, dass durch geeignete Wahl der Komponenten der erfindungsgemäßen Mischungen auch höhere Klärpunkte (z.B. oberhalb 100 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise, beispielsweise indem man eine oder mehrere Verbindungen der Formel I mit einer oder mehreren Verbindungen der Formeln II-XXVII oder mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. UV-Stabilisatoren wie Tinuvin^{®} der Fa. Ciba Chemicals, Antioxidantien, Radikalfänger, Nanopartikel, etc. enthalten. Beispielsweise können 0-15 % pleochroitische Farbstoffe oder chirale Dotierstoffe zugesetzt werden. Geeignete Stabilisatoren und Dotierstoffe werden nachfolgend in den Tabellen C und D genannt.

Den erfindungsgemäßen Mischungen können weiterhin polymerisierbare Verbindungen, sogenannte reaktive Mesogene (RMs), beispielsweise wie in U.S. 6,861,107 offenbart, in Konzentrationen von bevorzugt 0,12 - 5 Gew.%, besonders bevorzugt 0,2 - 2 % bezogen auf die Mischung, zugesetzt werden. Optional können diese Mischungen auch einen Initiator enthalten, wie beispielsweise in der U.S 6,781,665 beschrieben. Der Initiator, z.B. Irganox-1076 der Fa. Ciba, wird vorzugsweise der Mischung enthaltend polymerisierbare Verbindungen in Mengen von 0-1 % zugesetzt. Derartige Mischungen können für sogenannte Polymer Stabilized VA-Modes (PS-VA) oder PSA (Polymer sustained VA), bei denen eine Polymerisierung der reaktiven Mesogene in der flüssigkristallinen Mischung erfolgen soll, verwendet werden. Voraussetzung hierfür ist, dass die Flüssigkristallmischung selbst keine polymerisierbaren Komponenten enthält.

In einer bevorzugten Ausführungsform der Erfindung sind die polymerisierbaren Verbindungen ausgewählt aus den Verbindungen der Formel M

R^{Ma}-A^{M1}-(Z^{M1}-A^{M2})ₘ₁-R^{Mb} M

worin die einzelnen Reste folgende Bedeutung haben:
- R^{Ma} und R^{Mb}: jeweils unabhängig voneinander P, P-Sp-, H, Halogen, SF₅, NO₂, eine Alkyl-, Alkenyl- oder Alkinylgruppe, wobei bevorzugt mindestens einer der Reste R^{Ma} und R^{Mb} eine Gruppe P oder P-Sp- bedeutet oder enthält,
- P: eine polymerisierbare Gruppe,
- Sp: eine Abstandsgruppe oder eine Einfachbindung,
- A^{M1} und A^{M2}: jeweils unabhängig voneinander eine aromatische, heteroaromatische, alicyclische oder heterocyclische Gruppe, vorzugsweise mit 4 bis 25 Ringatomen, bevorzugt C-Atomen, welche auch anellierte Ringe umfasst oder enthalten kann, und die optional ein- oder mehrfach durch L substitutiert sein kann,
- L: P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können, bevorzugt P, P-Sp-, H, OH, CH₂OH, Halogen, SF₅, NO₂, eine Alkyl-, Alkenyl- oder Alkinylgruppe,
- Y¹: Halogen,
- Z^{M1}: -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-, -COO-, -OCO-CH=CH-, CR⁰R⁰⁰ oder eine Einfachbindung,
- R⁰ und R⁰⁰: jeweils unabhängig voneinander H oder Alkyl mit 1 bis 12 C-Atomen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
- m1: 0, 1, 2, 3 oder 4 und
- n1: 1, 2, 3 oder 4,
wobei mindestens einer, bevorzugt einer, zwei oder drei, besonders bevorzugt einer oder zwei, aus der Gruppe R^{Ma}, R^{Mb} und der vorhandenen Substituenten L eine Gruppe P oder P-Sp- bedeutet oder mindestens eine Gruppe P oder P-Sp- enthält.

Besonders bevorzugte Verbindungen der Formel M sind solche, worin
- R^{Ma} und R^{Mb}: jeweils unabhängig voneinander P, P-Sp-, H, F, Cl, Br, I, -CN, -NO₂, -NCO, -NCS, -OCN, -SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch -C(R⁰)=C(R⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN, P oder P-Sp- ersetzt sein können, wobei bevorzugt mindestens einer der Reste R^{Ma} und R^{Mb} eine Gruppe P oder P-Sp- bedeutet oder enthält,
- A^{M1} und A^{M2}: jeweils unabhängig voneinander 1,4-Phenylen, Naphthalin-1,4-diyl, Naphthalin-2,6-diyl, Phenanthren-2,7-diyl, Anthracen-2,7-diyl, Fluoren-2,7-diyl, Cumarin, Flavon, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
- L: P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können,
- P: eine polymerisierbare Gruppe,
- Y¹: Halogen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

Ganz besonders bevorzugt sind Verbindungen der Formel M, worin einer von R^{Ma} und R^{Mb} oder beide P oder P-Sp- bedeuten.

Geeignete und bevorzugte polymerisierbare Verbindungen für die Verwendung in erfindungsgemäßen Anzeigen sind beispielsweise ausgewählt aus den folgenden Formeln: 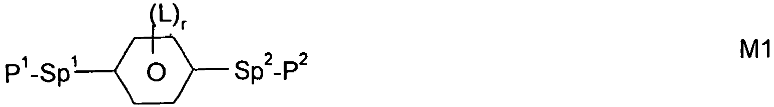 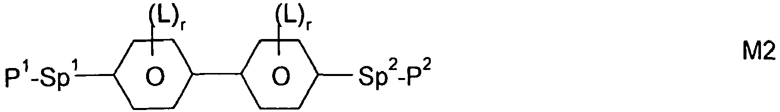 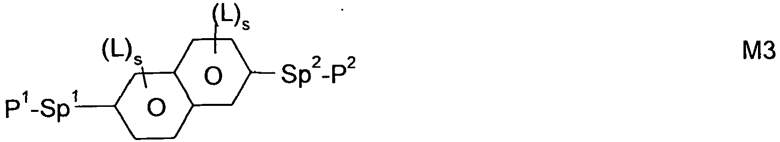 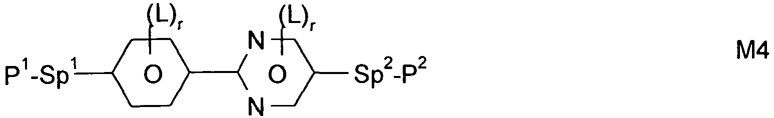 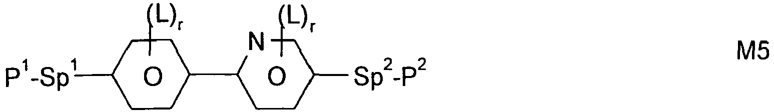 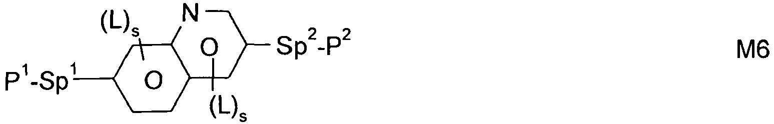 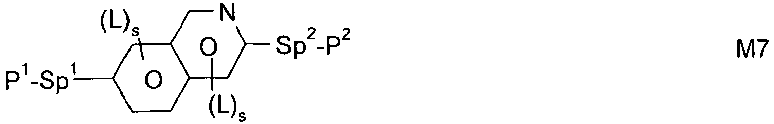 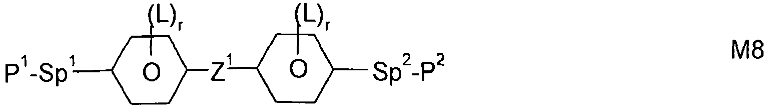 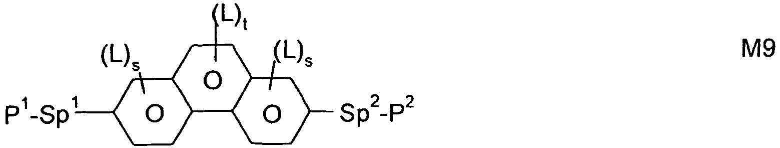 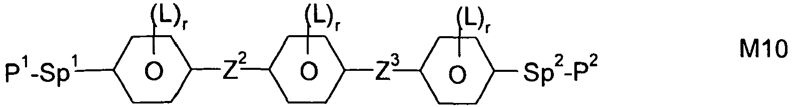 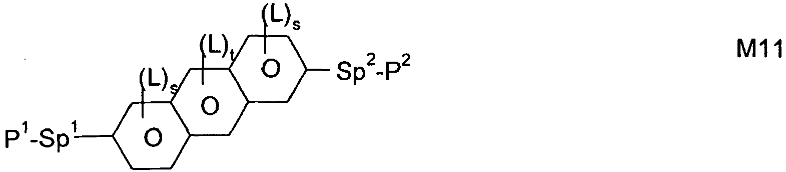 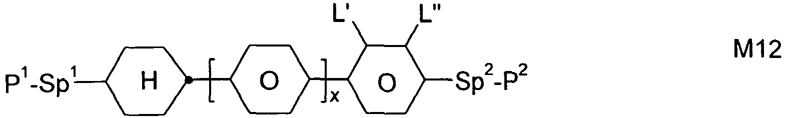 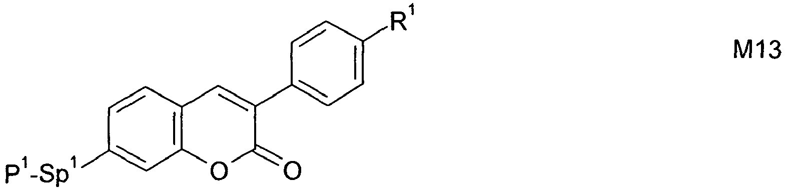 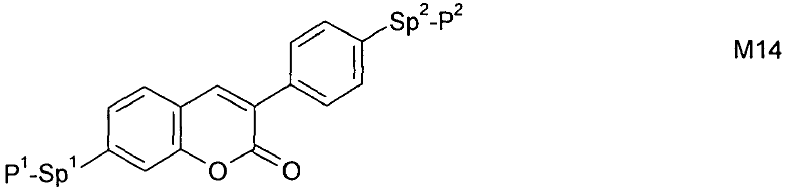 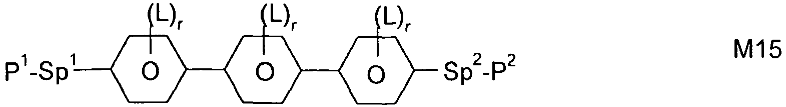 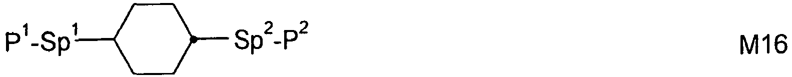 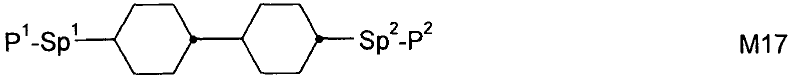 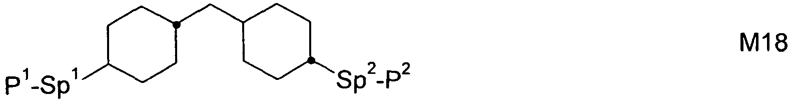 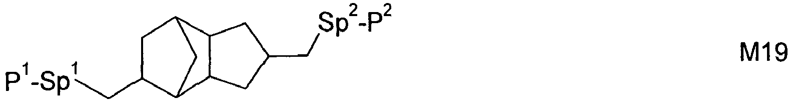 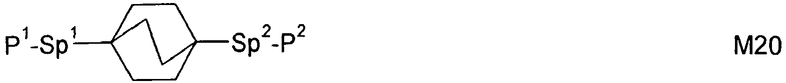 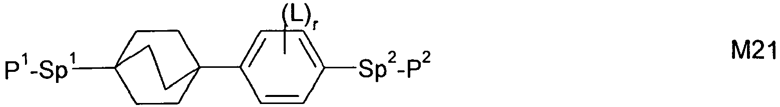 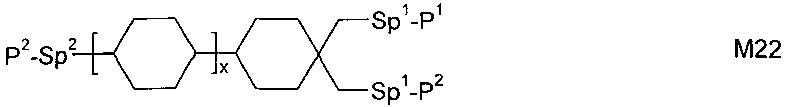 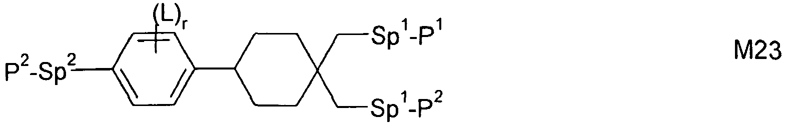 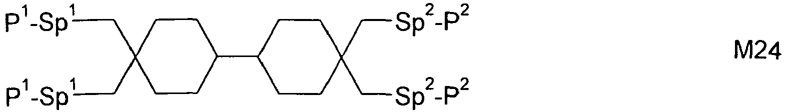 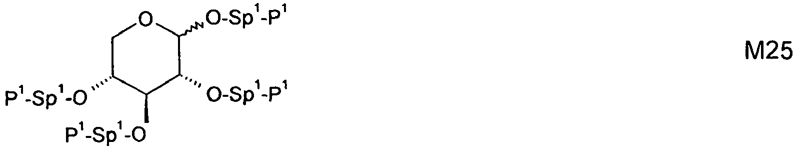 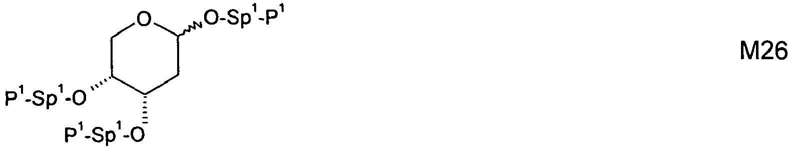 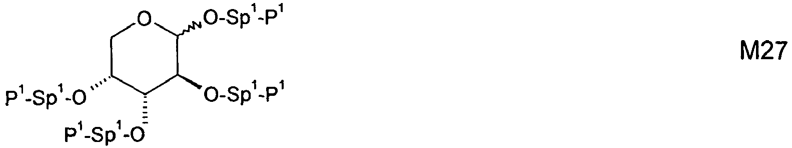 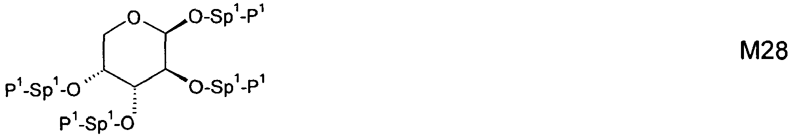 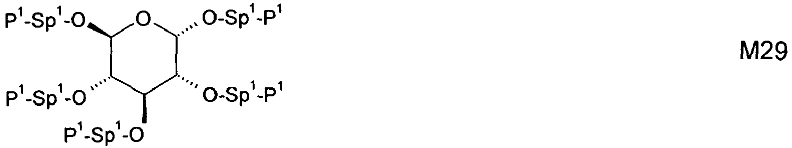 worin die einzelnen Reste folgende Bedeutung besitzen:
- P¹ und P²: jeweils unabhängig voneinander eine polymerisierbare Gruppe, vorzugsweise mit einer der vor- und nachstehend für P angegebenen Bedeutungen, besonders bevorzugt eine Acrylat-, Methacrylat-, Fluoracrylat-, Oxetan-, Vinyloxy- oder Epoxygruppe,
- Sp1 und: Sp² jeweils unabhängig voneinander eine Einfachbindung oder eine Abstandsgruppe, vorzugsweise mit einer der vor- und nachstehend für Sp^{a} angegebenen Bedeutungen, und besonders bevorzugt -(CH₂)ₚ₁-, -(CH₂)ₚ₁-O-, -(CH₂)ₚ₁-CO-O-oder -(CH₂)ₚ₁-O-CO-O-, worin p1 eine ganze Zahl von 1 bis 12 ist, und wobei in den letztgenannten Gruppen die Verknüpfung zur benachbarten Ring über das O-Atom erfolgt, wobei auch einer oder mehrere der Reste P¹-Sp¹- und P²-Sp²- einen Rest R^{aa} bedeuten können, mit der Maßgabe dass mindestens einer der vorhandenen Reste P¹-Sp¹- und P²-Sp²- nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -N(R⁰)-, -O-, -S-, -CO-, -CO-O-,-O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹-ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl- und Alkinylreste mindestens zwei und die verzweigten Reste mindestens drei C-Atome aufweisen),
- R⁰, R⁰⁰: jeweils unabhängig voneinander und bei jedem Auftreten gleich oder verschieden H oder Alkyl mit 1 bis 12 C-Atomen,
- R^{y} und R^{z}: jeweils unabhängig voneinander H, F, CH₃ oder CF₃,
- Z¹: -O-, -CO-, -C(R^{y}R^{z})-,oder -CF₂CF₂-,
- Z² und Z³: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
- L: bei jedem Auftreten gleich oder verschieden F, Cl, CN, SCN, SF₅ oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen vorzugsweise F,
- L' und L": jeweils unabhängig voneinander H, F oder Cl,
- r: 0, 1, 2, 3 oder 4,
- s: 0, 1, 2 oder 3,
- t: 0, 1 oder 2,
- x: 0 oder 1.

Geeignete polymerisierbare Verbindungen sind beispielsweise in Tabelle E gelistet.

Bevorzugt enthalten die flüssigkristallinen Medien gemäß der vorliegenden Anmeldung insgesamt 0,01 bis 10 %, bevorzugt 0,2 bis 4,0 %, besonders bevorzugt 0,2 bis 2,0 %, an polymerisierbaren Verbindungen.

Insbesondere bevorzugt sind die polymerisierbaren Verbindungen der Formel M.

In der vorliegenden Anmeldung und in den folgenden Beispielen sind die Strukturen der Flüssigkristallverbindungen durch Acronyme angegeben, wobei die Transformation in chemische Formeln gemäß Tabelle A erfolgt. Alle Reste CₙH₂ₙ₊₁ und CₘH₂ₘ₊₁ sind geradkettige Alkylreste mit n bzw. m C-Atomen; n, m und k sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Acronym für den Grundkörper angegeben. Im Einzelfall folgt getrennt von Acronym für den Grundkörper mit einem Strick ein Code für die Substituenten R^{1*}, R^{2*}, L^{1*} und L^{2*}:

| Code für R^{1*}, R^{2*}, L^{1*}, L^{2*}, L^{3*} | R¹ | R^{2.} | L^{1*} | L^{2*} |
|---|---|---|---|---|
| nm | CₙH₂ₙ₊₁ | CₘH₂ₘ₊₁ | H | H |
| nOm | OCₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

**Tabelle A**

| | |
|---|---|
| 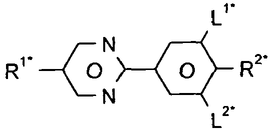 | 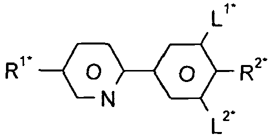 |
| **PYP** | **PYRP** |
| 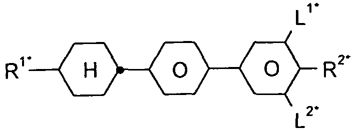 | 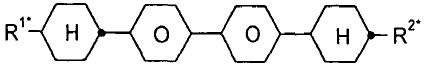 |
| **BCH** | **CBC** |
| 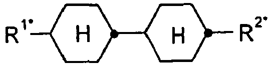 | 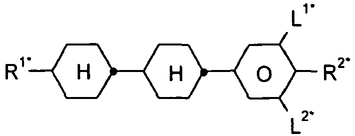 |
| **CCH** | **CCP** |
| 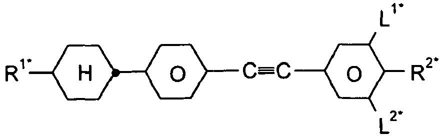 | 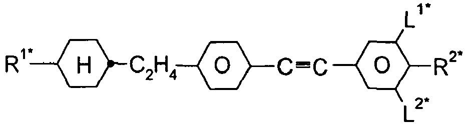 |
| **CPTP** | **CEPTP** |
| 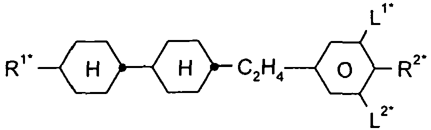 | 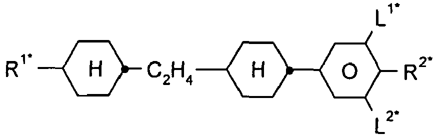 |
| **ECCP** | **CECP** |
| 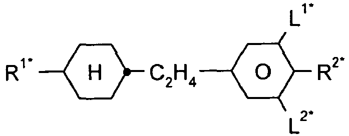 | 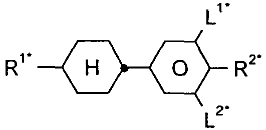 |
| **EPCH** | **PCH** |
| 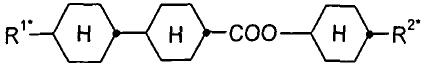 | |
| **CH** | |
| 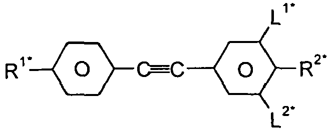 | 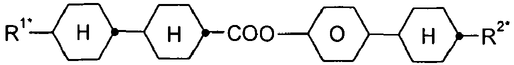 |
| **PTP** | **CCPC** |
| 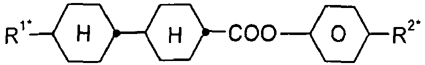 | 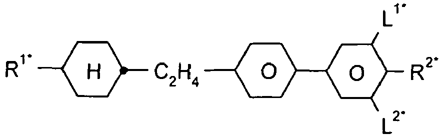 |
| **CP** | **BECH** |
| 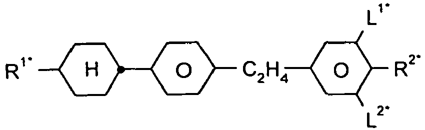 | 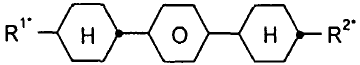 |
| **EBCH** | **CPC** |
| 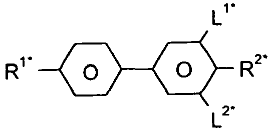 | 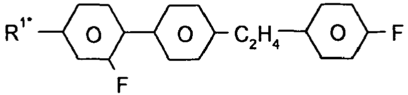 |
| **B** | **FET-nF** |
| 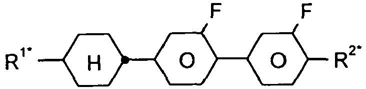 | 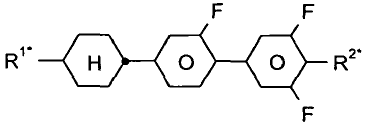 |
| **CGG** | **CGU** |
| 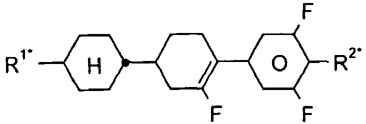 | |
| **CFU** | |

**Tabelle B**

| | |
|---|---|
| 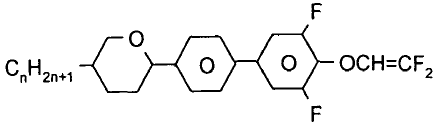 | |
| **APU-n-OXF** | |
| 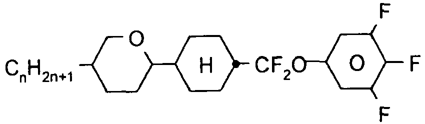 | |
| **ACQU-n-F** | |
| 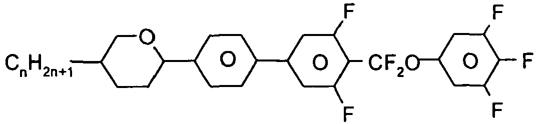 | |
| **APUQU-n-F** | |
| 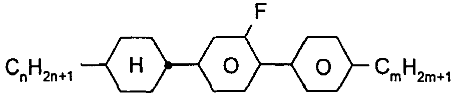 | 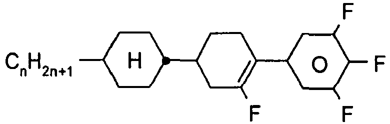 |
| **BCH-n.Fm** | **CFU-n-F** |
| 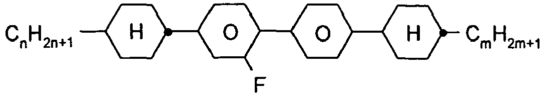 | |
| **CBC-nmF** | |
| 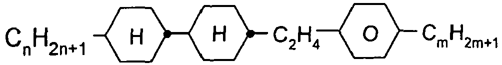 | 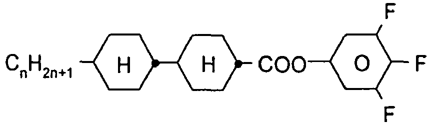 |
| **ECCP-nm** | **CCZU-n-F** |
| 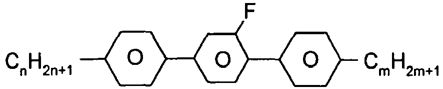 | 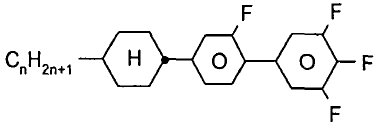 |
| **PGP-n-m** | **CGU-n-F** |
| 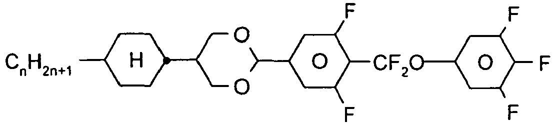 | |
| **CDUQU-n-F** | |
| 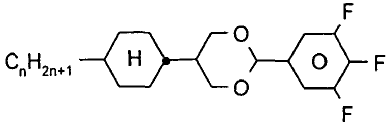 | 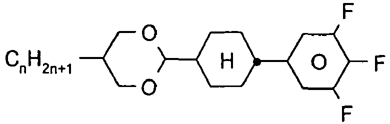 |
| **CDU-n-F** | **DCU-n-F** |
| 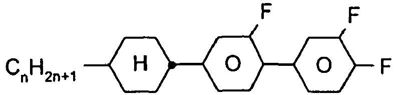 | 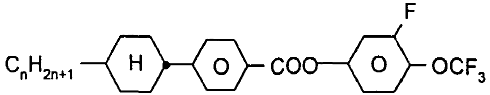 |
| **CGG-n-F** | **CPZG-n-OT** |
| 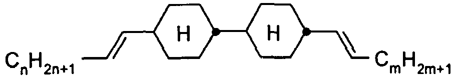 | |
| **CC-nV-Vm** | |
| 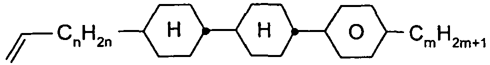 | 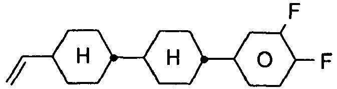 |
| **CCP-Vn-m** | **CCG-V-F** |
| 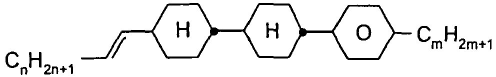 | 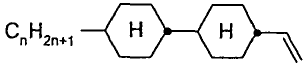 |
| **CCP-nV-m** | **CC-n-V** |
| 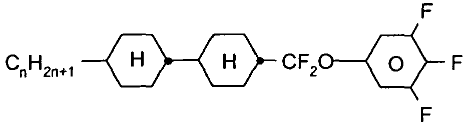 | 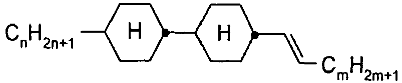 |
| **CCQU-nF** | **CC-n-Vm** |
| 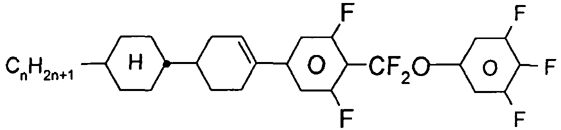 | |
| **CLUQU-n-F** | |
| 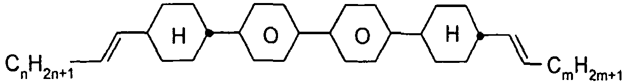 | |
| **CPPC-nV-Vm** | |
| 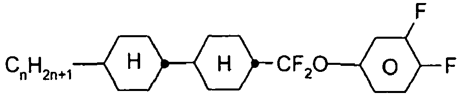 | 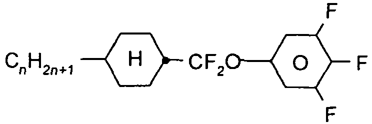 |
| **CCQG-n-F** | **CQU-n-F** |
| 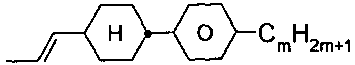 | 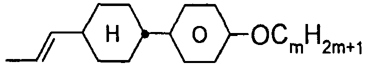 |
| **CP-1V-m** | **CP-1V-Om** |
| 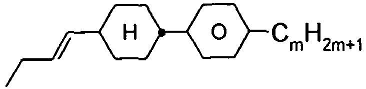 | 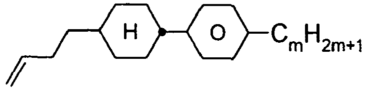 |
| **CP-2V-m** | **CP-V2-m** |
| 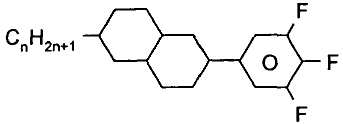 | 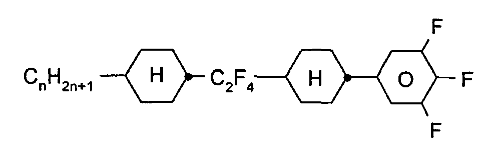 |
| **Dec-U-n-F** | **CWCU-n-F** |
| 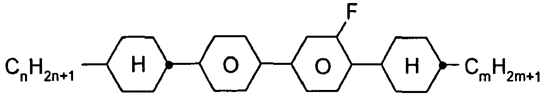 | |
| **CPGP-n-m** | |
| 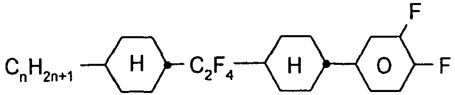 | |
| **CWCG-n-F** | |
| 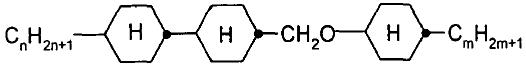 | |
| **CCOC-n-m** | |
| 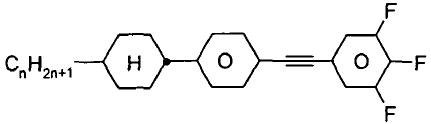 | 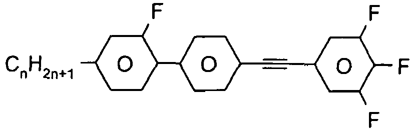 |
| **CPTU-n-F** | **GPTU-n-F** |
| 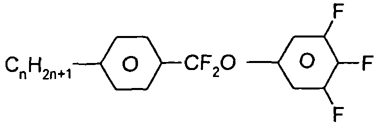 | 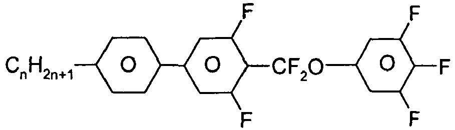 |
| **PQU-n-F** | **PUQU-n-F** |
| 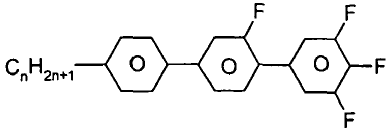 | 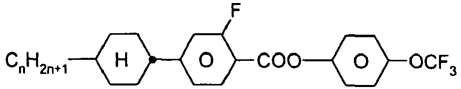 |
| **PGU-n-F** | **CGZP-n-OT** |
| 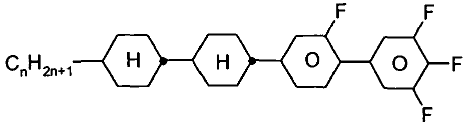 | 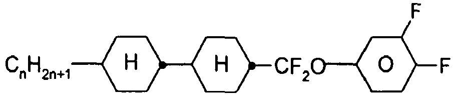 |
| **CCGU-n-F** | **CCQG-n-F** |
| 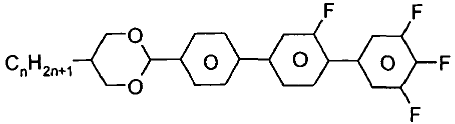 | 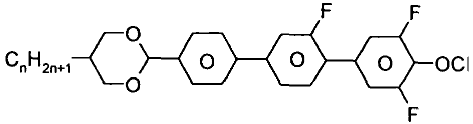 |
| **DPGU-n-F** | **DPGU-n-OT** |
| 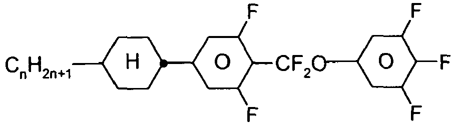 | |
| **CUQU-n-F** | |
| 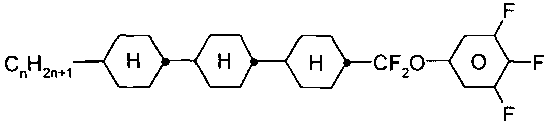 | |
| **CCCQU-n-F** | |
| 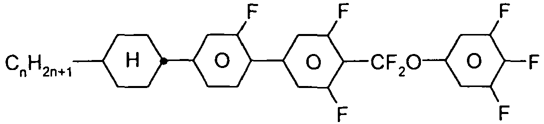 | |
| **CGUQU-n-F** | |
| 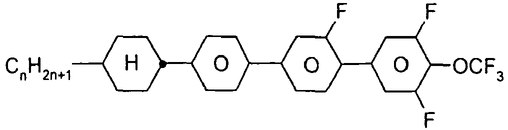 | |
| **CPGU-n-OT** | |
| 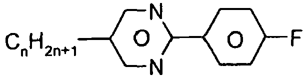 | |
| **PYP-n-F** | |
| 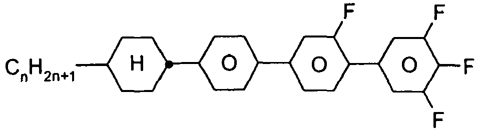 | |
| **CPGU-n-F** | |
| 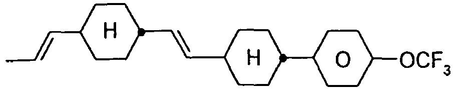 | 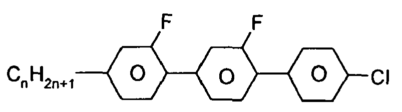 |
| **CVCP-1V-OT** | **GGP-n-Cl** |
| 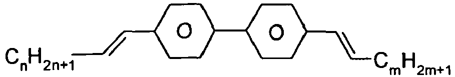 | 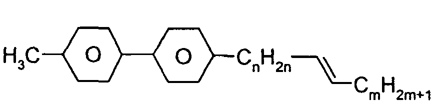 |
| **PP-nV-Vm** | **PP-1-nVm** |
| 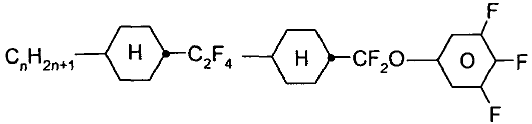 | |
| **CWCQU-n-F** | |
| 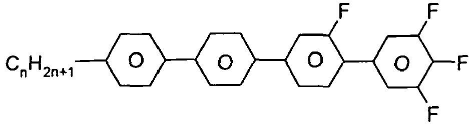 | |
| **PPGU-n-F** | |
| 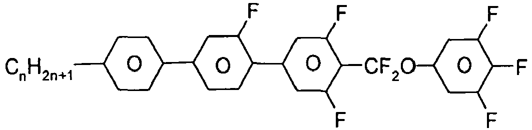 | |
| **PGUQU-n-F** | |
| 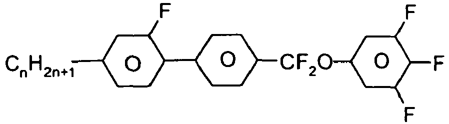 | 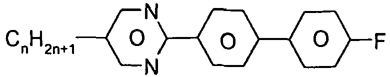 |
| **GPQU-n-F** | **MPP-n-F** |
| 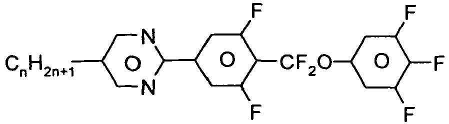 | 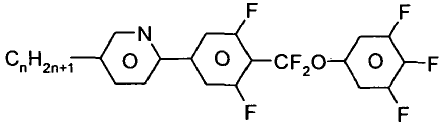 |
| **MUQU-n-F** | **NUQU-n-F** |
| 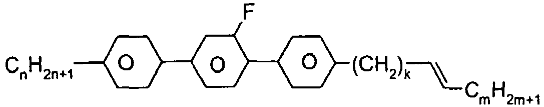 | |
| **PGP-n-kVm** | |
| 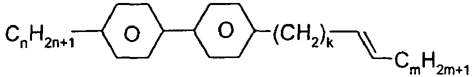 | |
| **PP-n-kVm** | |
| 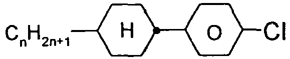 | 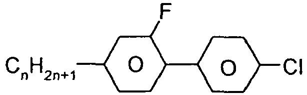 |
| **PCH-nCl** | **GP-n-Cl** |
| 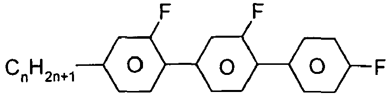 | 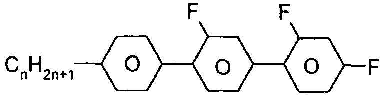 |
| **GGP-n-F** | **PGIGI-n-F** |
| 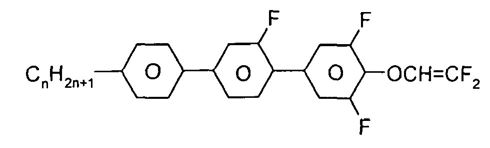 | 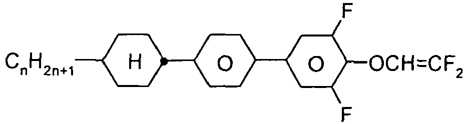 |
| **PGU-n-OXF** | **CPU**-**n**-**OXF** |

Besonders bevorzugt sind flüssigkristalline Mischungen, die neben den Verbindungen der Formeln I mindestens ein, zwei, drei, vier oder mehr Verbindungen aus der Tabelle B enthalten.

**Tabelle C**

| | |
|---|---|
| In der Tabelle C werden mögliche Dotierstoffe angegeben, die in der Regel den erfindungsgemäßen Mischungen zugesetzt werden. Vorzugsweise enthalten die Mischungen 0-10 Gew.%, insbesondere 0,01-5 Gew.% und besonders bevorzugt 0,01-3 Gew.% an Dotierstoffen. | |
| 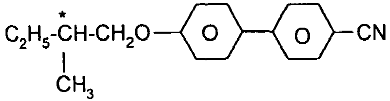 | 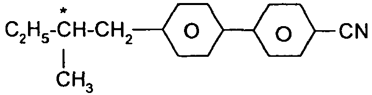 |
| **C15** | **CB 15** |
| 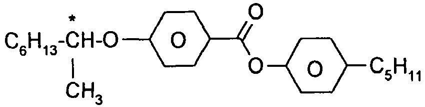 | 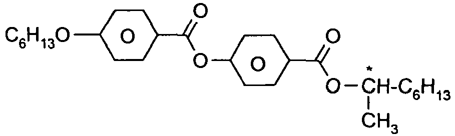 |
| **CM 21** | **R/S-811** |
| 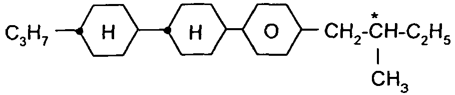 | 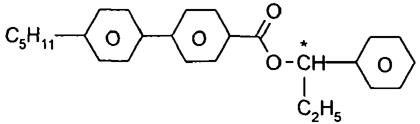 |
| **CM 44** | **CM 45** |
| 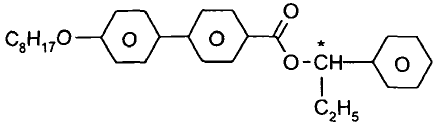 | 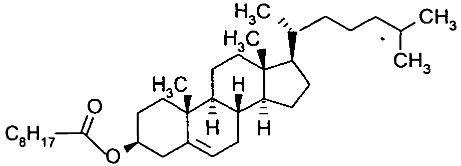 |
| **CM 47** | **CN** |
| 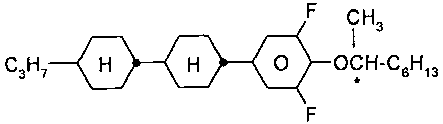 | 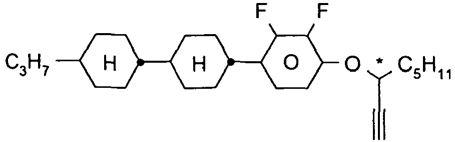 |
| **R**/**S**-**2011** | **R**/**S**-**3011** |
| 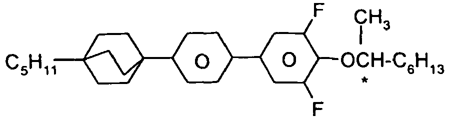 | 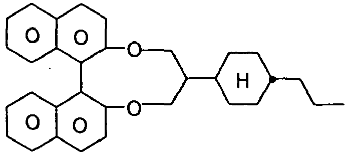 |
| **R/S-4011** | **R/S-5011** |
| 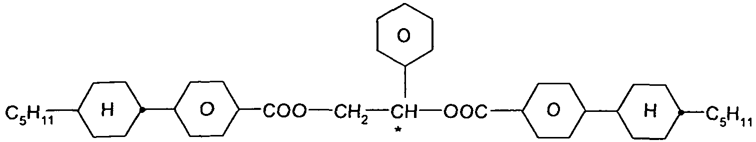 | |
| **R/S-1011** | |

**Tabelle D**

| | |
|---|---|
| Stabilisatoren, die beispielsweise den erfindungsgemäßen Mischungen in Mengen von 0-10 Gew.% zugesetzt werden können, werden nachfolgend genannt. | |
| 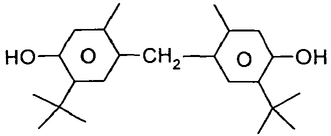 | 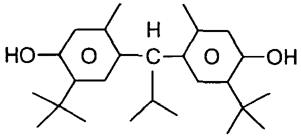 |
| 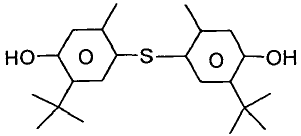 | 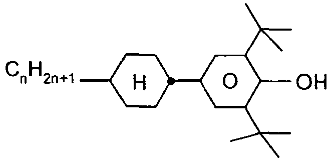 |
| | n = 1, 2, 3, 4, 5, 6 oder 7 |
| 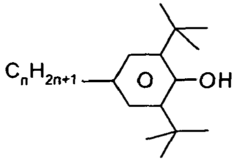 | 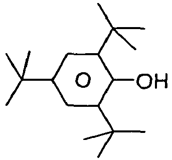 |
| n = 1, 2, 3, 4, 5, 6 oder 7 | |
| 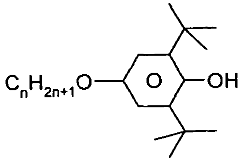 | 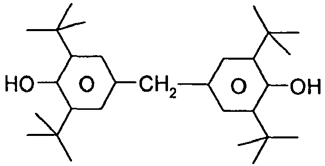 |
| 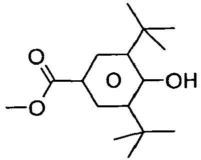 | 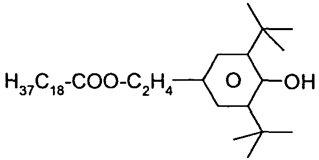 |
| 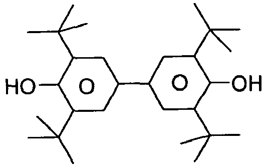 | 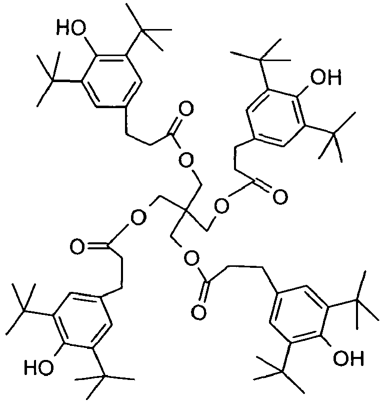 |
| 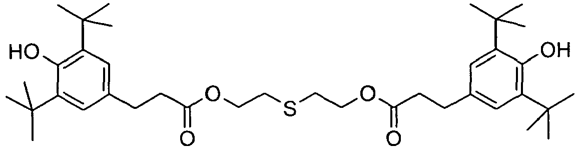 | |
| 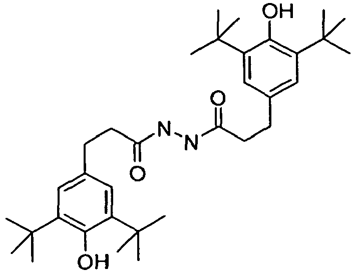 | 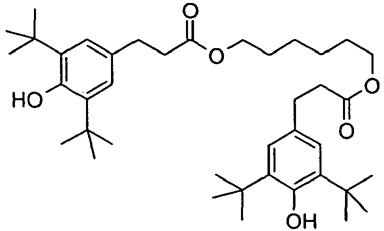 |
| 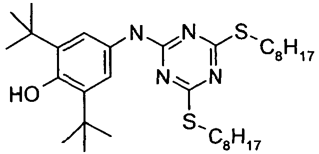 | 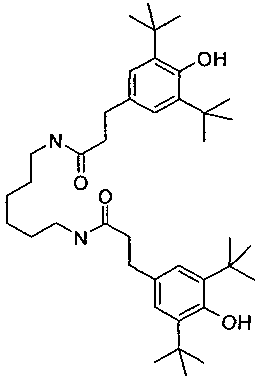 |
| 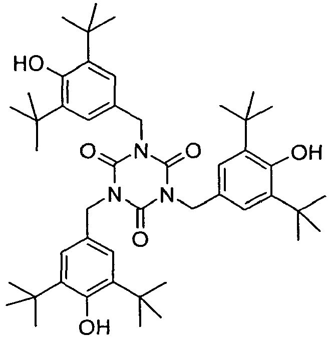 | 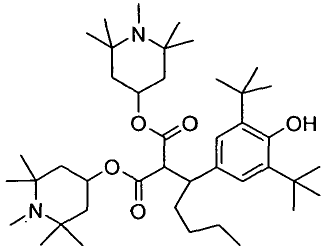 |
| 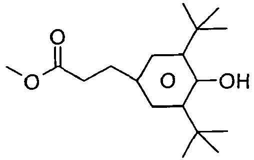 | 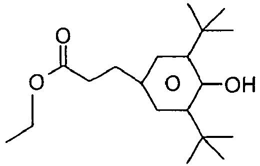 |
| 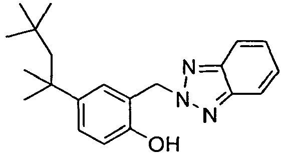 | 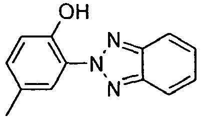 |
| 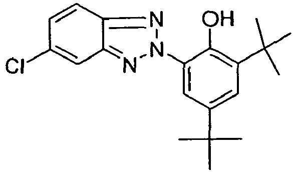 | 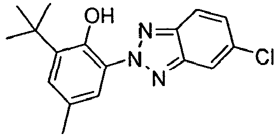 |
| 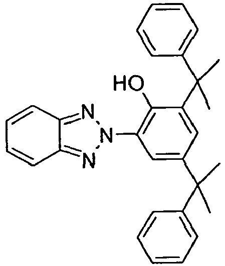 | 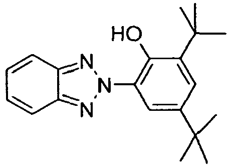 |
| 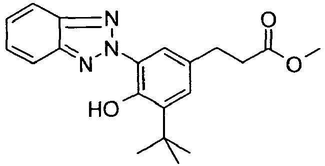 | 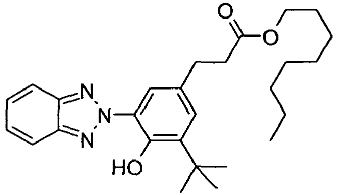 |
| 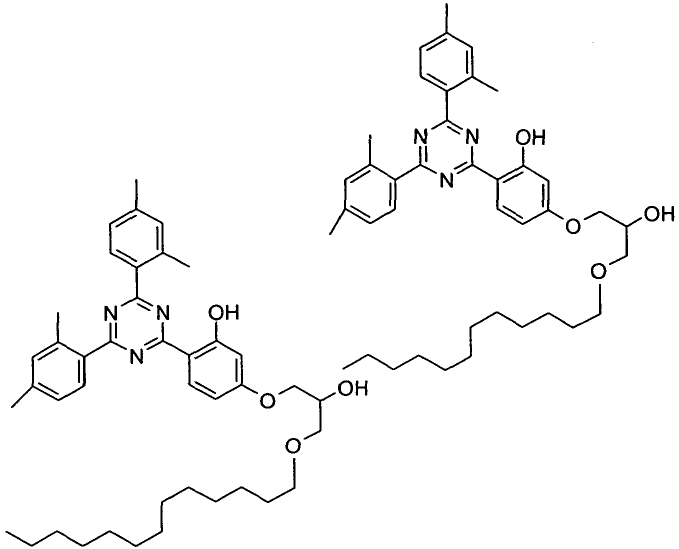 | |
| 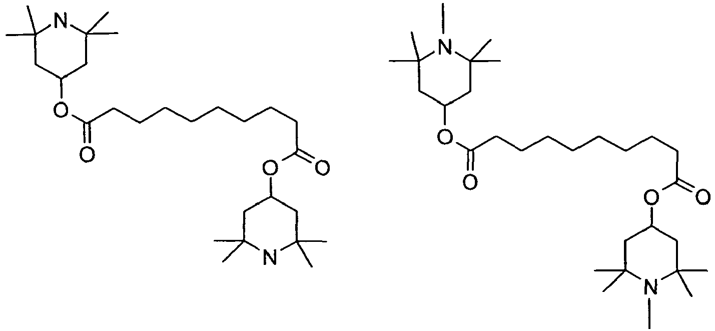 | |

**Tabelle E**

| | |
|---|---|
| Polymerisierbare Verbindungen (reaktive mesogene Verbindungen), die beispielsweise den erfindungsgemäßen Mischungen in Mengen von 0,01-5 Gew.% zugesetzt werden können, werden nachfolgend genannt. Gegebenenfalls muss für die Polymerisation noch ein Initiator zugesetzt werden in Mengen von 0-1 Gew.%. | |
| 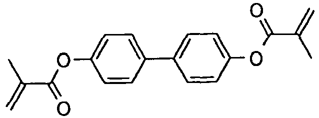 | RM-1 |
| 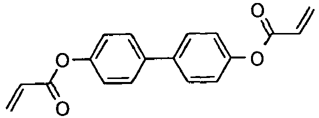 | RM-2 |
| 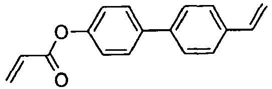 | RM-3 |
| 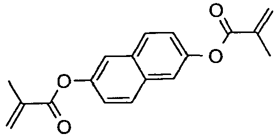 | RM-4 |
| 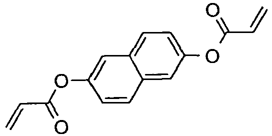 | RM-5 |
| 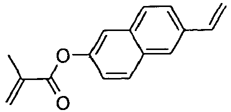 | RM-6 |
| 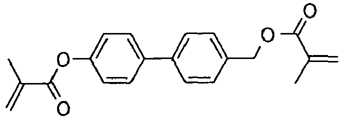 | RM-7 |
| 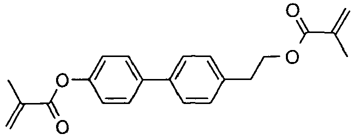 | RM-8 |
| 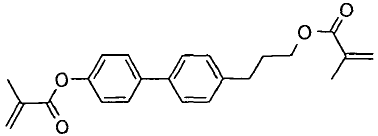 | RM-9 |
| 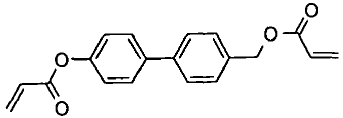 | RM-10 |
| 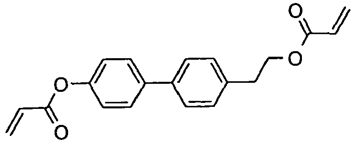 | RM-11 |
| 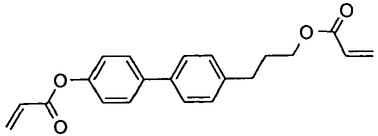 | RM-12 |
| 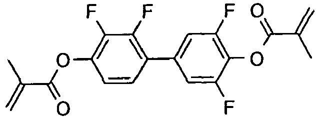 | RM-13 |
| 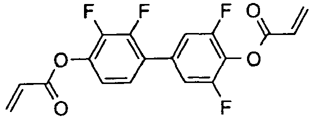 | RM-14 |
| 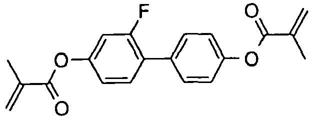 | RM-15 |
| 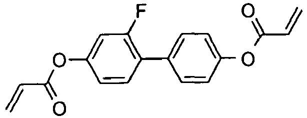 | RM-16 |
| 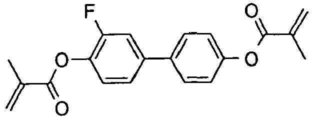 | RM-17 |
| 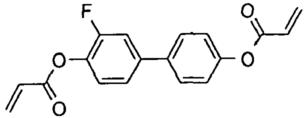 | RM-18 |
| 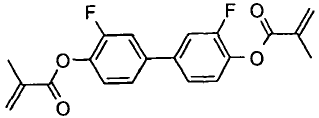 | RM-19 |
| 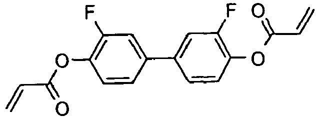 | RM-20 |
| 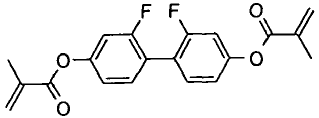 | RM-21 |
| 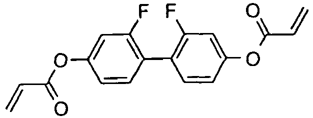 | RM-22 |
| 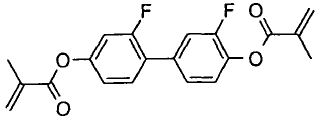 | RM-23 |
| 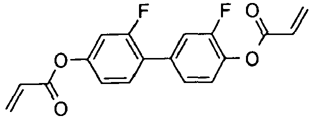 | RM-24 |
| 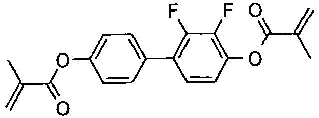 | RM-25 |
| 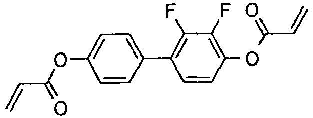 | RM-26 |
| 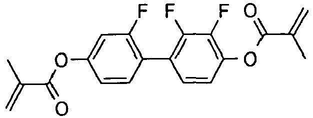 | RM-27 |
| 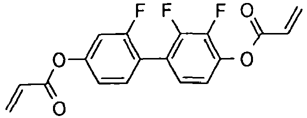 | RM-28 |
| 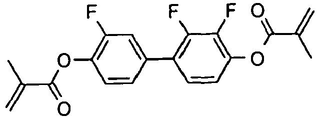 | RM-29 |
| 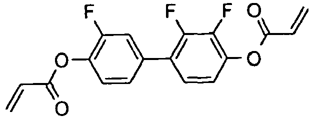 | RM-30 |
| 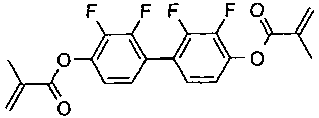 | RM-31 |
| 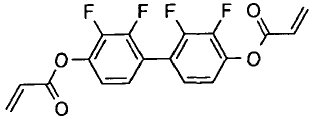 | RM-32 |
| 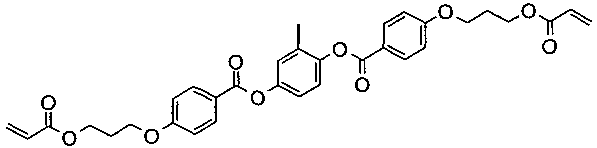 | RM-33 |
| 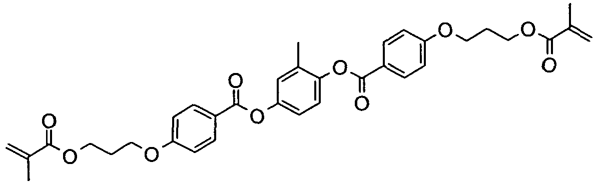 | RM-34 |
| 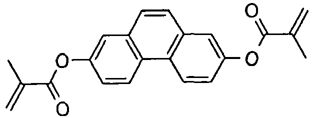 | RM-35 |
| 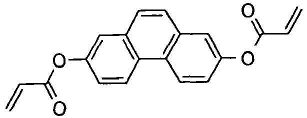 | RM-36 |
| 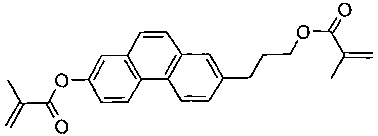 | RM-37 |
| 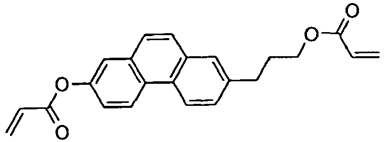 | RM-38 |
| 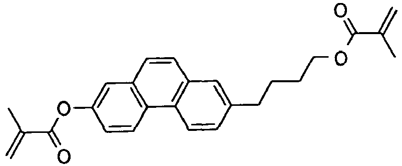 | RM-39 |
| 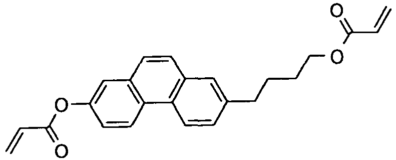 | RM-40 |
| 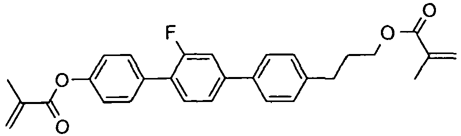 | RM-41 |
| 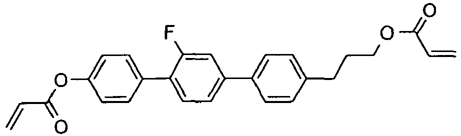 | RM-42 |
| 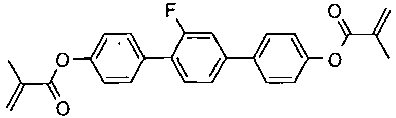 | RM-43 |
| 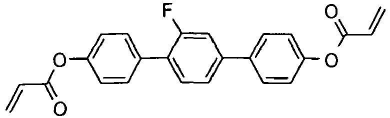 | RM-44 |
| 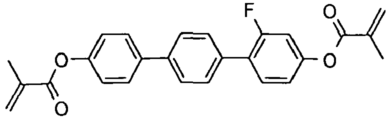 | RM-45 |
| 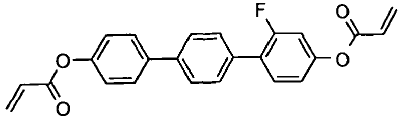 | RM-46 |
| 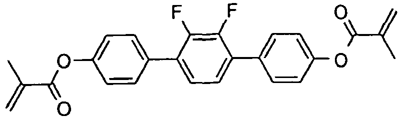 | RM-47 |
| 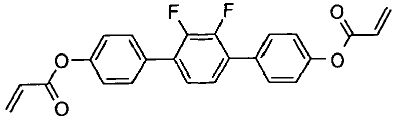 | RM-48 |
| 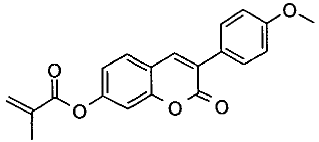 | RM-49 |
| 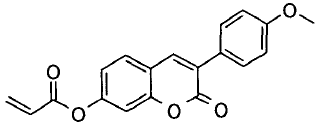 | RM-50 |
| 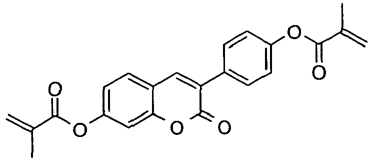 | RM-51 |
| 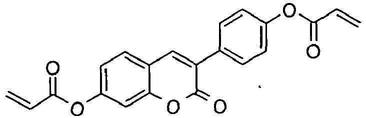 | RM-52 |
| 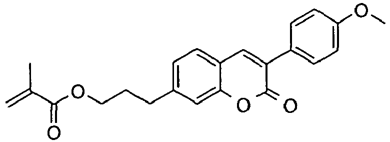 | RM-53 |
| 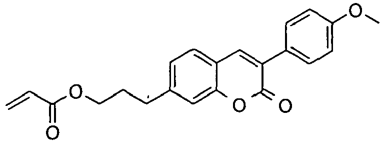 | RM-54 |
| 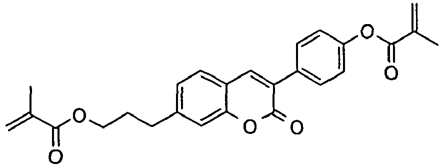 | RM-55 |
| 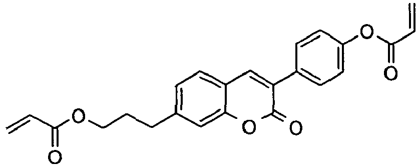 | RM-56 |
| 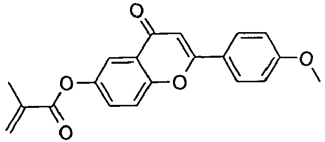 | RM-57 |
| 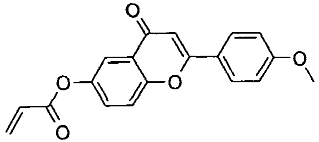 | RM-58 |
| 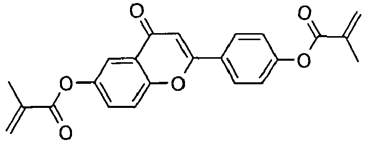 | RM-59 |
| 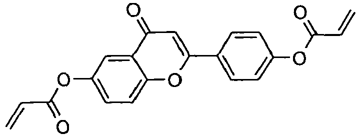 | RM-60 |
| 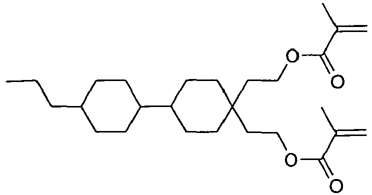 | RM-61 |
| 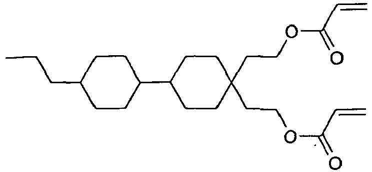 | RM-62 |
| 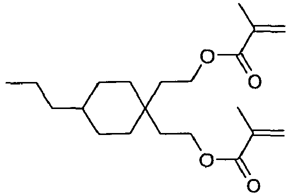 | RM-63 |
| 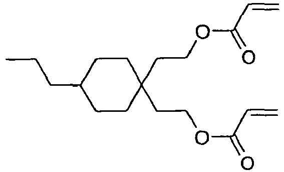 | RM-64 |
| 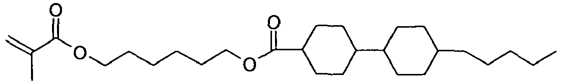 | RM-65 |
| 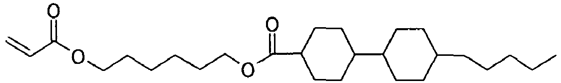 | RM-66 |
| 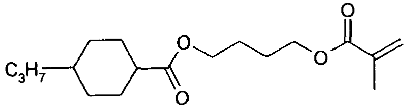 | RM-67 |
| 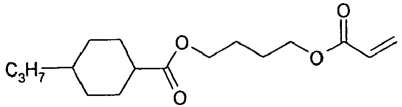 | RM-68 |
| 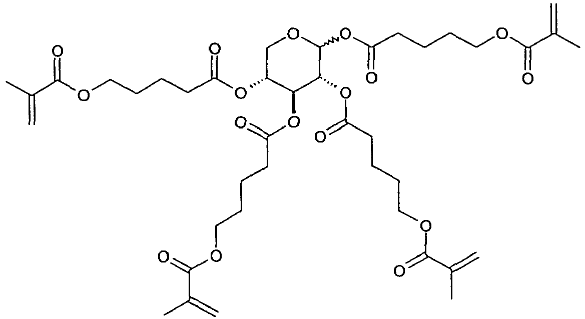 | RM-69 |
| 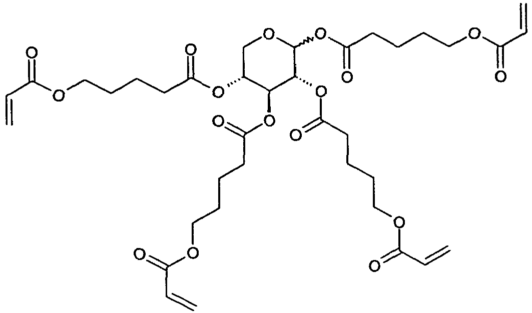 | RM-70 |
| 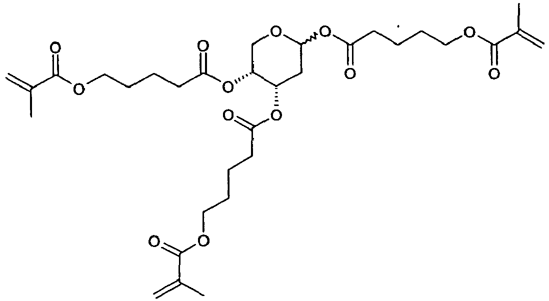 | RM-71 |
| 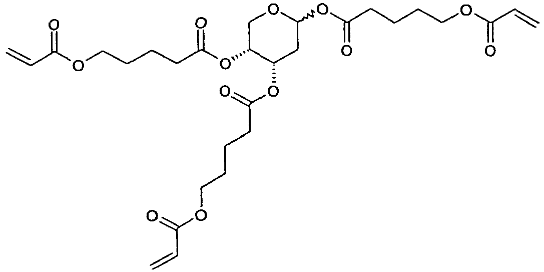 | RM-72 |
| 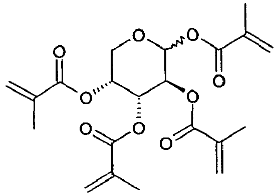 | RM-73 |
| 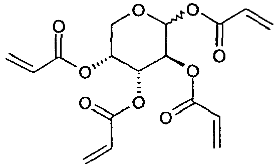 | RM-74 |

In einer bevorzugten Ausführungsform der vorliegenden Erfindung enthalten die erfindungsgemäßen Medien eine oder mehrere Verbindungen ausgewählt aus der Gruppe der Verbindungen der Tabelle E. Derartige Mischungen sind beispielsweise für PS (polymer stabilized)-TN-, PS-IPS-oder PS-FFS-Anwendungen insbesondere geeignet.

Die folgenden Mischungsbeispiele sollen die Erfindung erläutern, ohne sie zu begrenzen.

Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Weiterhin bedeutet
- Δn die optische Anisotropie bei 589 nm und 20 °C,
- γ₁ die Rotationsviskosität (mPa·s) bei 20 °C,
- V₁₀ die Spannung (V) für 10 % Transmission (Blickrichtung senkrecht zur Plattenoberfläche), (Schwellenspannung),
- Δε die dielektrische Anisotropie bei 20°C und 1 kHz (Δε = ε∥ - ε_{⊥}, wobei ε_{∥} die Dielektrizitätskonstante parallel zu den Moleküllängsachsen und ε_{⊥} die Dielektrizitätskonstante senkrecht dazu bedeutet).

Die elektro-optischen Daten werden in einer TN-Zelle im 1. Minimum (d.h. bei einem d · Δn-Wert von 0,5 µm) bei 20 °C gemessen, sofern nicht ausdrücklich etwas anderes angegeben wird. Die optischen Daten werden bei 20 °C gemessen, sofern nicht ausdrücklich etwas anderes angegeben wird. Alle physikalischen Eigenschaften werden nach "Merck Liquid Crystals, Physical Properties of Liquid Crystals" Status Nov. 1997, Merck KGaA, Deutschland bestimmt und gelten für eine Temperatur von 20 °C, sofern nicht explizit anders angegeben.

### Beispiel M1

| | | | |
|---|---|---|---|
| CC-4-V | 25,00 % | Klärpunkt [°C]: | 77,0 |
| CC-3-V1 | 15,00 % | | |
| CCQU-3-F | 11,50 % | | |
| PUQU-3-F | 15,00 % | | |
| PGP-2-5 | 2,00 % | | |
| CPGU-3-OT | 8,50 % | | |
| PGUQU-3-F | 5,50 % | | |
| APUQU-3-F | 8,00 % | | |
| CP-1V-01 | 4,00 % | | |
| CCP-30CF₃ | 5,50 % | | |

### Beispiel M2

| | | | |
|---|---|---|---|
| CC-4-V | 25,00 % | Klärpunkt [°C]: | 73,5 |
| CC-3-V1 | 15,00 % | | |
| CCQU-3-F | 11,50 % | | |
| PUQU-3-F | 15,00 % | | |
| PGP-2-5 | 2,00 % | | |
| CPGU-3-OT | 8,50 % | | |
| PGUQU-3-F | 5,50 % | | |
| APUQU-3-F | 8,00 % | | |
| CP-1V-2 | 4,00 % | | |
| CCP-30CF₃ | 5,50 % | | |

### Beispiel M3

| | | | |
|---|---|---|---|
| CC-4-V | 25,00 % | Klärpunkt [°C]: | 74,0 |
| CC-3-V1 | 15,00 % | | |
| CCQU-3-F | 11,50 % | | |
| PUQU-3-F | 15,00 % | | |
| PGP-2-5 | 2,00 % | | |
| CPGU-3-OT | 8,50 % | | |
| PGUQU-3-F | 5,50 % | | |
| APUQU-3-F | 8,00 % | | |
| CP-V2-1 | 4,00 % | | |
| CCP-30CF₃ | 5,50 % | | |

### Beispiel M4

| | | | |
|---|---|---|---|
| CCH-23 | 18,00 % | Klärpunkt [°C]: | 76,5 |
| PCH-301 | 6,00 % | | |
| CP-1V-01 | 3,00 % | | |
| PUQU-3-F | 10,00 % | | |
| CCQU-3-F | 15,00 % | | |
| BCH-3F.F.F | 10,00 % | | |
| CCP-30CF₃ | 8,00 % | | |
| CCP-50CF₃ | 7,00 % | | |
| PGP-2-5 | 6,00 % | | |
| APUQU-3-F | 7,00 % | | |
| PGUQU-3-F | 7,00 % | | |
| CPGU-3-OT | 3,00 % | | |

### Beispiel M5

| | | | |
|---|---|---|---|
| CCH-23 | 18,00 % | Klärpunkt [°C]: | 74,0 |
| PCH-301 | 6,00 % | | |
| CP-1V-2 | 3,00 % | | |
| PUQU-3-F | 10,00 % | | |
| CCQU-3-F | 15,00 % | | |
| BCH-3F.F.F | 10,00 % | | |
| CCP-30CF₃ | 8,00 % | | |
| CCP-50CF₃ | 7,00 % | | |
| PGP-2-5 | 6,00 % | | |
| APUQU-3-F | 7,00 % | | |
| PGUQU-3-F | 7,00 % | | |
| CPGU-3-OT | 3,00 % | | |

### Beispiel M6

| | | | |
|---|---|---|---|
| CCH-23 | 18,00 % | Klärpunkt [°C]: | 74,5 |
| PCH-301 | 6,00 % | | |
| CP-V2-1 | 3,00 % | | |
| PUQU-3-F | 10,00 % | | |
| CCQU-3-F | 15,00 % | | |
| BCH-3F.F.F | 10,00 % | | |
| CCP-30CF₃ | 8,00 % | | |
| CCP-50CF₃ | 7,00 % | | |
| PGP-2-5 | 6,00 % | | |
| APUQU-3-F | 7,00 % | | |
| PGUQU-3-F | 7,00 % | | |
| CPGU-3-OT | 3,00 % | | |

### Beispiel M7

| | | | |
|---|---|---|---|
| BCH-32 | 5,00 % | LTS Bulk [-20 °C]: | > 1000 h |
| PUQU-3-F | 7,50 % | | |
| PGP-2-3 | 6,50 % | | |
| PGP-2-4 | 6,50 % | | |
| PGP-2-5 | 8,00 % | | |
| CCQU-2-F | 2,00 % | | |
| CCQU-3-F | 3,00 % | | |
| CCQU-5-F | 2,50 % | | |
| PCH-301 | 17,50 % | | |
| CP-1V-2 | 4,50 % | | |
| CCH-23 | 13,50 % | | |
| CCH-34 | 7,00 % | | |
| CPGU-3-OT | 5,50 % | | |
| CCGU-3-F | 5,50 % | | |
| PGUQU-3-F | 5,50 % | | |

### Beispiel M8

| | | | |
|---|---|---|---|
| BCH-32 | 5,00 % | Klärpunkt [°C]: | 75,0 |
| PUQU-3-F | 7,50 % | | |
| PGP-2-3 | 6,50 % | | |
| PGP-2-4 | 6,50 % | | |
| PGP-2-5 | 8,00 % | | |
| CCQU-2-F | 2,00 % | | |
| CCQU-3-F | 3,00 % | | |
| CCQU-5-F | 2,50 % | | |
| PCH-301 | 17,50 % | | |
| CP-V2-1 | 4,50 % | | |
| CCH-23 | 13,50 % | | |
| CCH-34 | 7,00 % | | |
| CPGU-3-OT | 5,50 % | | |
| CCGU-3-F | 5,50 % | | |
| PGUQU-3-F | 5,50 % | | |

### Beispiel M9

| | | | |
|---|---|---|---|
| APUQU-3-F | 11,50 % | Klärpunkt [°C]: | 74,5 |
| BCH-3F.F.F | 21,00 % | Δn [589 nm, 20 °C] | 0,1304 |
| CC-3-V | 19,00 % | | |
| CCGU-3-F | 3,50 % | | |
| CCP-1F.F.F | 3,00 % | | |
| CCP-2F.F.F | 6,00 % | | |
| CCP-V-1 | 2,00 % | | |
| CP-V2-1 | 1,00 % | | |
| CPGP-5-2 | 1,00 % | | |
| CPGU-3-OT | 8,50 % | | |
| PGP-2-4 | 4,50 % | | |
| PP-1-2V1 | 3,00 % | | |
| PPGU-3-F | 2,00 % | | |
| PUQU-3-F | 14,00 % | | |

### Beispiel M10

| | | | |
|---|---|---|---|
| APUQU-2-F | 8,50 % | Klärpunkt [°C]: | 74,7 |
| APUQU-3-F | 8,50 % | Δn [589 nm, 20 °C] | 0,1269 |
| CC-3-V | 27,50 % | | |
| CCGU-3-F | 8,50 % | | |
| PGP-2-2V | 9,00 % | | |
| CCQU-3-F | 7,50 % | | |
| CCGU-3-OT | 4,50 % | | |
| PP-1-2V1 | 3,50 % | | |
| PPGU-3-F | 0,50 % | | |
| PUQU-3-F | 19,00 % | | |
| CP-V2-1 | 3,00 % | | |

### Beispiel M11

| | | | |
|---|---|---|---|
| APUQU-2-F | 7,75 % | Klärpunkt [°C]: | 73,9 |
| APUQU-3-F | 7,75 % | Δn [589 nm, 20 °C] | 0,1359 |
| CC-3-V | 21,00 % | | |
| CCGU-3-F | 9,00 % | | |
| PGP-2-2V | 8,00 % | | |
| PGP-2-5 | 3,50 % | | |
| CCQU-3-F | 8,00 % | | |
| CPGU-3-OT | 4,50 % | | |
| PP-1-2V1 | 5,50 % | | |
| PPGU-3-F | 0,50 % | | |
| PUQU-3-F | 19,50 % | | |
| CP-V2-1 | 5,00 % | | |

### Beispiel M12

| | | | |
|---|---|---|---|
| APUQU-2-F | 7,50 % | Klärpunkt [°C]: | 80,1 |
| APUQU-3-F | 7,50 % | Δn [589 nm, 20 °C] | 0,1351 |
| CC-3-V | 18,50 % | | |
| CCGU-3-F | 9,00 % | | |
| PGP-2-2V | 6,50 % | | |
| PGP-2-5 | 4,00 % | | |
| CCQU-3-F | 8,00 % | | |
| CPGU-3-OT | 4,50 % | | |
| PP-1-2V1 | 4,00 % | | |
| PPGU-3-F | 0,50 % | | |
| PUQU-3-F | 20,00 % | | |
| CP-V2-1 | 5,00 % | | |
| CCP-V2-1 | 5,00 % | | |

### Beispiel M13

| | | | |
|---|---|---|---|
| APUQU-2-F | 7,50 % | Klärpunkt [°C]: | 77,4 |
| APUQU-3-F | 7,50 % | Δn [589 nm, 20 °C] | 0,1355 |
| CC-3-V | 21,00 % | | |
| CCGU-3-F | 8,50 % | | |
| PGP-2-2V | 7,00 % | | |
| PGP-2-5 | 3,50 % | | |
| CCQU-3-F | 7,00 % | | |
| CPGU-3-OT | 5,00 % | | |
| PP-1-2V1 | 3,00 % | | |
| PPGU-3-F | 0,50 % | | |
| PUQU-3-F | 18,00 % | | |
| CP-V2-1 | 5,00 % | | |
| CPU-3-OXF | 6,50 % | | |

### Beispiel M14

| | | | |
|---|---|---|---|
| APUQU-2-F | 8,25 % | Klärpunkt [°C]: | 74,8 |
| APUQU-3-F | 8,25 % | Δn [589 nm, 20 °C] | 0,1167 |
| CC-3-V | 32,00 % | | |
| CCGU-3-F | 5,50 % | | |
| PGP-2-2V | 6,00 % | | |
| CCQU-3-F | 12,00 % | | |
| CPGU-3-OT | 6,00 % | | |
| PP-1-2V1 | 1,50 % | | |
| PPGU-3-F | 1,00 % | | |
| PUQU-3-F | 18,00 % | | |
| CP-V2-1 | 1,50 % | | |

### Beispiel M15

| | | | |
|---|---|---|---|
| APUQU-2-F | 7,00 % | Klärpunkt [°C]: | 74,8 |
| APUQU-3-F | 7,25 % | Δn [589 nm, 20 °C] | 0,1337 |
| CC-3-V | 24,50 % | | |
| CCGU-3-F | 8,00 % | | |
| PGP-2-2V | 6,50 % | | |
| PGP-2-5 | 2,00 % | | |
| CPGU-3-OT | 5,50 % | | |
| PP-1-2V1 | 1,75 % | | |
| PPGU-3-F | 0,50 % | | |
| PUQU-3-F | 18,50 % | | |
| CP-V2-1 | 5,00 % | | |
| CPU-3-OXF | 13,50 % | | |

### Beispiel M16

| | | | |
|---|---|---|---|
| APUQU-2-F | 7,50 % | Klärpunkt [°C]: | 76,8 |
| APUQU-3-F | 7,50 % | Δn [589 nm, 20 °C] | 0,1351 |
| CC-3-V | 22,00 % | | |
| CCGU-3-F | 8,50 % | | |
| PGP-2-2V | 8,00 % | | |
| PGP-2-5 | 3,50 % | | |
| CCQU-3-F | 7,50 % | | |
| CPGU-3-OT | 6,00 % | | |
| PP-1-2V1 | 3,50 % | | |
| PPGU-3-F | 0,50 % | | |
| PUQU-3-F | 19,00 % | | |
| CP-V2-1 | 5,00 % | | |
| CPU-3-OXF | 1,50 % | | |

### Beispiel M17

| | |
|---|---|
| APUQU-2-F | 7,00 % |
| APUQU-3-F | 7,25 % |
| CC-3-V | 23,25 % |
| CCGU-3-F | 8,00 % |
| PGP-2-2V | 6,50 % |
| PGP-2-5 | 2,00 % |
| CPGU-3-OT | 5,50 % |
| PP-1-2V1 | 3,00 % |
| PPGU-3-F | 0,50 % |
| PUQU-3-F | 18,50 % |
| CP-V2-1 | 5,00 % |
| CPU-3-OXF | 13,50 % |

## Patentansprüche

1. Flüssigkristallines Medium mit positiver dielektrischer Anisotropie, **dadurch gekennzeichnet, dass** es eine oder mehrere Verbindungen der Formel I, 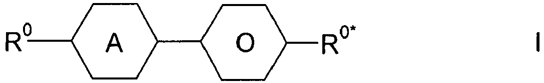 worin
R⁰ und R^{0*} jeweils unabhängig voneinander einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 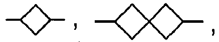 -O-, -CO-O-, -O-CO- so ersetzt sein können, dass O-Atome nicht direkt miteinander verknüpft sind, und worin auch ein oder mehrere H-Atome durch Halogen ersetzt sein können,
Ring A einen 1,4-Cyclohexylenring oder 1,4-Cyclohexenylenring, worin auch eine oder zwei CH₂-Gruppen durch -O- und/oder -S- ersetzt sein können,
bedeuten,
enthält
und zusätzlich eine oder mehrere Verbindungen ausgewählt aus den Verbindungen der Formeln VI-1a bis VI-1d, VI-2a bis VI-2f, X, XI, XII, XIII-XVI, XIX bis XXVII, 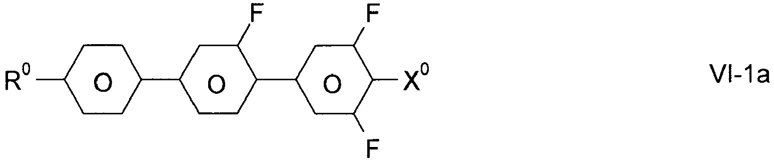 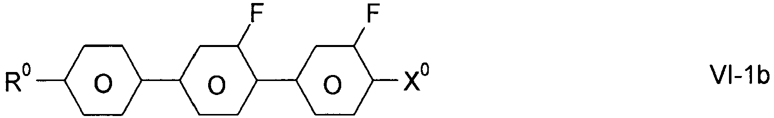 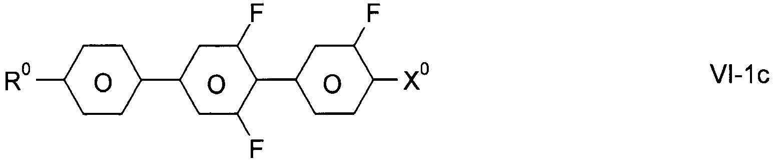 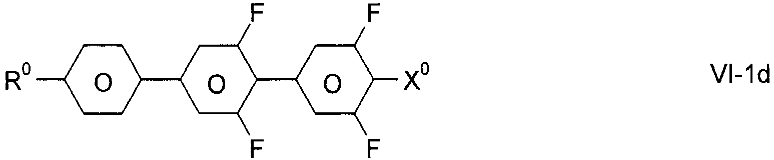 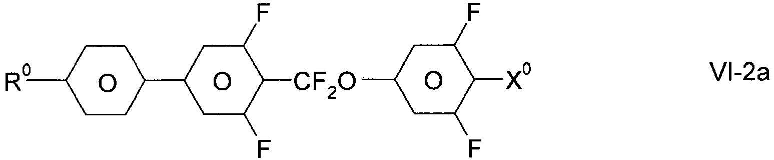 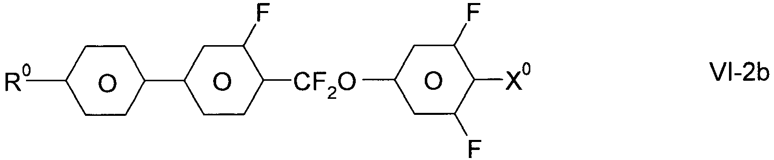 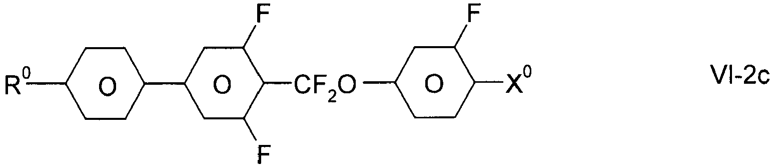 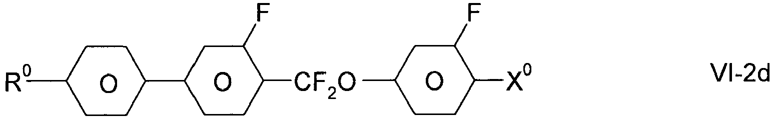 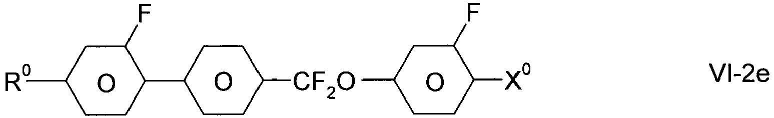 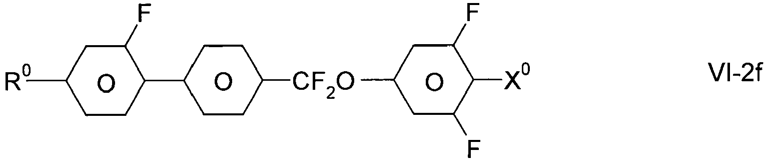 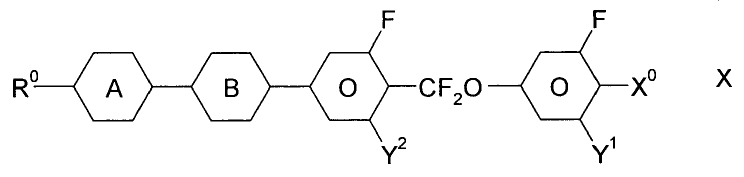 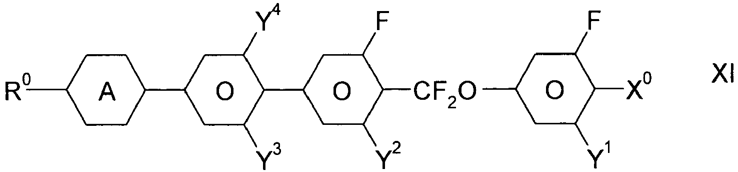 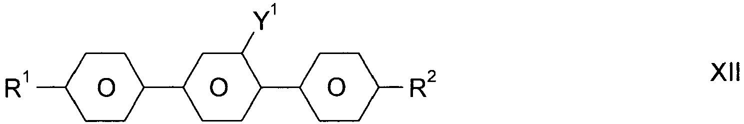 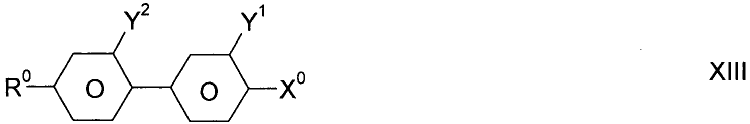 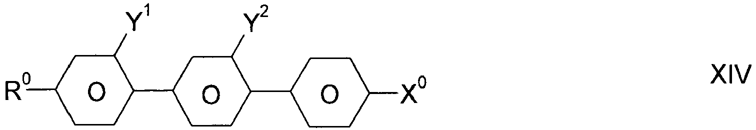 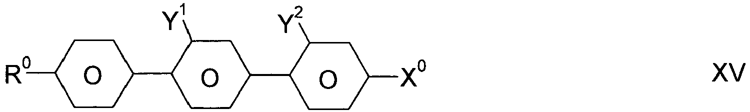 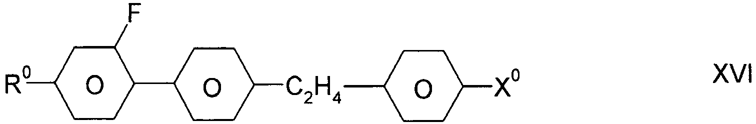 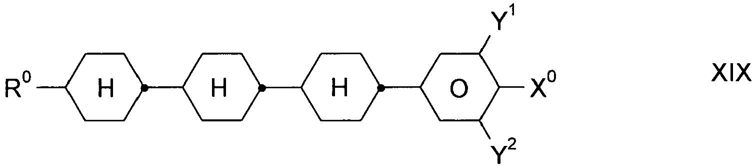 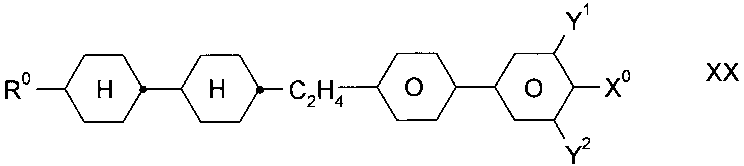 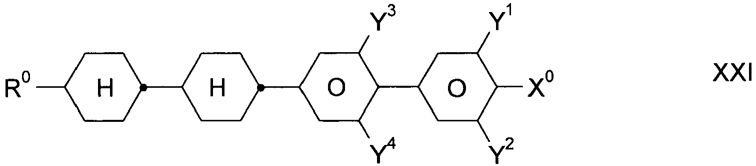 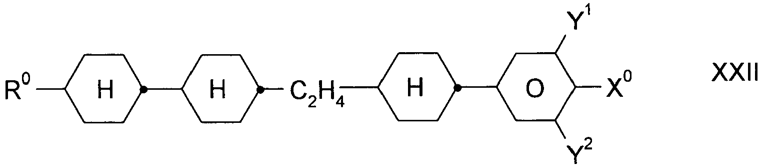 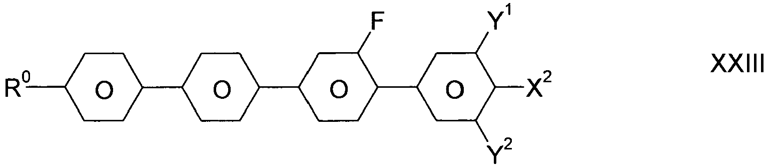 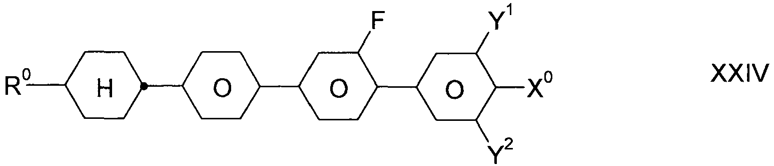 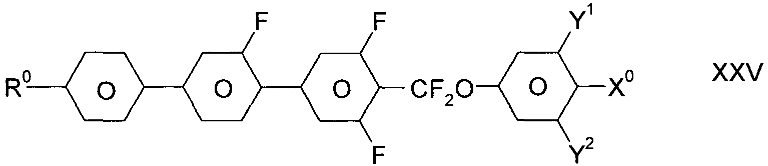 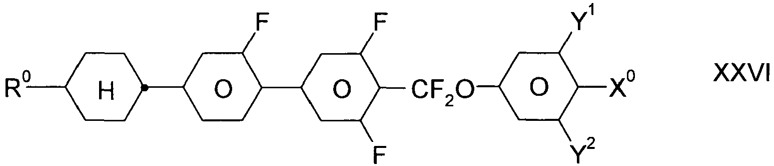 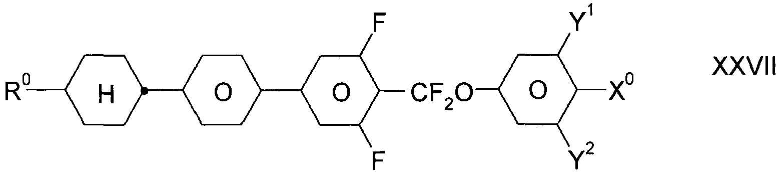 worin
Y¹⁻⁴ jeweils unabhängig voneinander H oder F
X⁰ F, Cl, ein- oder mehrfach fluorierter Alkyl- oder Alkoxyrest mit 1 bis 6 C-Atomen, ein oder mehrfach fluorierter Alkenyl- oder Alkenyloxyrest mit 2 bis 6 C-Atomen 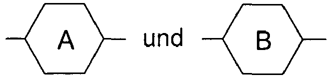 jeweils unabhängig voneinander 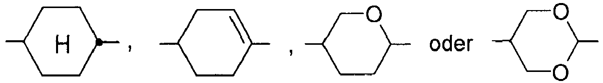
R¹ und R² jeweils unabhängig voneinander n-Alkyl, Alkoxy, Oxaalkyl, Fluoralkyl, Alkenyloxy oder Alkenyl mit jeweils bis zu 9 C-Atomen,
bedeuten,
enthält.

2. Flüssigkristallines Medium nach Anspruch 1, **dadurch gekennzeichnet, dass** es eine oder mehrere Verbindungen der Formeln 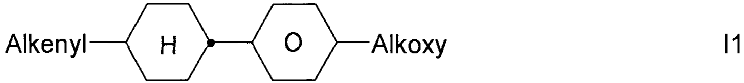 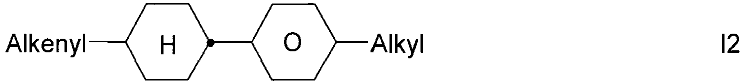 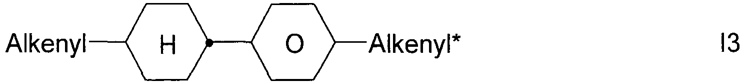 worin
Alkenyl und Alkenyl* jeweils unabhängig voneinander einen geradkettigen Alkenylrest mit 2 bis 6 C-Atomen,
Alkoxy einen geradkettigen Alkoxyrest mit 1 bis 6 C-Atomen
und
Alkyl einen geradkettigen Alkylrest mit 1 bis 6 C-Atomen
bedeuten,
enthält.

3. Flüssigkristallines Medium nach Anspruch 1 oder 2, **dadurch gekennzeichnet, dass** es eine oder mehrere Verbindungen der Formeln, 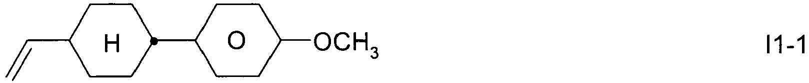 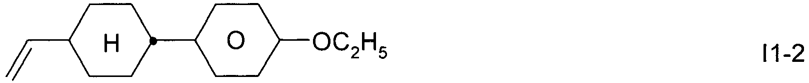 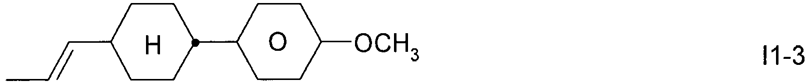 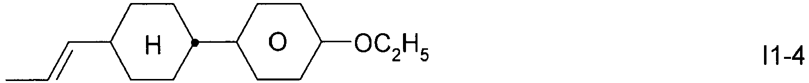 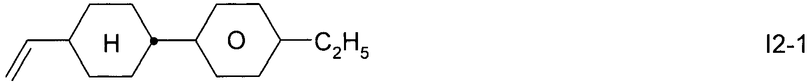 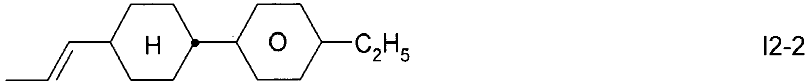 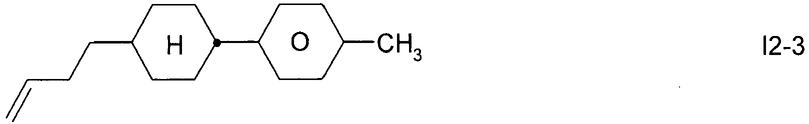 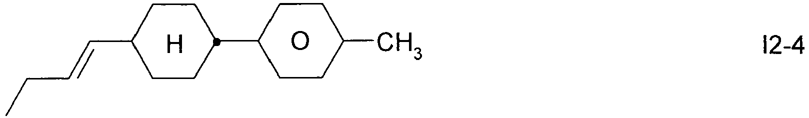 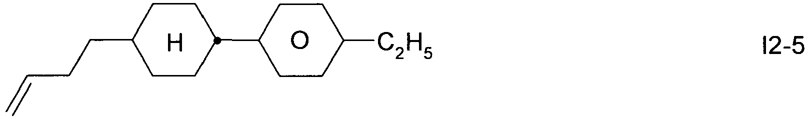 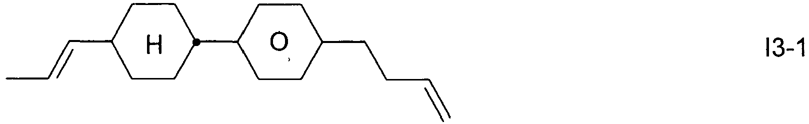 enthält.

4. Flüssigkristallines Medium nach einem oder mehreren der Ansprüche 1 bis 3, **dadurch gekennzeichnet, dass** es mindestens eine Verbindung aus der Gruppe der Verbindungen der Formeln I2-2, I2-3 und I2-4, 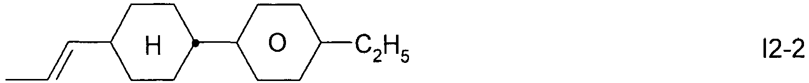 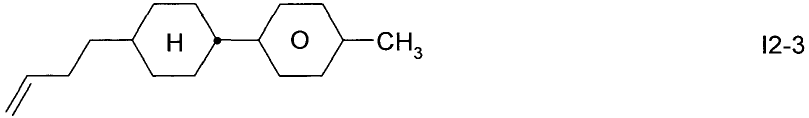 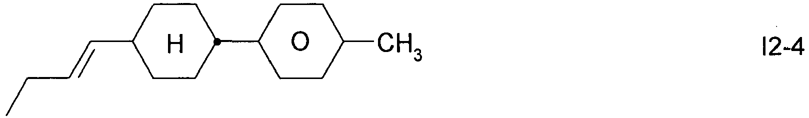 enthält.

5. Flüssigkristallines Medium nach einem oder mehreren der Ansprüche 1 bis 4, **dadurch gekennzeichnet, dass** es zusätzlich eine oder mehrere Verbindungen der Formeln II und/oder III, 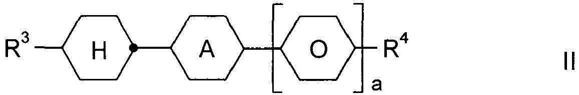 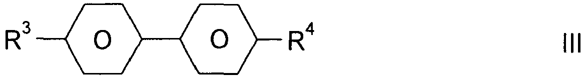 worin
Ring A 1,4-Phenylen oder trans-1,4-Cyclohexylen,
a 0 oder 1 ist, wobei im Fall a = 0 Ring A trans-1,4-Cyclohexylen bedeutet,
R³ Alkenyl mit 2 bis 9 C-Atomen
bedeuten, und R⁴ die für R⁰ in Anspruch 1 angegebenen Bedeutungen besitzt,
enthält.

6. Flüssigkristallines Medium nach einem oder mehreren der Ansprüche 1 bis 5, **dadurch gekennzeichnet, dass** es zusätzlich eine oder mehrere Verbindungen ausgewählt aus den Verbindungen der Formeln, 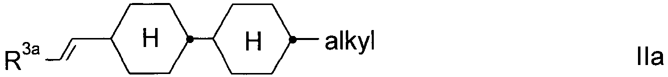 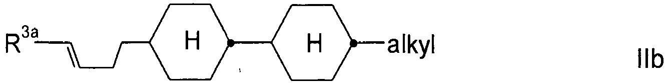 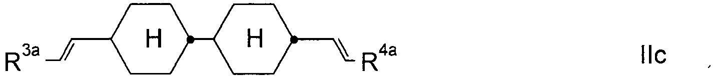 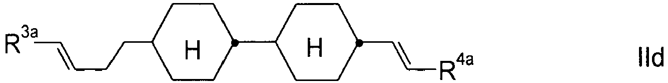 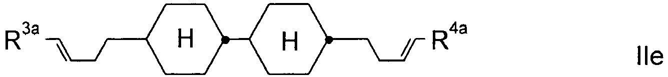 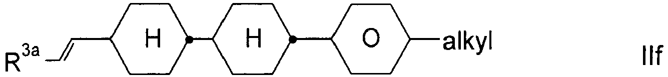 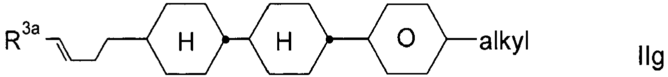 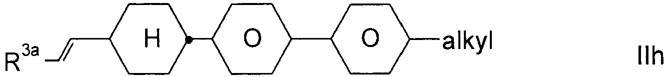 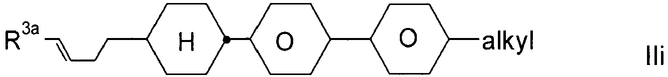 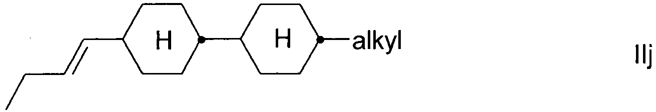 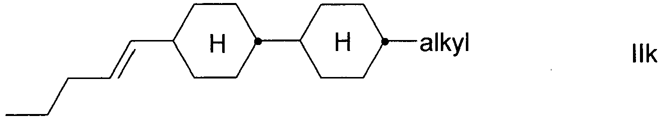 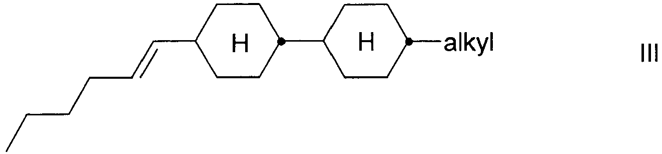 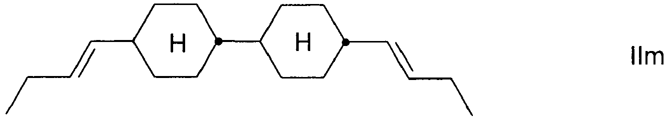 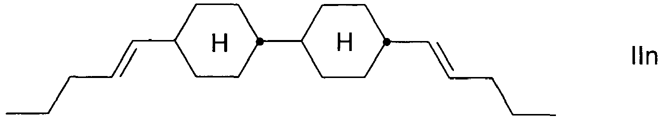 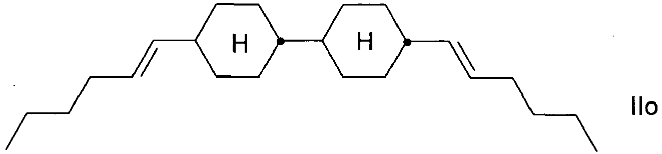 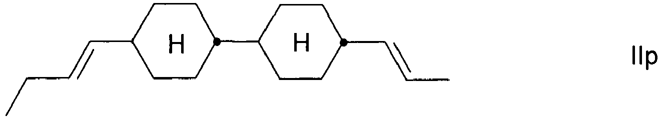 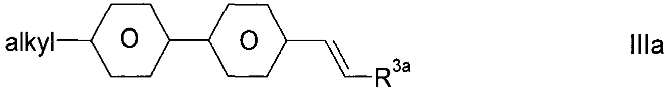 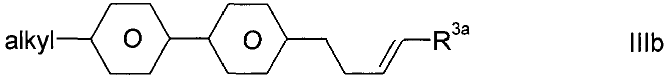 worin R^{3a} und R^{4a} jeweils unabhängig voneinander H, CH₃, C₂H₅ oder C₃H₇ bedeuten, und "alkyl" eine geradkettige Alkylgruppe mit 1 bis 8 C-Atomen bedeutet,
enthält.

7. Flüssigkristallines Medium nach einem oder mehreren der Ansprüche 1 bis 6, **dadurch gekennzeichnet, dass** es eine zusätzlich eine oder mehrere Verbindungen ausgewählt aus den Verbindungen der Formeln IV bis VIII, 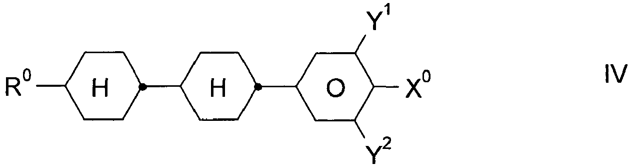 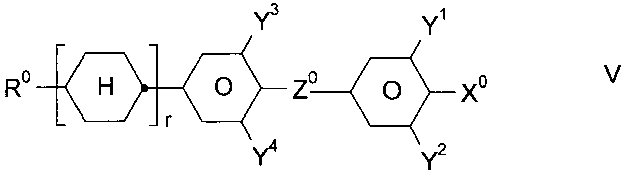 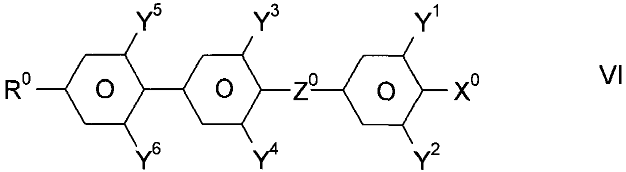 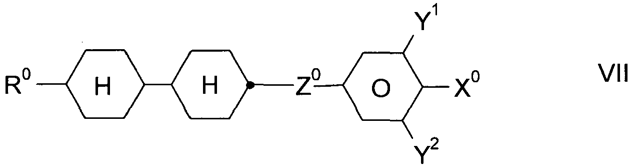 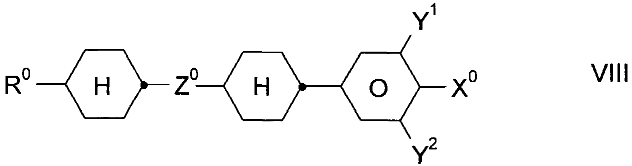 worin
R⁰ einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 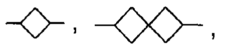 -O-, -CO-O- oder -O-CO- so ersetzt sein können, dass O-Atome nicht direkt miteinander verknüpft sind, und
worin auch ein oder mehrere H-Atome durch Halogen ersetzt sein können,
X⁰ F, Cl, ein- oder mehrfach fluorierter Alkyl- oder Alkoxyrest mit 1 bis 6 C-Atomen, ein oder mehrfach fluorierter Alkenyl- oder Alkenyloxyrest mit 2 bis 6 C-Atomen
Y¹⁻⁶ jeweils unabhängig voneinander H oder F,
Z⁰ -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- oder -OCF₂-, in den Formeln V und VI auch eine Einfachbindung, und
r 0 oder 1
bedeuten,
enthält.

8. Flüssigkristallines Medium nach einem oder mehreren der Ansprüche 1 bis 7, **dadurch gekennzeichnet, dass** es zusätzlich eine oder mehrere Verbindungen ausgewählt aus den Verbindungen der Formeln Va bis Vj, 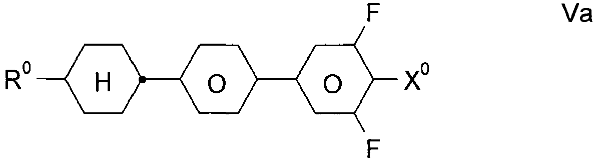 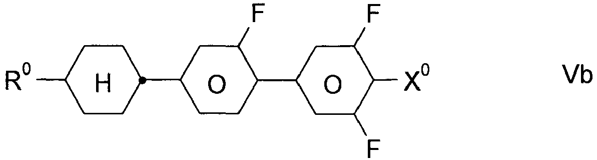 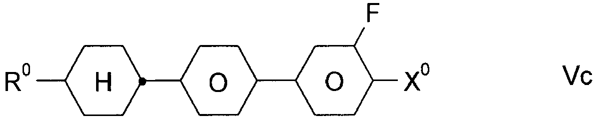 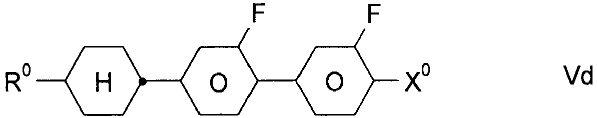 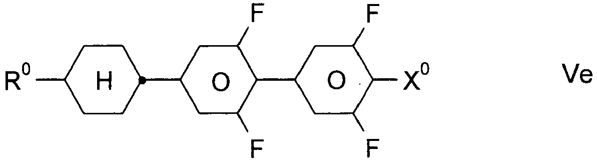 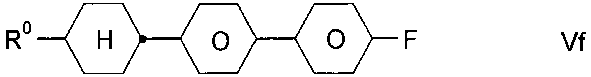 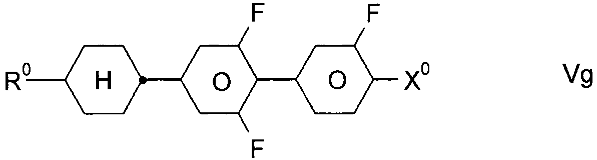 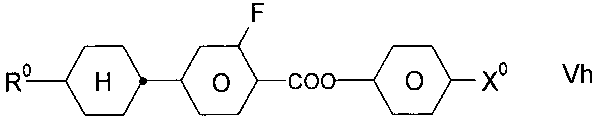 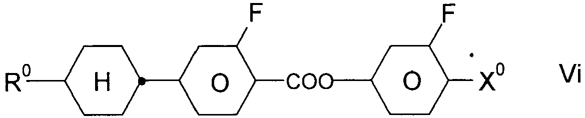 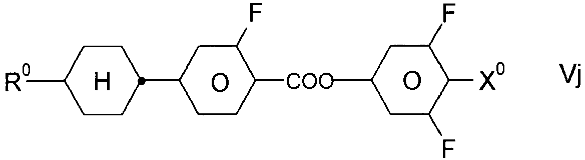 worin R⁰ und X⁰ die in Anspruch 1 angegebenen Bedeutungen haben,
enthält.

9. Flüssigkristallines Medium nach einem oder mehreren der Ansprüche 1 bis 8, **dadurch gekennzeichnet, dass** das Medium zusätzlich eine oder mehrere Verbindungen der Formeln D1, D2 und/oder D3 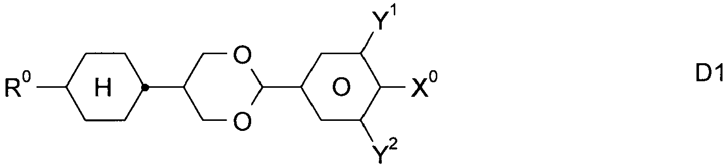 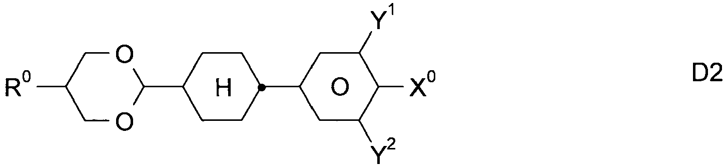 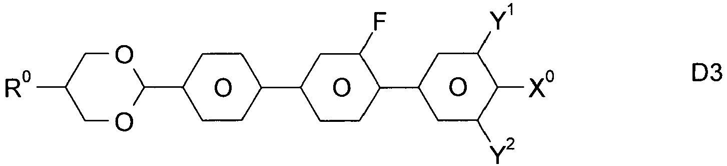 worin Y¹, Y², R⁰ und X⁰ die in Anspruch 1 angegebenen Bedeutungen besitzen,
enthält.

10. Flüssigkristallines Medium nach einem oder mehreren der Ansprüche 1 bis 9, **dadurch gekennzeichnet, dass** es eine oder mehrere polymerisierbaren Verbindungen ausgewählt aus den Verbindungen der Formel M
R^{Ma}-A^{M1}-(Z^{M1}-A^{M2})ₘ₁-R^{Mb} M
worin die einzelnen Reste folgende Bedeutung haben:
R^{Ma} und R^{Mb} jeweils unabhängig voneinander P, P-Sp-, H, Halogen, SF₅, NO₂, eine Alkyl-, Alkenyl- oder Alkinylgruppe, wobei bevorzugt mindestens einer der Reste R^{Ma} und R^{Mb} eine Gruppe P oder P-Sp- bedeutet oder enthält,
P eine polymerisierbare Gruppe,
Sp eine Abstandsgruppe oder eine Einfachbindung,
A^{M1} und A^{M2} jeweils unabhängig voneinander eine aromatische, heteroaromatische, alicyclische oder heterocyclische Gruppe, vorzugsweise mit 4 bis 25 Ringatomen, bevorzugt C-Atomen, welche auch anellierte Ringe umfasst oder enthalten kann, und die optional ein- oder mehrfach durch L substitutiert sein kann,
L P, P-Sp-, OH, CH₂OH, F, Cl, Br, I, -CN, -NO₂, -NCO,-NCS, -OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Spersetzt sein können, bevorzugt P, P-Sp-, H, OH, CH₂OH, Halogen, SF₅, NO₂, eine Alkyl-, Alkenyl- oder Alkinylgruppe,
Y¹ Halogen,
Z^{M1} -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-, -COO-, -OCO-CH=CH-, CR⁰R⁰⁰ oder eine Einfachbindung,
R⁰ und R⁰⁰ jeweils unabhängig voneinander H oder Alkyl mit 1 bis 12 C-Atomen,
R^{x} P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
m1 0, 1, 2, 3 oder 4 und
n1 1, 2, 3 oder 4,
wobei mindestens einer, bevorzugt einer, zwei oder drei, besonders bevorzugt einer oder zwei, aus der Gruppe R^{Ma}, R^{Mb} und der vorhandenen Substituenten L eine Gruppe P oder P-Sp- bedeutet oder mindestens eine Gruppe P oder P-Sp- enthält,
bedeuten.

11. Flüssigkristallines Medium nach einem oder mehreren der Ansprüche 1 bis 10, **dadurch gekennzeichnet, dass** es eine oder mehrere Verbindungen ausgewählt aus den polymersierbaren Verbindungen der Formeln RM-1 bis RM-74 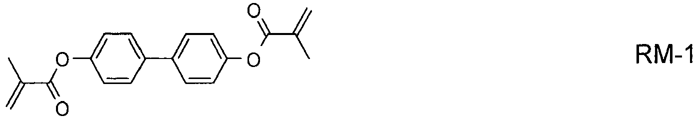 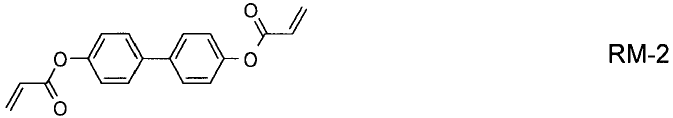 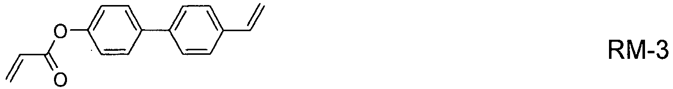 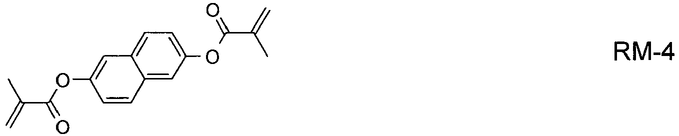 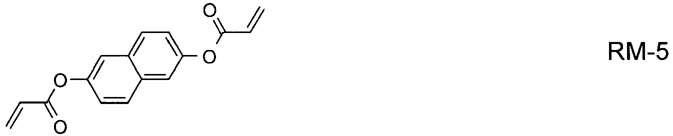 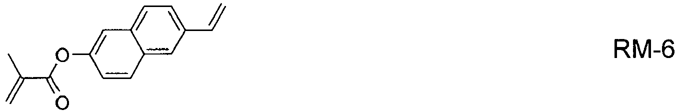 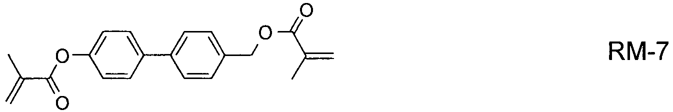 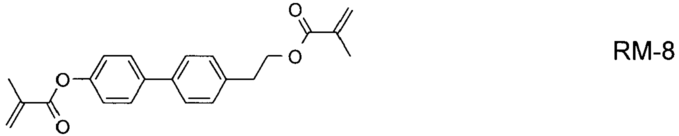 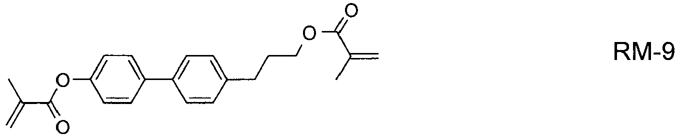 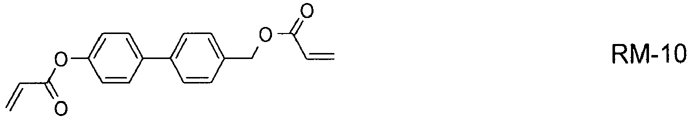 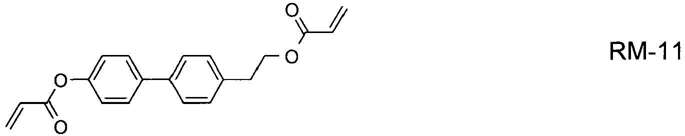 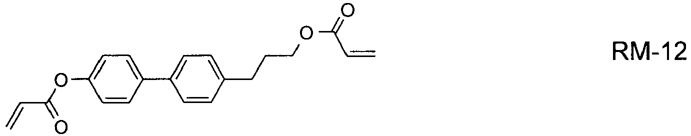 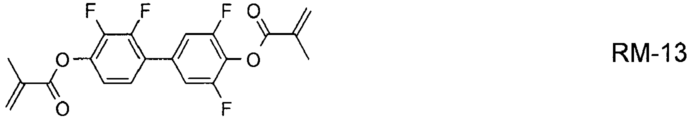 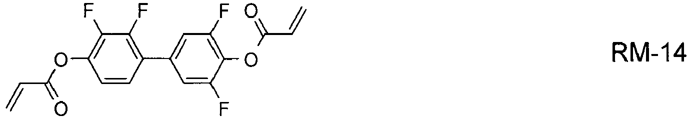 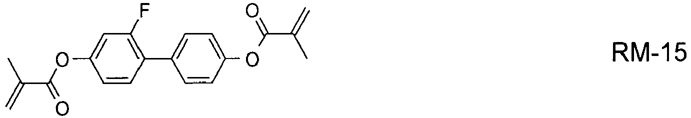 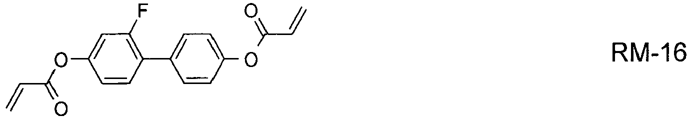 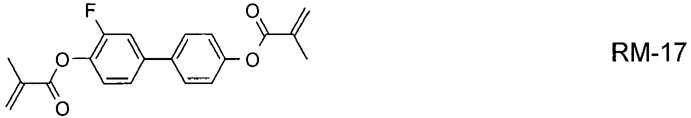 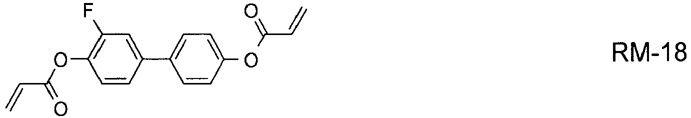 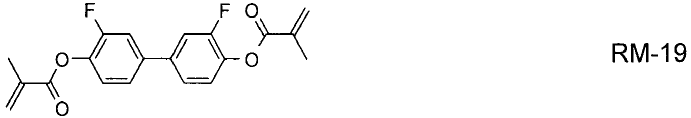 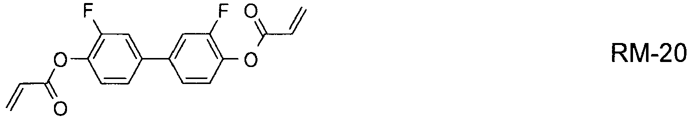 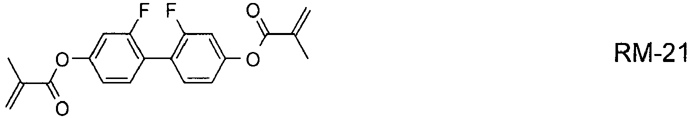 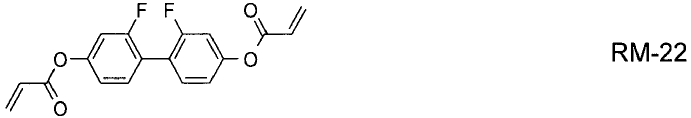 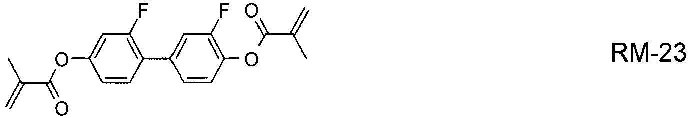 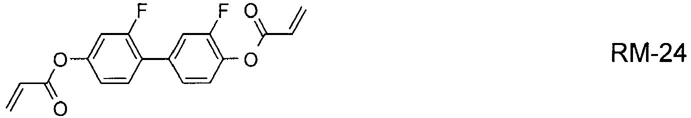 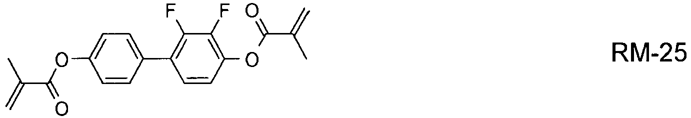 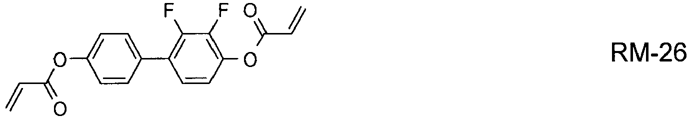 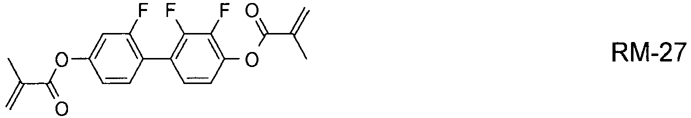 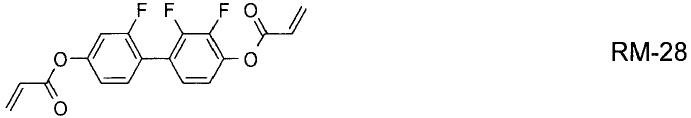 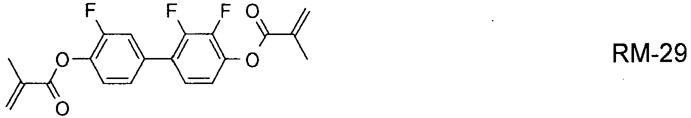 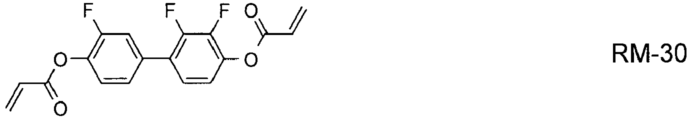 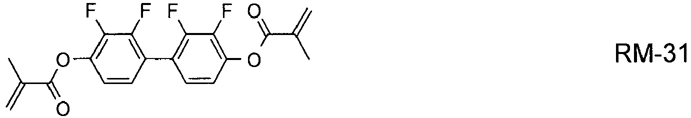 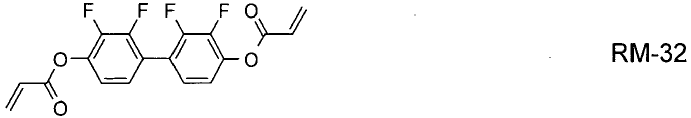 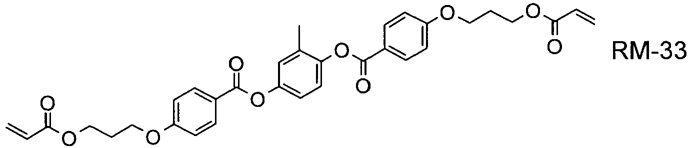 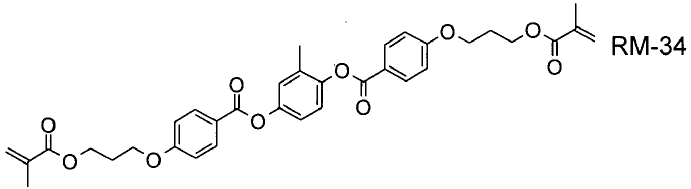 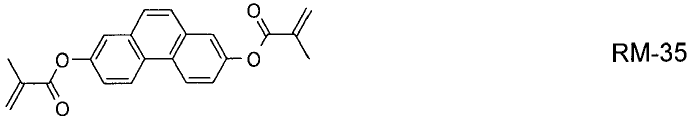 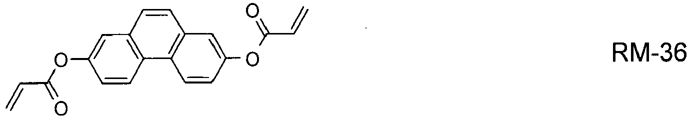 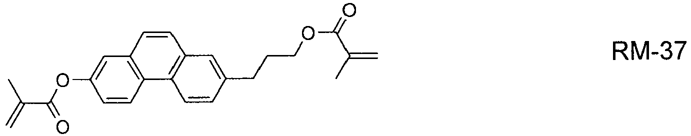 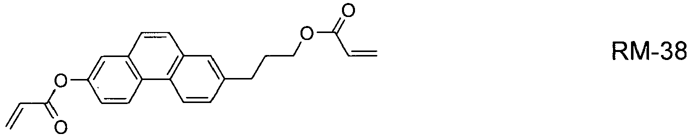 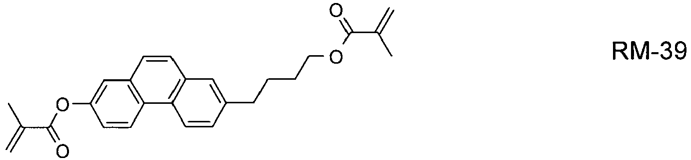 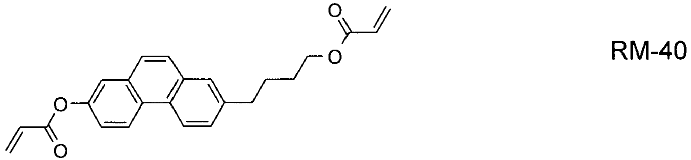 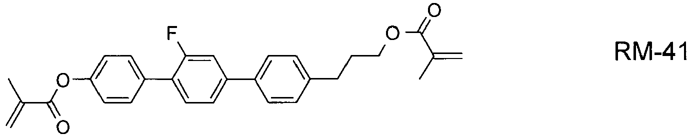 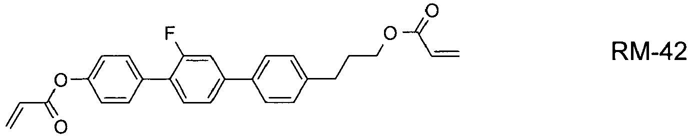 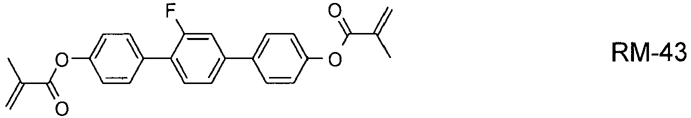 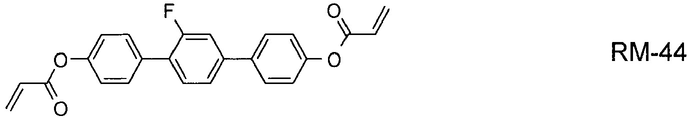 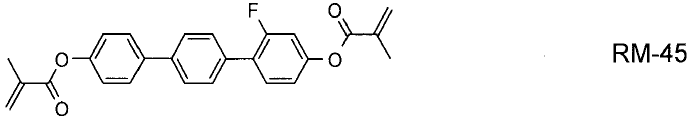 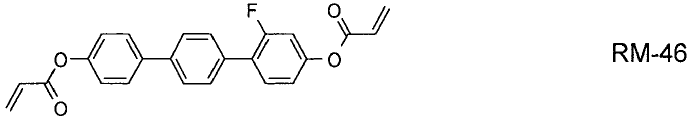 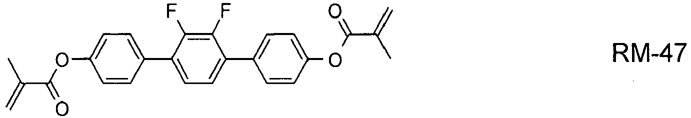 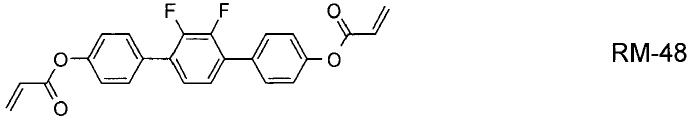 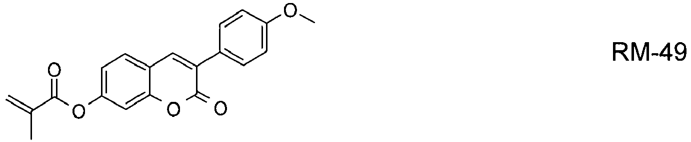 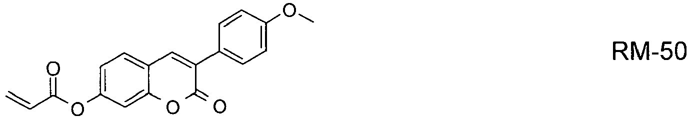 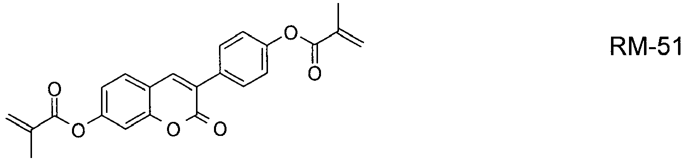 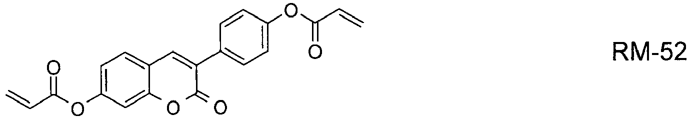 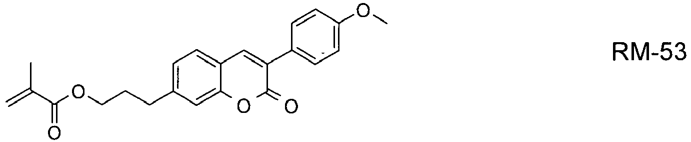 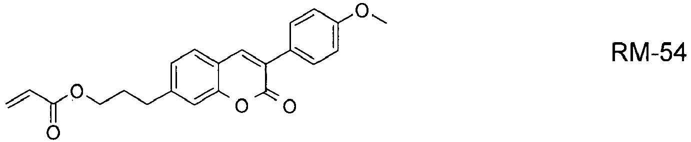 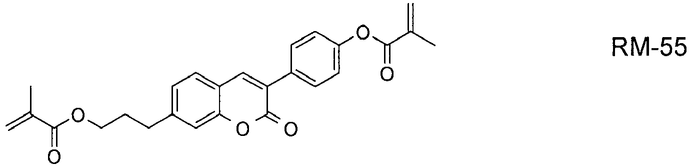 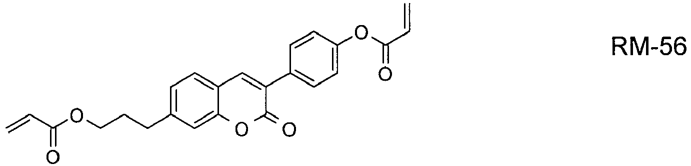 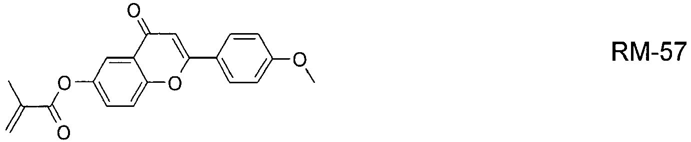 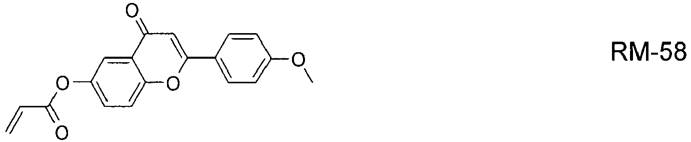 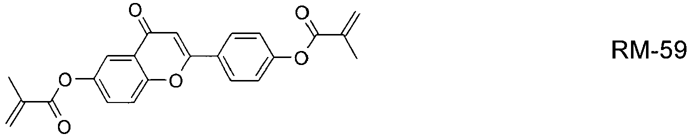 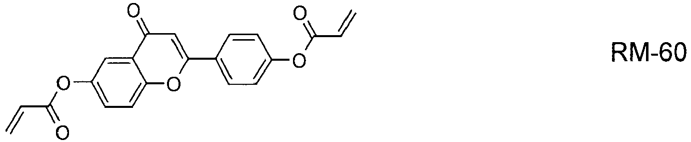 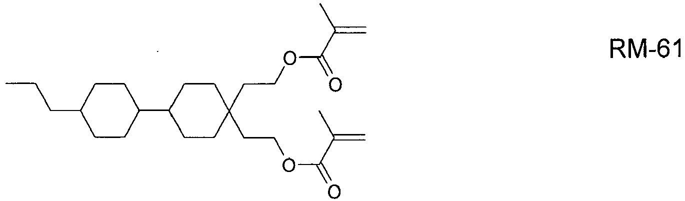 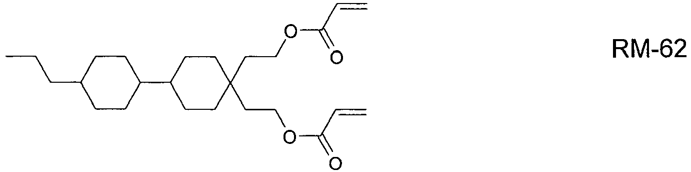 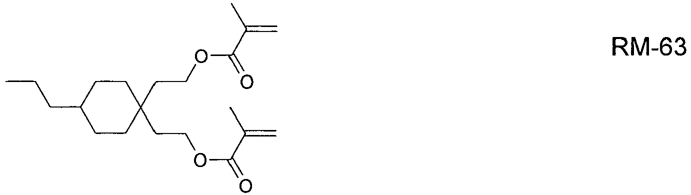 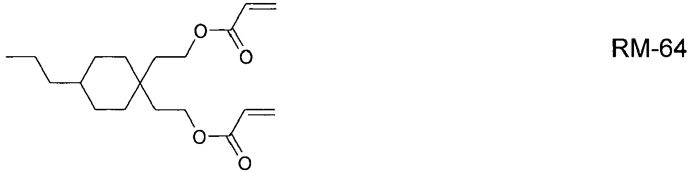 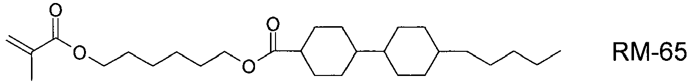 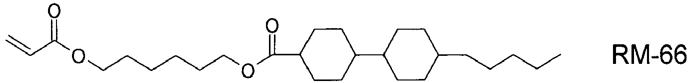 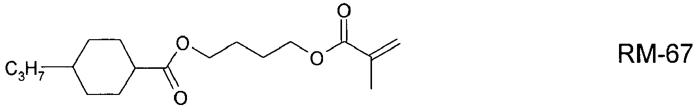 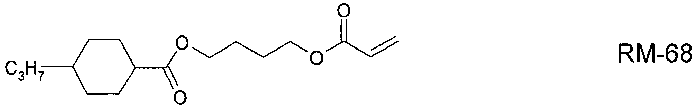 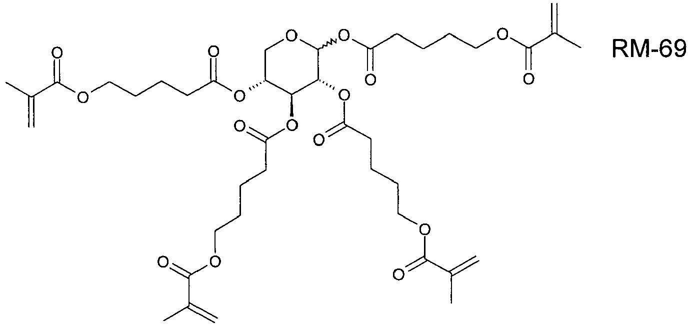 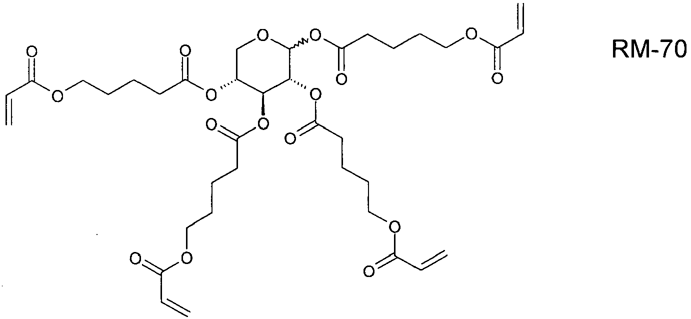 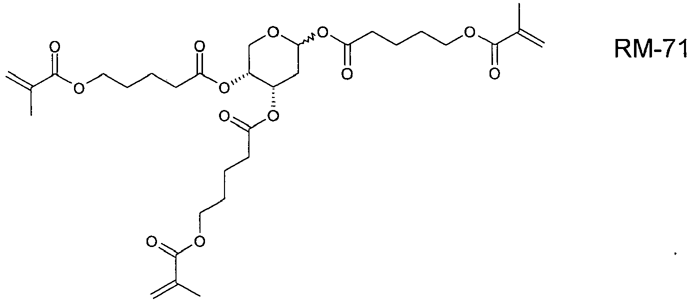 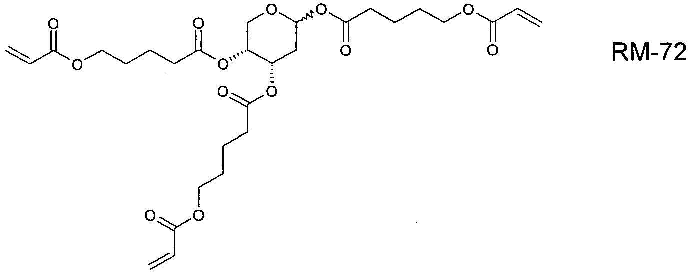 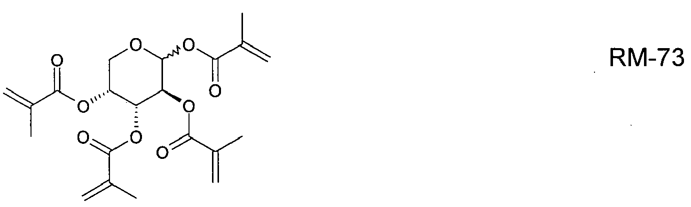 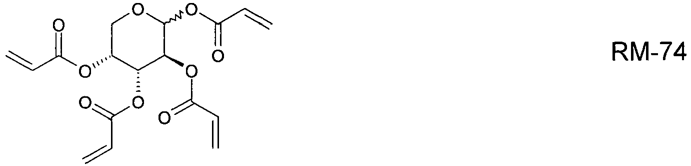 enthält.

12. Flüssigkristallines Medium nach einem oder mehreren der Ansprüche 1 bis 11, **dadurch gekennzeichnet, dass** es 1-25 Gew.% an Verbindungen der Formel I enthält.

13. Flüssigkristallines Medium nach einem oder mehreren der Ansprüche 1 bis 12, **dadurch gekennzeichnet, dass** es zusätzlich einen oder mehrere UV-Stabilisatoren und/oder Antioxidantien enthält.

14. Verwendung eines flüssigkristallinen Mediums nach einem oder mehreren der Ansprüche 1 bis 13 für elektrooptische Zwecke.

15. Verwendung eines flüssigkristallinen Mediums nach Anspruch 14 in TN-TFT-, OCB-, IPS-, FFS-, positiv VA-, PS-TN-TFT, PS-IPS, PS-FFS-Displays.

16. Elektrooptische Flüssigkristallanzeige enthaltend ein flüssigkristallines Medium nach einem oder mehreren der Ansprüche 1 bis 13.

17. Verfahren zur Herstellung eines flüssigkristallinen Mediums nach einem oder mehreren der Ansprüche 1 bis 13, **dadurch gekennzeichnet, dass** man eine oder mehrere Verbindungen der Formel I mit mindestens einer weiteren mesogenen Verbindung und optional ein oder mehreren Additiven mischt.

18. Verbindungen der Formeln I2-2, I2-3 und I2-4:

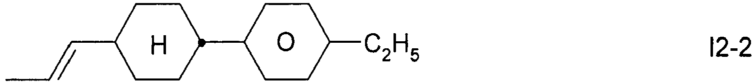

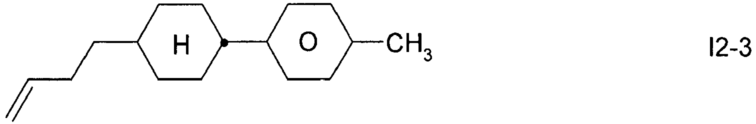

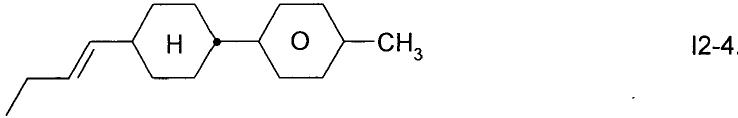

## Claims

1. Liquid-crystalline medium having positive dielectric anisotropy, **characterised in that** it comprises one or more compounds of the formula I, 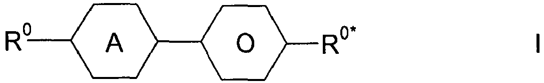 in which
R⁰ and R^{0*} each, independently of one another, denote an alkyl or alkoxy radical having 1 to 15 C atoms, where, in addition, one or more CH₂ groups in these radicals may each be replaced, independently of one another, by -C≡C-, -CF₂O-, -CH=CH-, 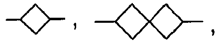 -O-, -CO-O-, -O-CO- in such a way that O atoms are not linked directly to one another, and in which, in addition, one or more H atoms may be replaced by halogen,
ring A denotes a 1,4-cyclohexylene ring or 1,4-cyclohexenylene ring, in which, in addition, one or two CH₂ groups may be replaced by -O- and/or -S-,
and additionally one or more compounds selected from the compounds of the formulae VI-1a to VI-1d, VI-2a to VI-2f, X, XI, XII, XIII-XVI, XIX to XXVII, 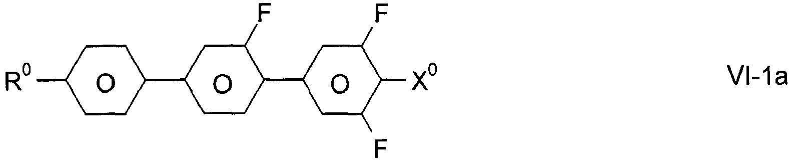 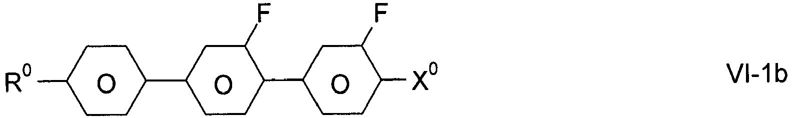 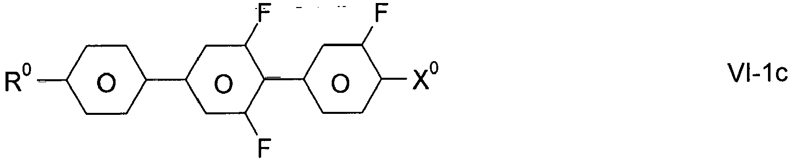 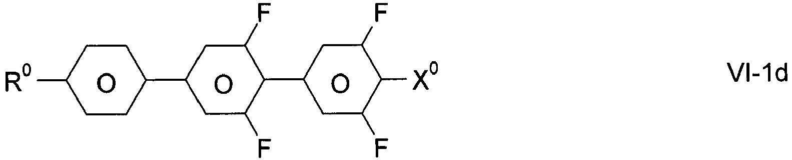 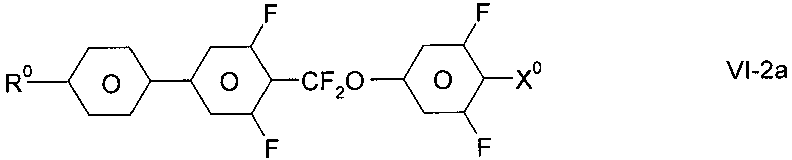 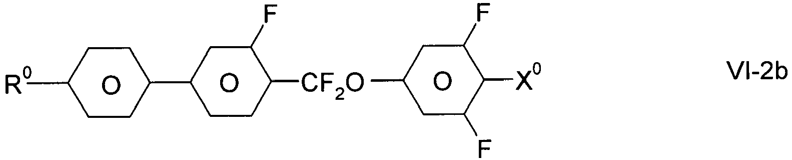 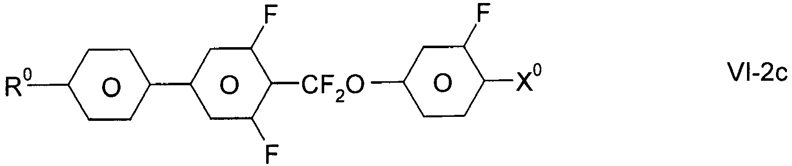 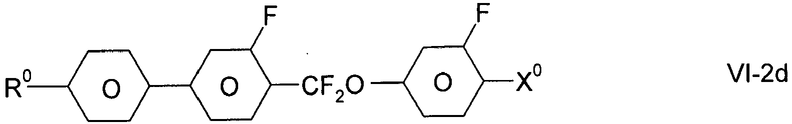 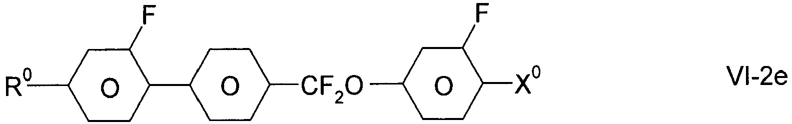 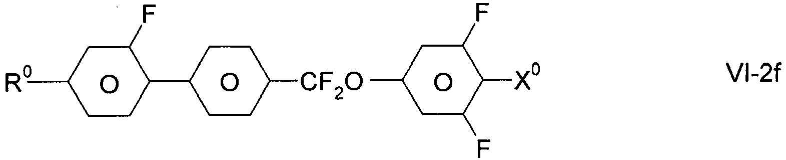 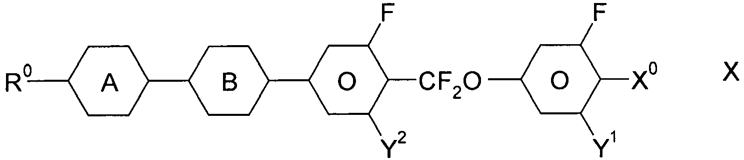 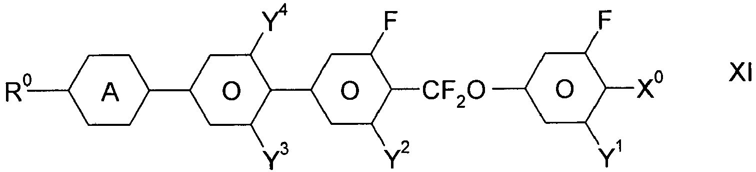 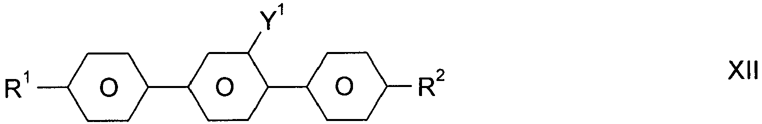 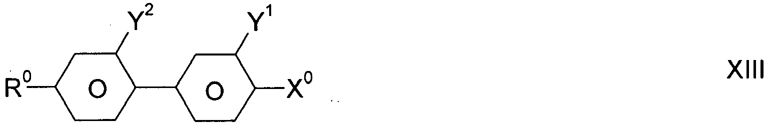 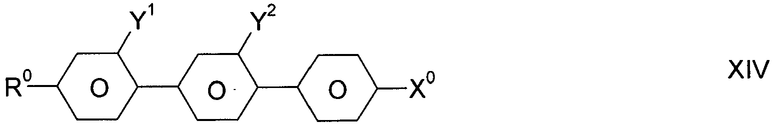 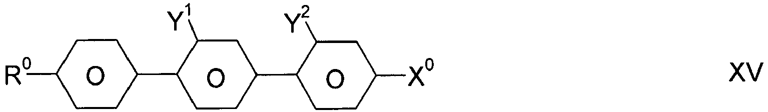 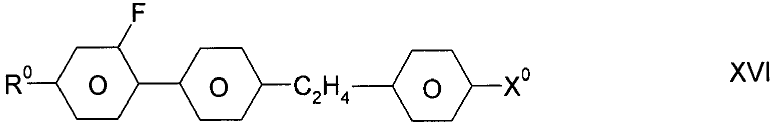 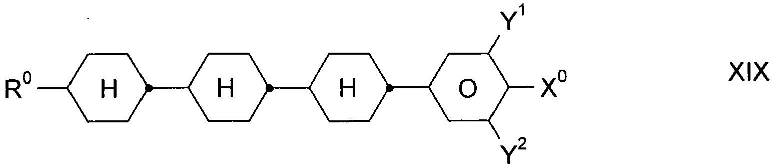 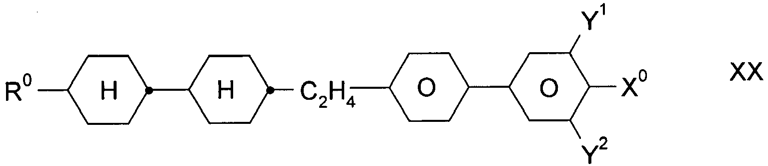 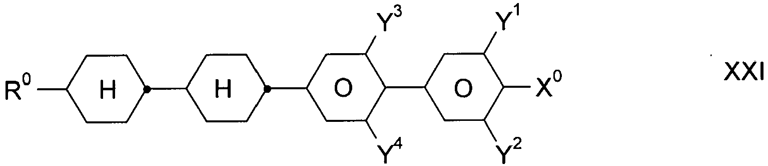 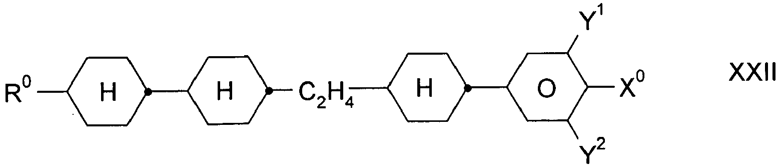 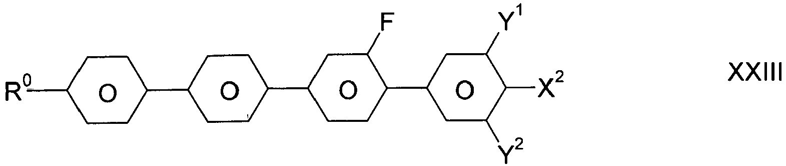 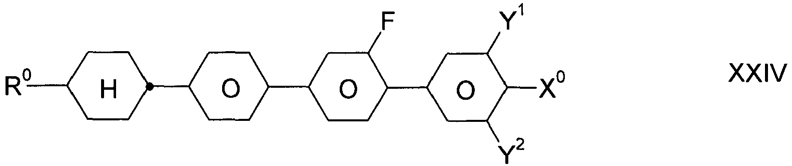 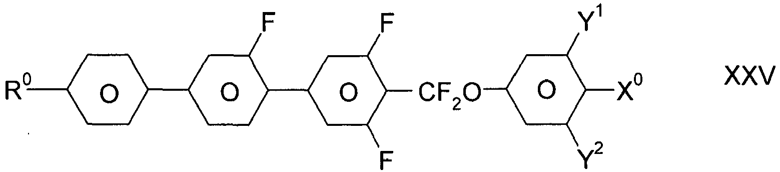 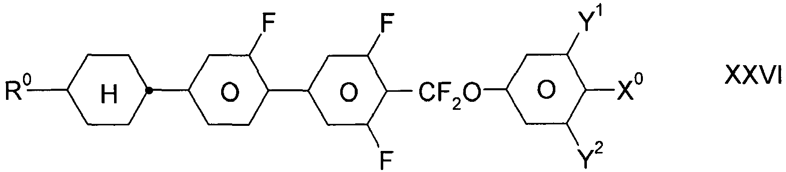 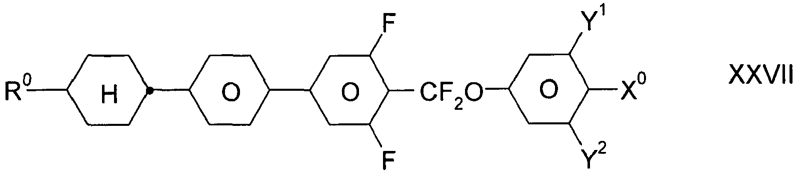 in which
Y¹⁻⁴ each, independently of one another, denote H or F,
X⁰ denotes F, Cl, a mono- or polyfluorinated alkyl or alkoxy radical having 1 to 6 C atoms or a mono- or polyfluorinated alkenyl or alkenyloxy radical having 2 to 6 C atoms, 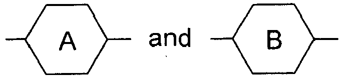 each, independently of one another, denote 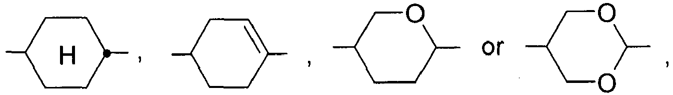
R¹ and R² each, independently of one another, denote n-alkyl, alkoxy, oxaalkyl, fluoroalkyl, alkenyloxy or alkenyl, each having up to 9 C atoms.

2. Liquid-crystalline medium according to Claim 1, **characterised in that** it comprises one or more compounds of the formulae 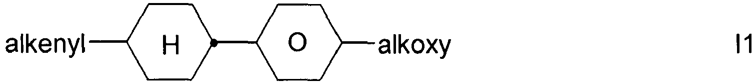 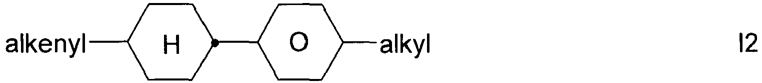 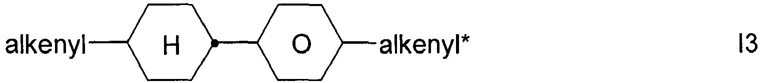 in which
alkenyl and alkenyl* each, independently of one another, denote a straight-chain alkenyl radical having 2 to 6 C atoms,
alkoxy denotes a straight-chain alkoxy radical having 1 to 6 C atoms and
alkyl denotes a straight-chain alkyl radical having 1 to 6 C atoms.

3. Liquid-crystalline medium according to Claim 1 or 2, **characterised in that** it comprises one or more compounds of the formulae

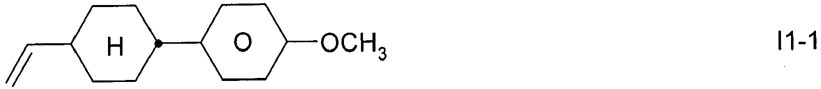

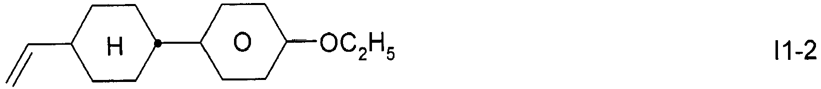

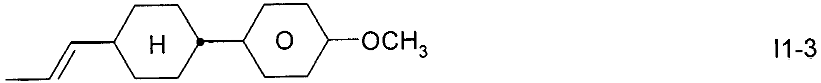

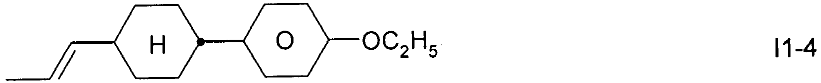

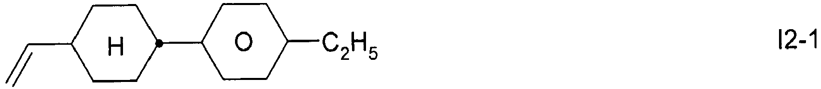

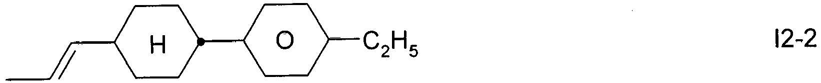

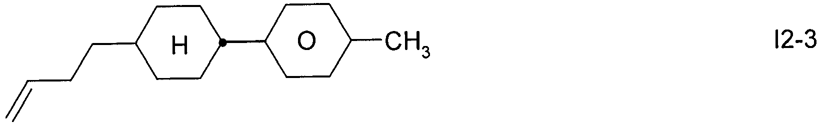

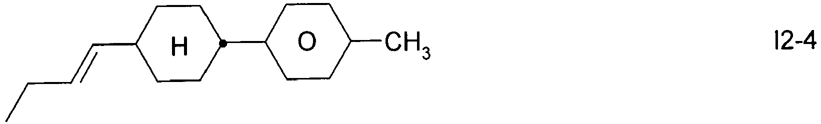

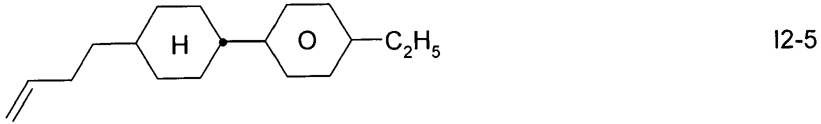

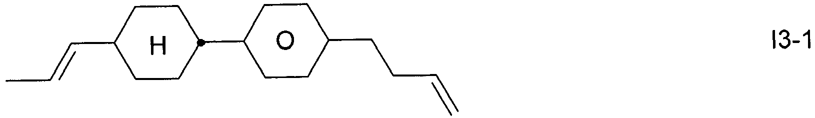

4. Liquid-crystalline medium according to one or more of Claims 1 to 3, **characterised in that** it comprises at least one compound from the group of the compounds of the formulae I2-2, I2-3 and I2-4,

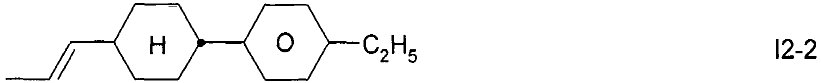

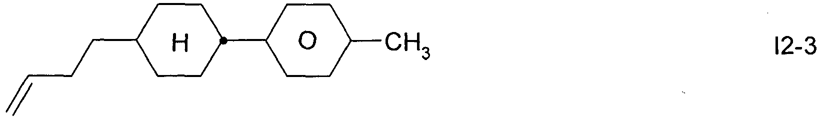

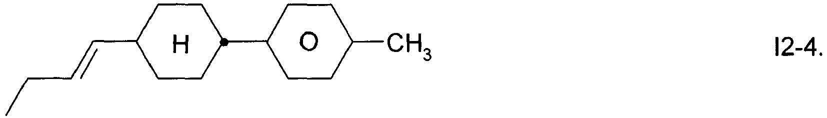

5. Liquid-crystalline medium according to one or more of Claims 1 to 4, **characterised in that** it additionally comprises one or more compounds of the formulae II and/or III, 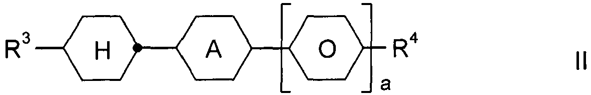 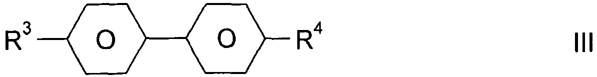 in which
ring A denotes 1,4-phenylene or trans-1,4-cyclohexylene,
a is 0 or 1, where, in the case where a = 0, ring A denotes trans-1,4-cyclohexylene,
R³ denotes alkenyl having 2 to 9 C atoms,
and
R⁴ has the meanings indicated for R⁰ in Claim 1.

6. Liquid-crystalline medium according to one or more of Claims 1 to 5, **characterised in that** it additionally comprises one or more compounds selected from the compounds of the formulae 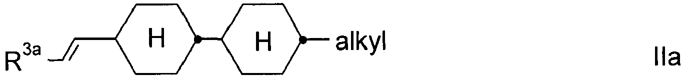 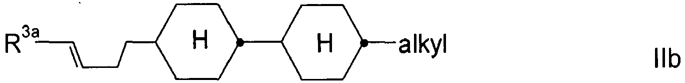 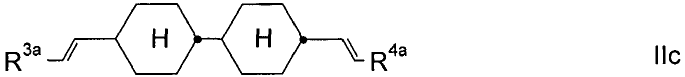 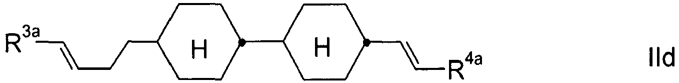 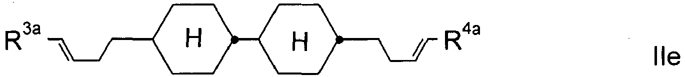 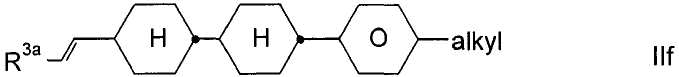 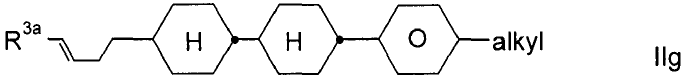 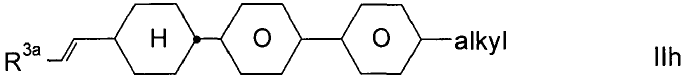 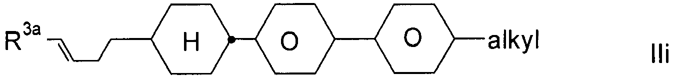 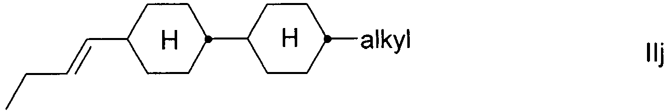 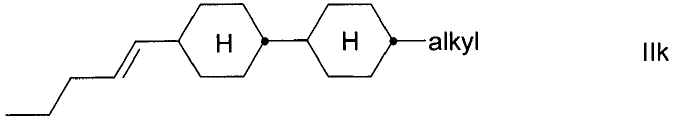 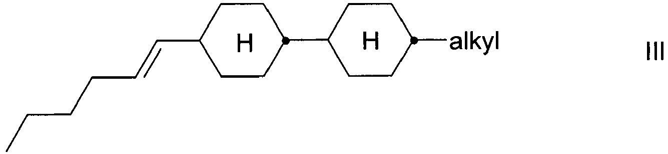 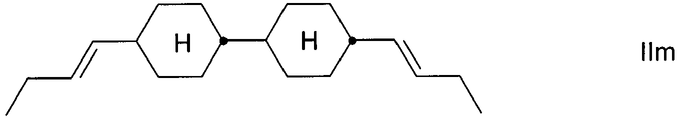 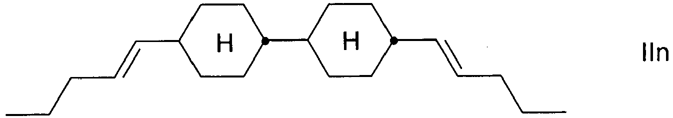 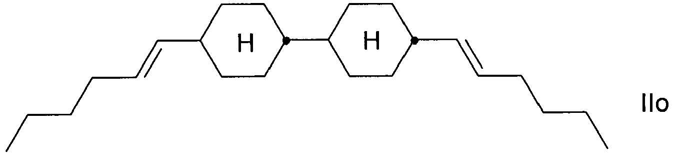 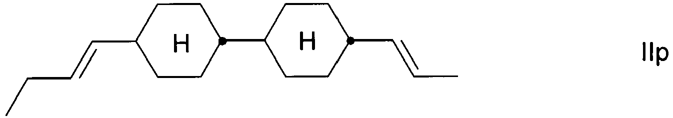 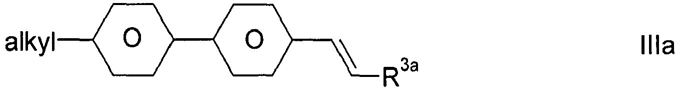 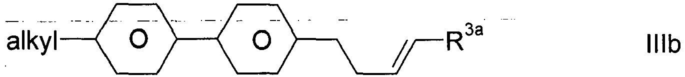 in which R^{3a} and R^{4a} each, independently of one another, denote H, CH₃, C₂H₅ or C₃H₇, and "alkyl" denotes a straight-chain alkyl group having 1 to 8 C atoms.

7. Liquid-crystalline medium according to one or more of Claims 1 to 6, **characterised in that** it additionally comprises one or more compounds selected from the compounds of the formulae IV to VIII, 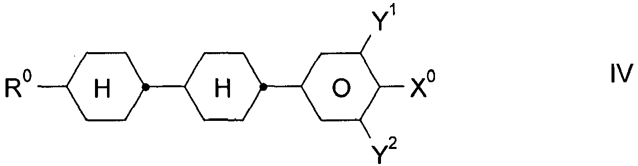 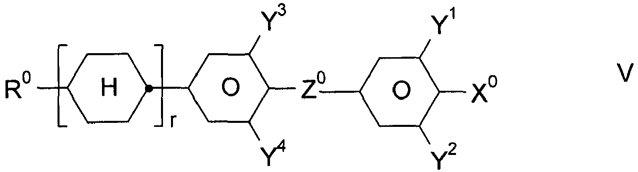 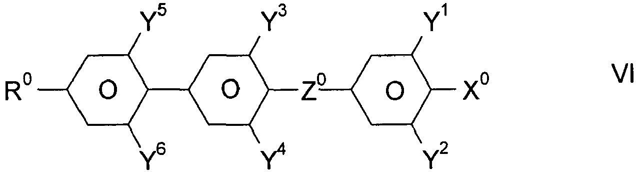 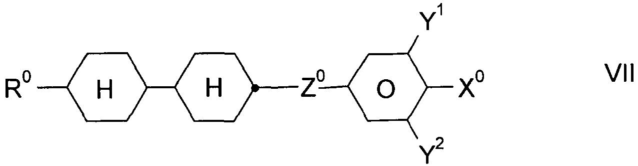 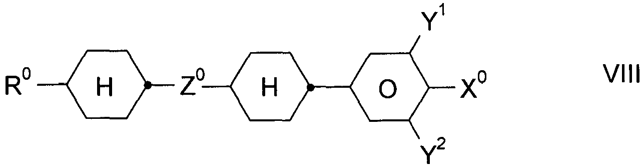 in which
R⁰ denotes an alkyl or alkoxy radical having 1 to 15 C atoms, where, in addition, one or more CH₂ groups in these radicals may each be replaced, independently of one another, by -C≡C-, -CF₂O-, -CH=CH-, 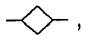 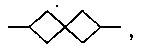 -O-, -CO-O- or -O-CO- in such a way that O atoms are not linked directly to one another, and in which, in addition, one or more H atoms may be replaced by halogen,
X⁰ denotes F, Cl, a mono- or polyfluorinated alkyl or alkoxy radical having 1 to 6 C atoms or a mono- or polyfluorinated alkenyl or alkenyloxy radical having 2 to 6 C atoms,
Y¹⁻⁶ each, independently of one another, denote H or F,
Z⁰ denotes -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- or -OCF₂-, in the formulae V and VI also a single bond, and
r denotes 0 or 1.

8. Liquid-crystalline medium according to one or more of Claims 1 to 7, **characterised in that** it additionally comprises one or more compounds selected from the compounds of the formulae Va to Vj, 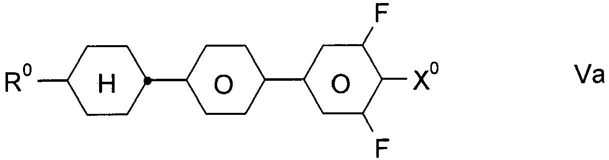 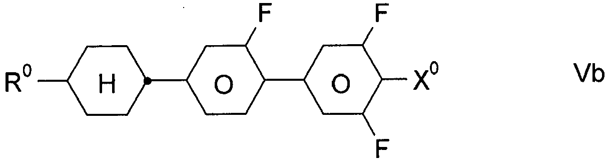 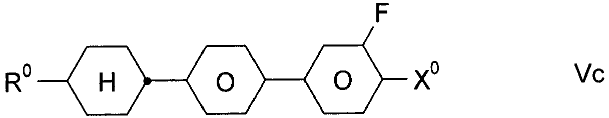 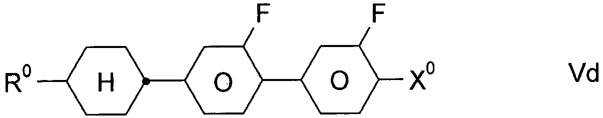 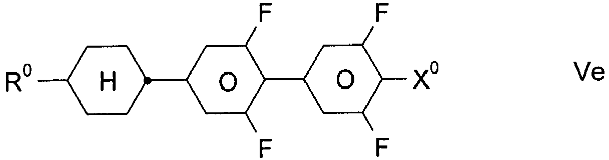 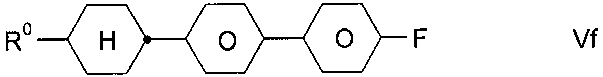 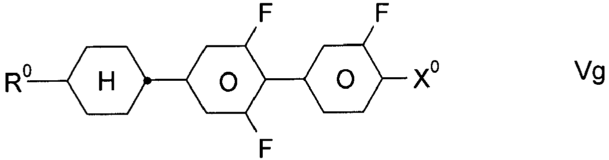 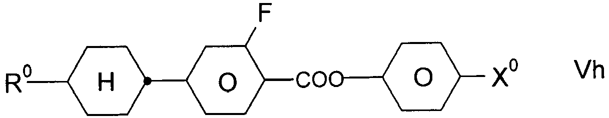 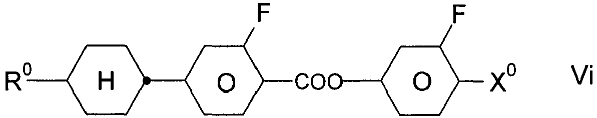 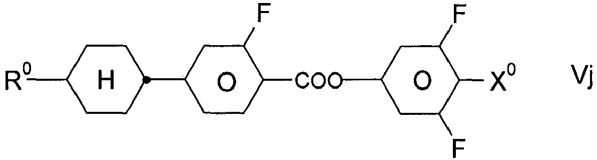 in which R⁰ and X⁰ have the meanings indicated in Claim 1.

9. Liquid-crystalline medium according to one or more of Claims 1 to 8, **characterised in that** the medium additionally comprises one or more compounds of the formulae D1, D2 and/or D3 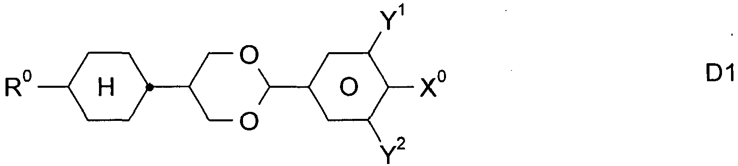 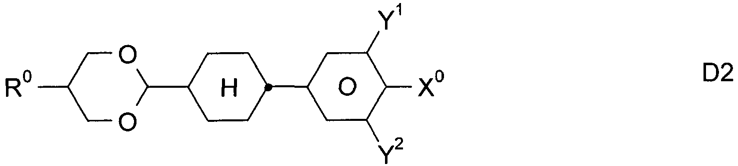 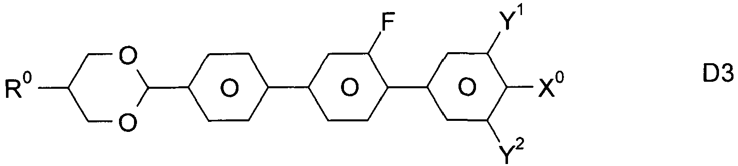 in which Y¹, Y², R⁰ and X⁰ have the meanings indicated in Claim 1.

10. Liquid-crystalline medium according to one or more of Claims 1 to 9, **characterised in that** it comprises one or more polymerisable compounds selected from the compounds of the formula M R^{Ma}-A^{M1}-(Z^{M1}-A^{M2})ₘ₁-R^{Mb} M in which the individual radicals have the following meaning:
R^{Ma} and R^{Mb} each, independently of one another, denote P, P-Sp-, H, halogen, SF₅, NO₂, an alkyl, alkenyl or alkynyl group, where at least one of the radicals R^{Ma} and R^{Mb} preferably denotes or contains a group P or P-Sp-,
P denotes a polymerisable group,
Sp denotes a spacer group or a single bond,
A^{M1} and A^{M2} each, independently of one another, denote an aromatic, heteroaromatic, alicyclic or heterocyclic group, preferably having 4 to 25 ring atoms, preferably C atoms, which may also include or contain fused rings, and which may optionally be mono- or polysubstituted by L,
L denotes P, P-Sp-, OH, CH₂OH F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-, preferably P, P-Sp-, H, OH, CH₂OH halogen, SF₅, NO₂, an alkyl, alkenyl or alkynyl group,
Y¹ denotes halogen,
Z^{M1} denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-, -COO-, -OCO-CH=CH-, CR⁰R⁰⁰ or a single bond,
R⁰ and R⁰⁰ each, independently of one another, denote H or alkyl having 1 to 12 C atoms,
R^{x} denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O-in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms,
m1 denotes 0, 1, 2, 3 or 4, and
n1 denotes 1, 2, 3 or 4,
where at least one, preferably one, two or three, particularly preferably one or two, from the group R^{Ma}, R^{Mb} and the substituents L present denotes a group P or P-Sp- or contains at least one group P or P-Sp-.

11. Liquid-crystalline medium according to one or more of Claims 1 to 10, **characterised in that** it comprises one or more compounds selected from the polymerisable compounds of the formulae RM-1 to RM-74

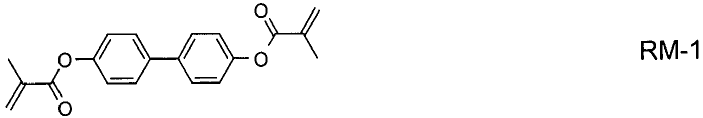

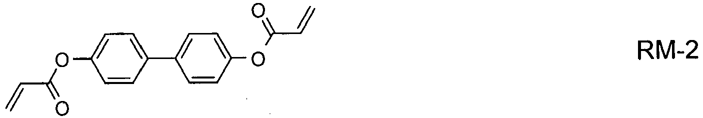

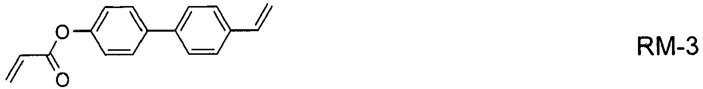

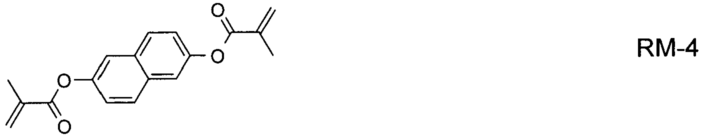

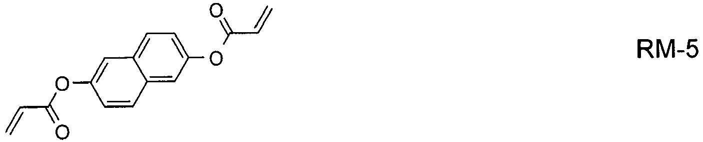

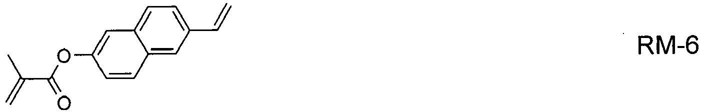

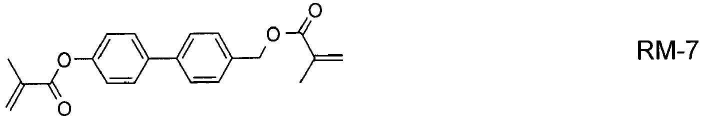

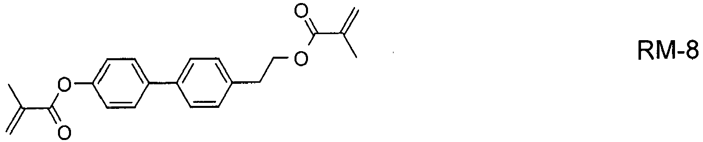

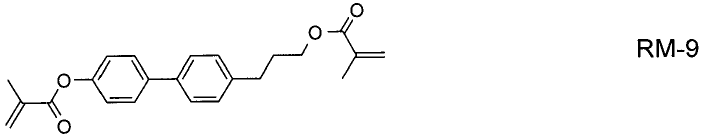

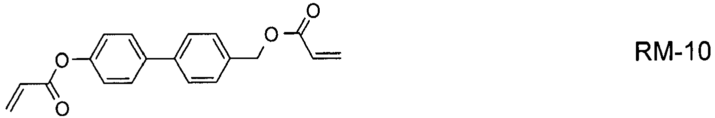

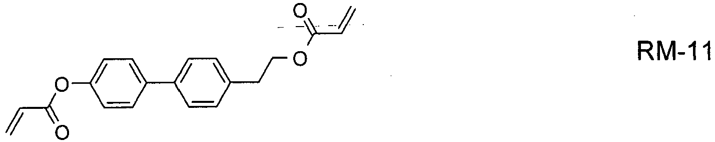

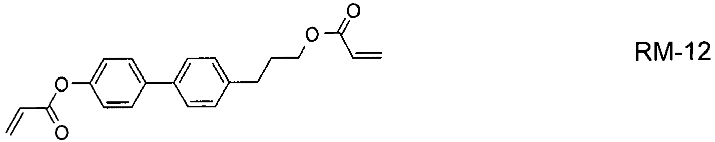

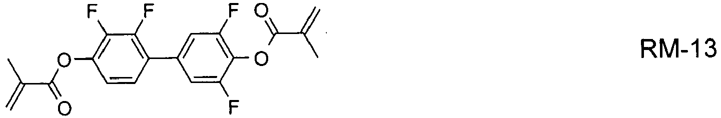

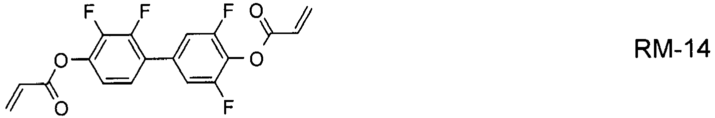

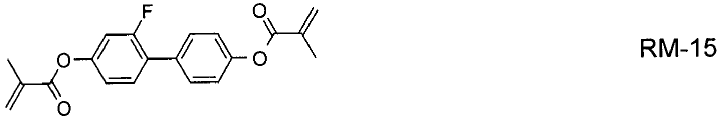

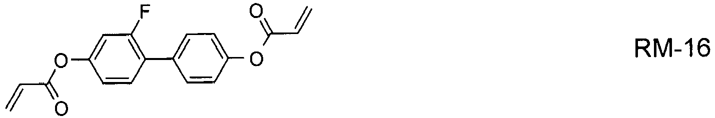

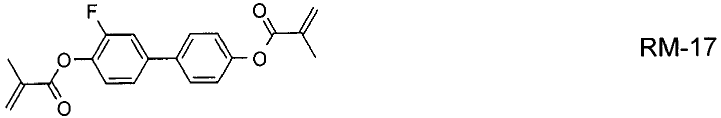

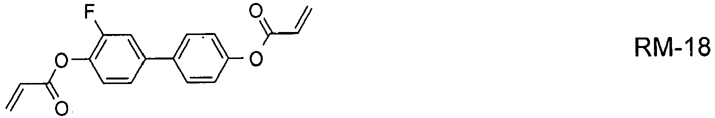

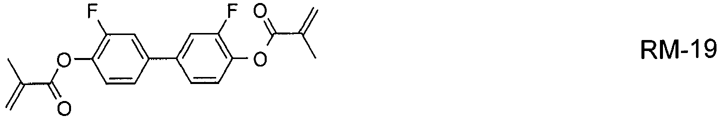

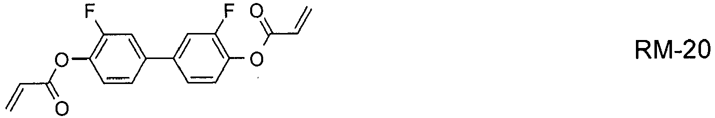

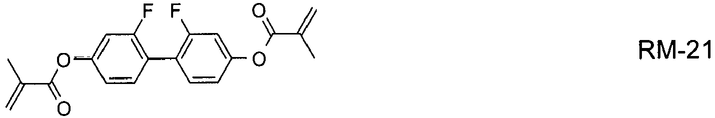

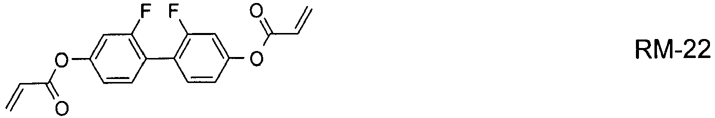

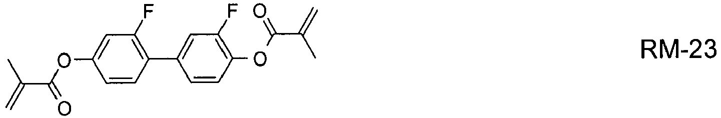

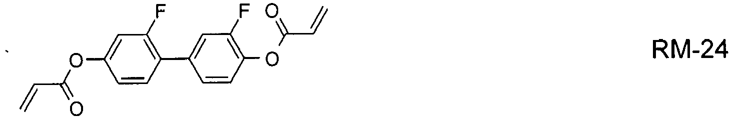

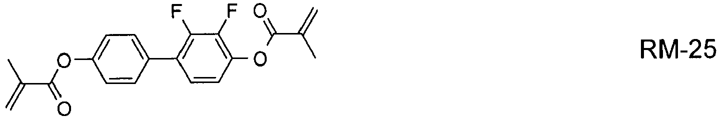

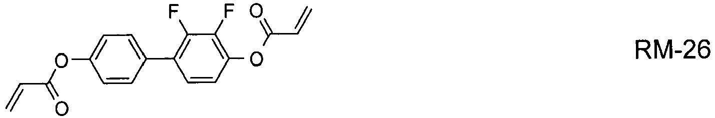

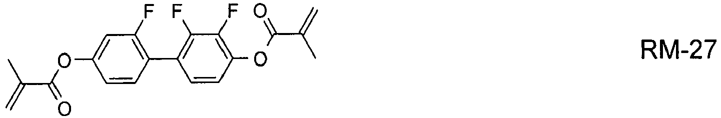

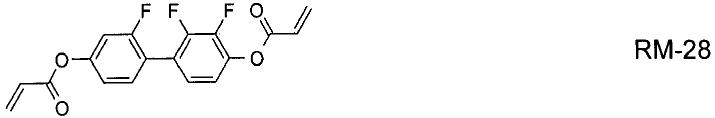

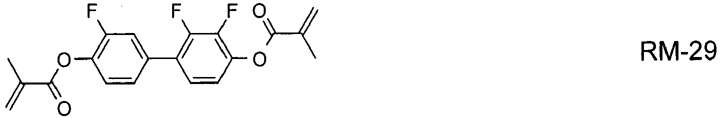

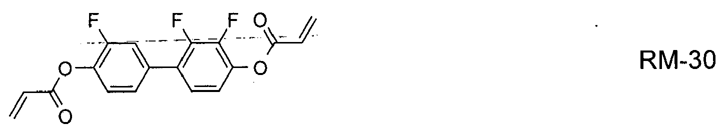

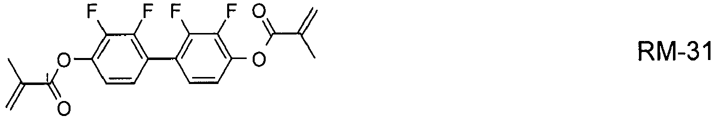

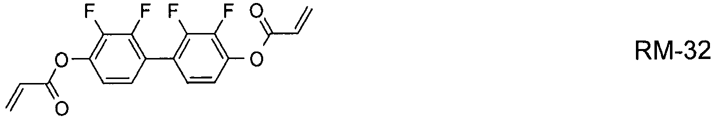

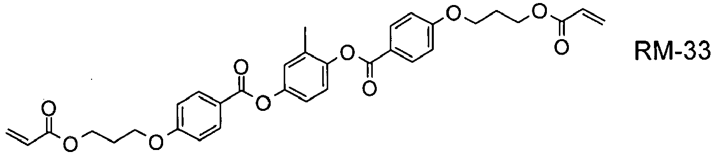

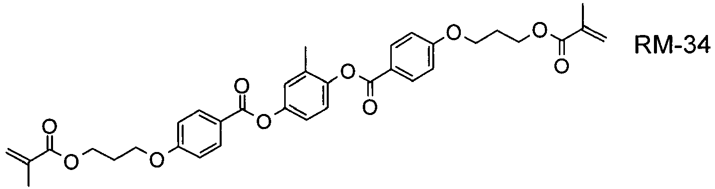

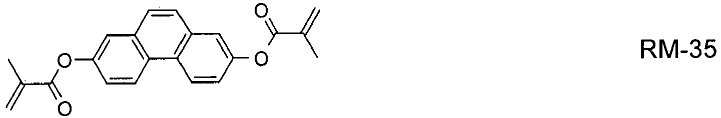

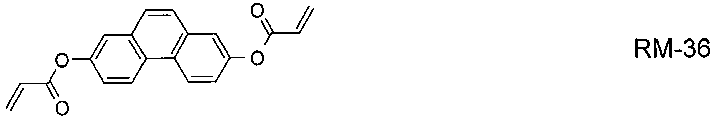

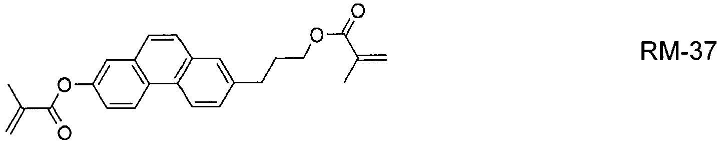

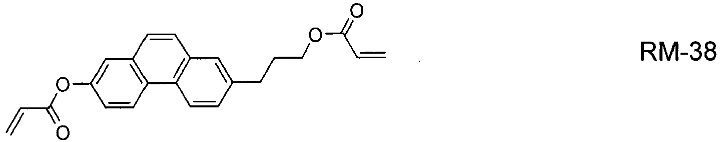

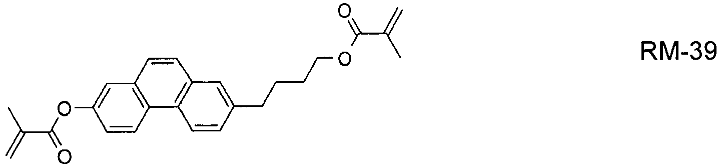

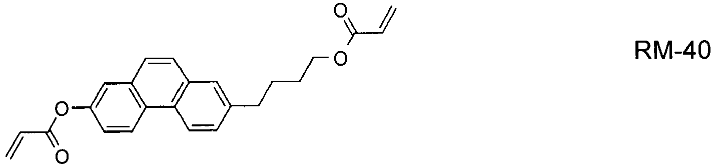

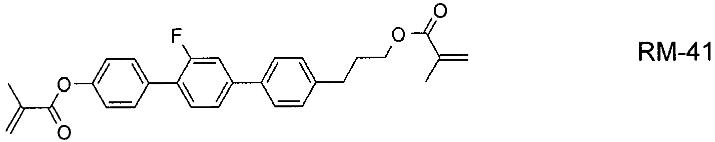

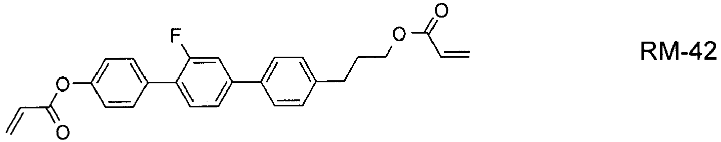

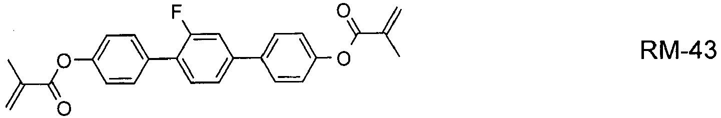

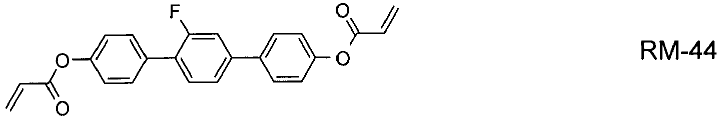

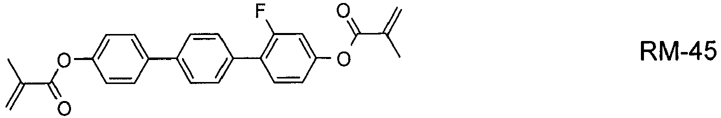

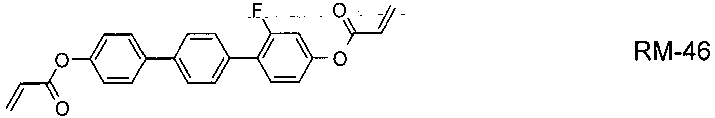

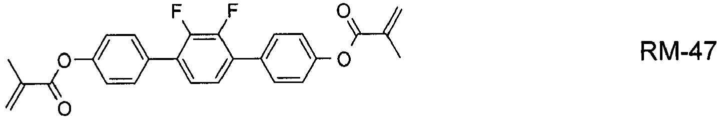

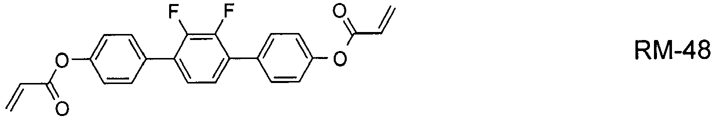

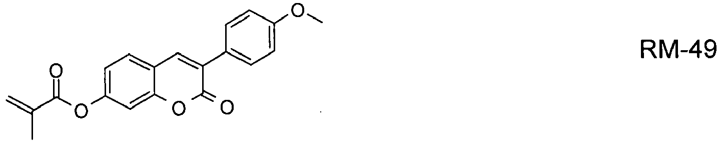

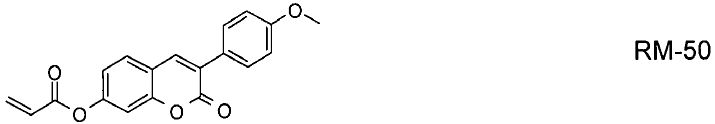

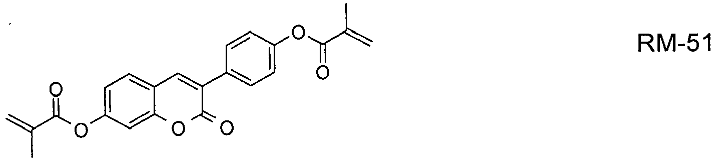

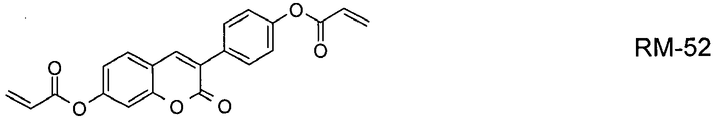

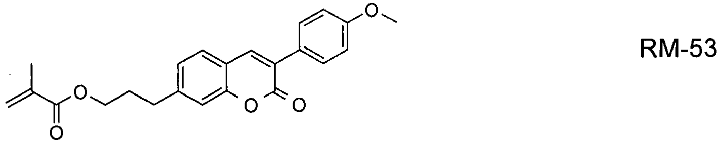

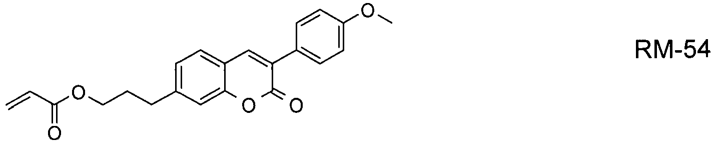

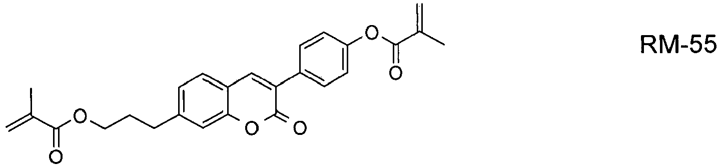

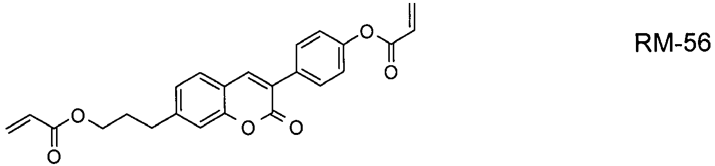

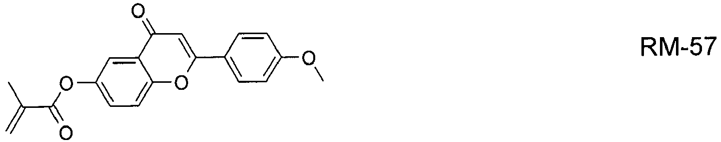

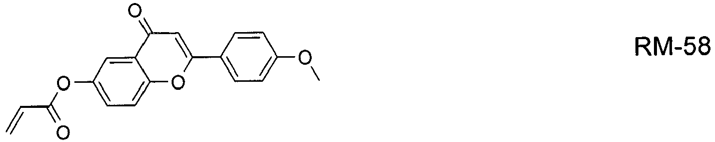

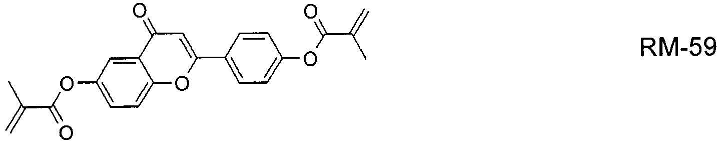

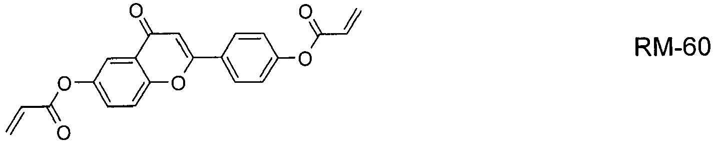

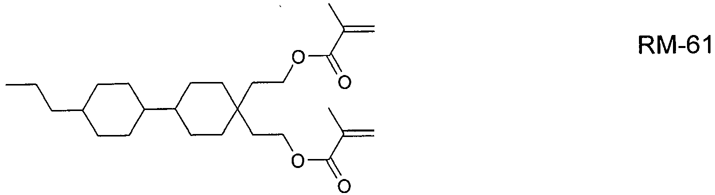

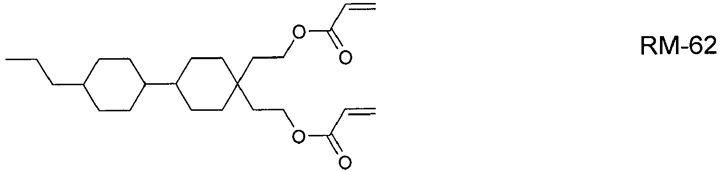

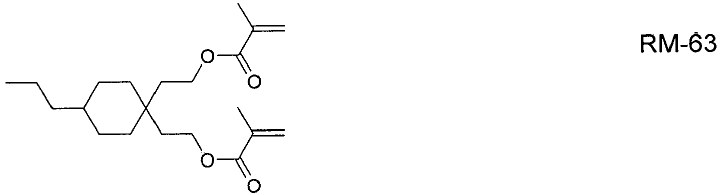

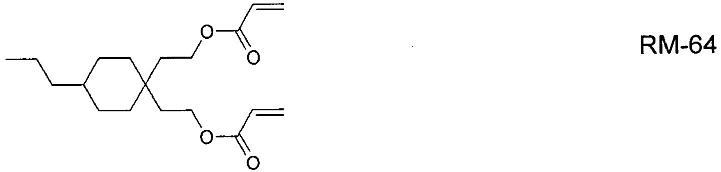

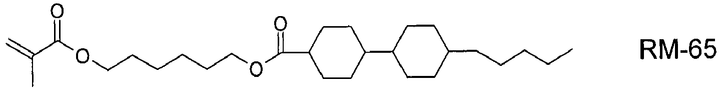

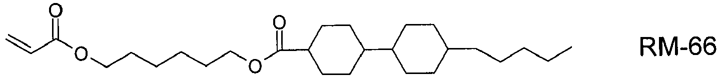

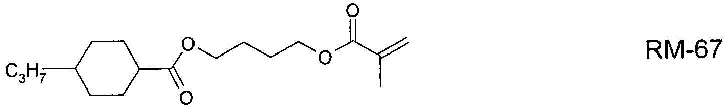

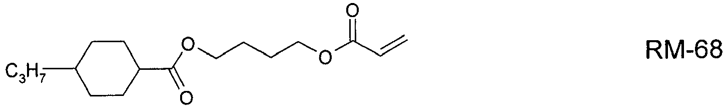

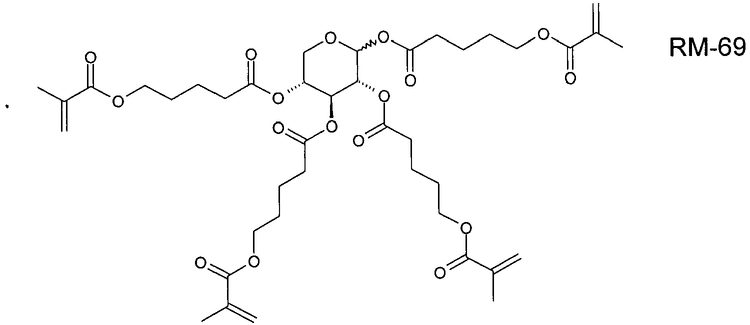

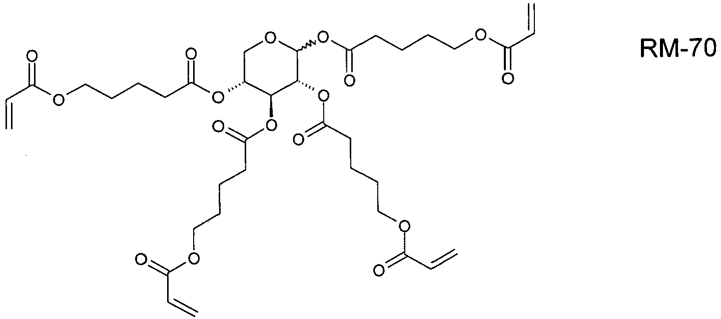

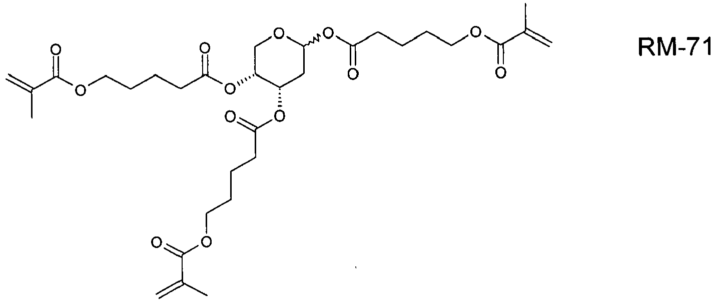

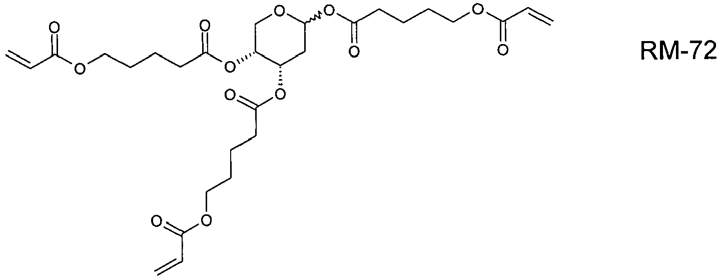

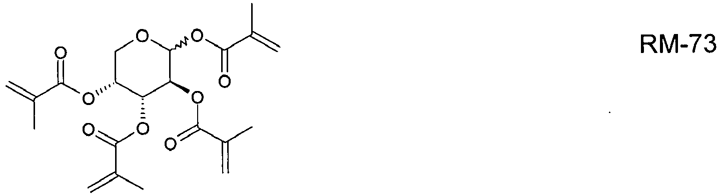

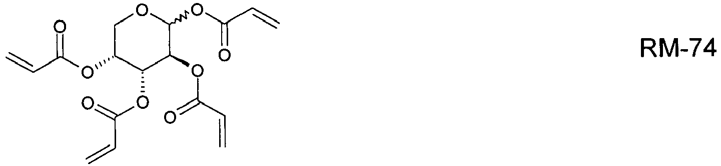

12. Liquid-crystalline medium according to one or more of Claims 1 to 11, **characterised in that** it comprises 1-25% by weight of compounds of the formula I.

13. Liquid-crystalline medium according to one or more of Claims 1 to 12, **characterised in that** it additionally comprises one or more UV stabilisers and/or antioxidants.

14. Use of a liquid-crystalline medium according to one or more of Claims 1 to 13 for electro-optical purposes.

15. Use of a liquid-crystalline medium according to Claim 14 in TN-TFT, OCB, IPS, FFS, positive VA, PS-TN-TFT, PS-IPS, PS-FFS displays.

16. Electro-optical liquid-crystal display containing a liquid-crystalline medium according to one or more of Claims 1 to 13.

17. Process for the preparation of a liquid-crystalline medium according to one or more of Claims 1 to 13, **characterised in that** one or more compounds of the formula I are mixed with at least one further meso-genic compound and optionally one or more additives.

18. Compounds of the formulae I2-2, I2-3 and I2-4:

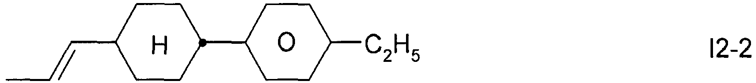

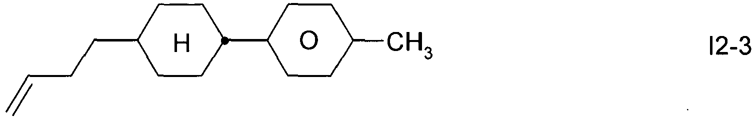

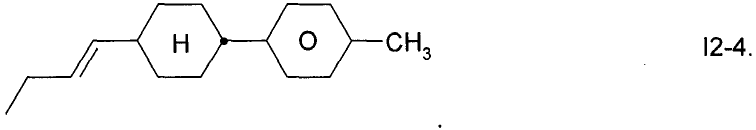

## Revendications

1. Milieu cristallin liquide présentant une anisotropie diélectrique positive, **caractérisé en ce qu'**il comprend un ou plusieurs composé(s) de la formule I : 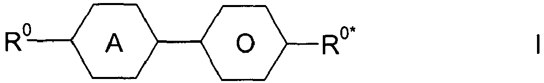 dans laquelle :
R⁰ et R^{0*} représentent chacun, indépendamment l'un de l'autre, un radical alkyle ou alcoxy comportant 1 à 15 atome(s) de C, où, en outre, un ou plusieurs groupe(s) CH₂ dans ces radicaux peut/peuvent chacun être remplacé(s), indépendamment les uns des autres, par -C≡C-, -CF₂O-, -CH=CH-, 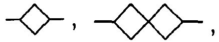 -O-, -CO-O-, -O-CO- de telle sorte que des atomes de O ne soient pas liés directement les uns aux autres, et où, en outre, un ou plusieurs atome(s) de H peut/peuvent être remplacé(s) par halogène,
cycle A représente un cycle 1,4-cyclohexylène ou un cycle 1,4-cyclohexenylène, où, en outre, un ou deux groupe(s) CH₂ peut/peuvent être remplacé(s) par -O- et/ou -S-,
et de façon additionnelle, un ou plusieurs composé(s) choisi(s) parmi les composés des formules VI-1a à VI-1 d, VI-2a à VI-2f, X, XI, XII, XIII-XVI, XIX à XXVII : 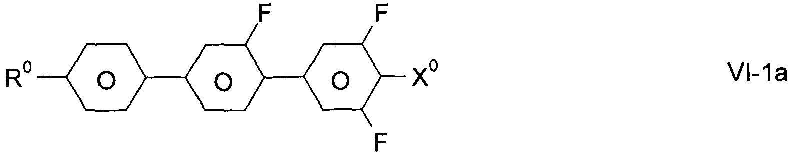 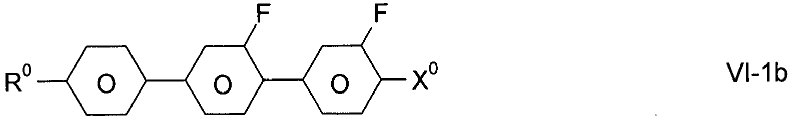 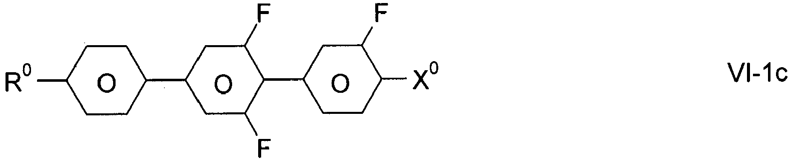 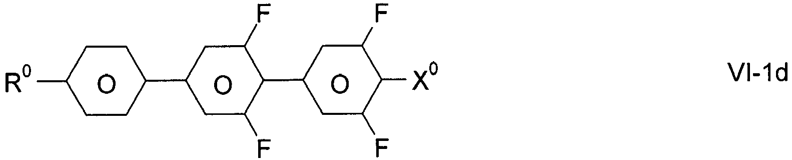 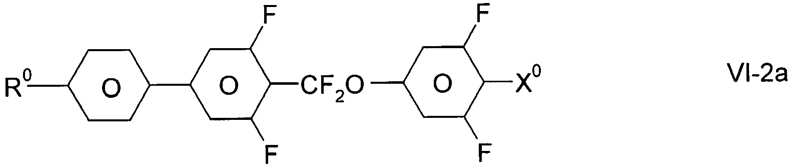 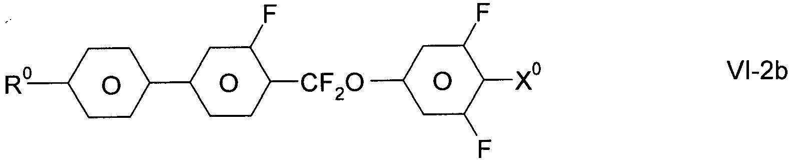 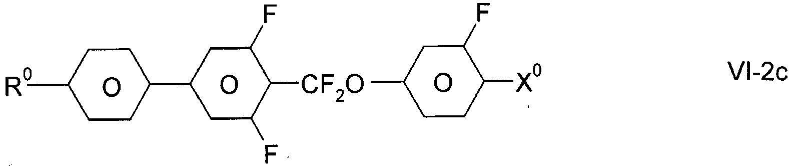 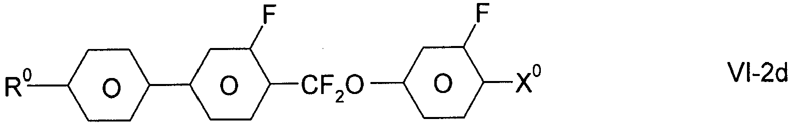 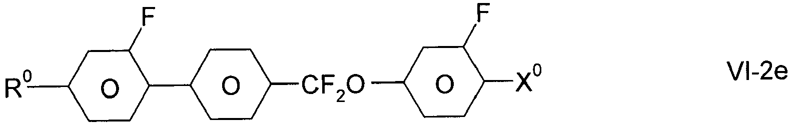 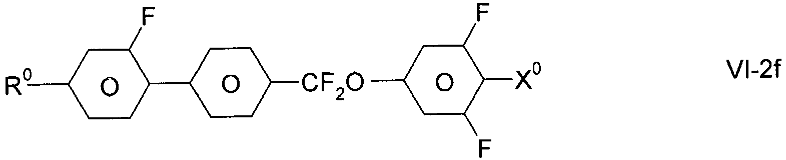 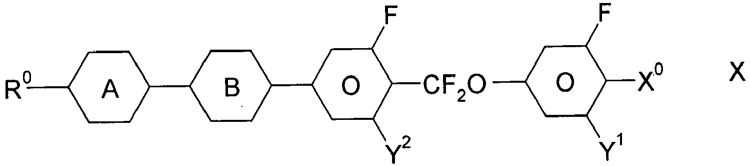 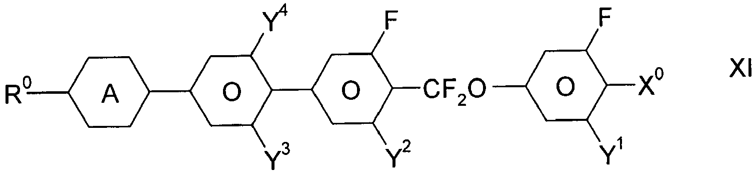 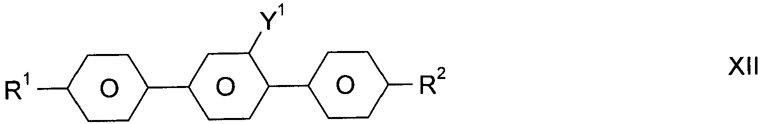 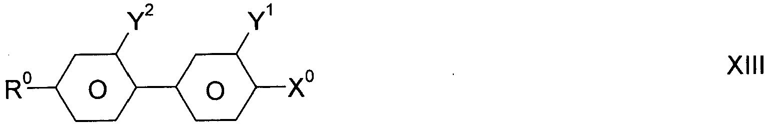 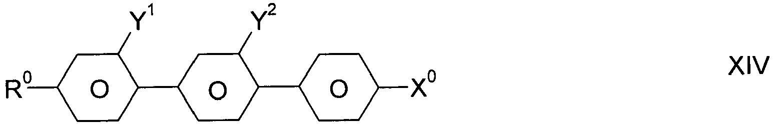 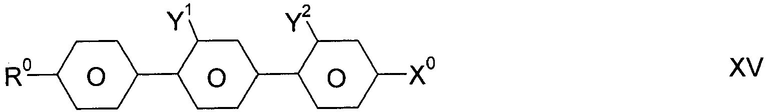 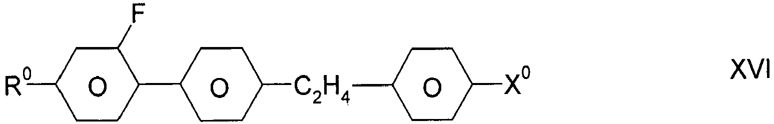 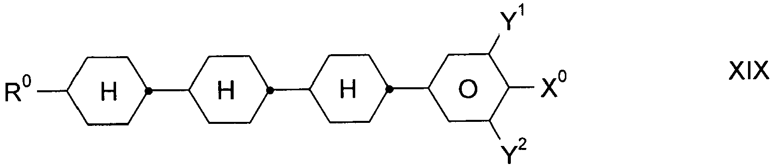 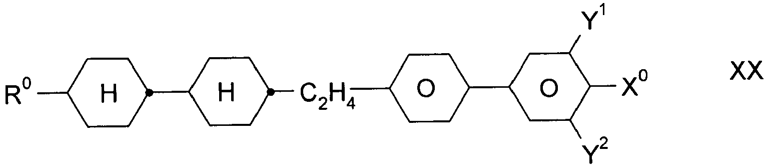 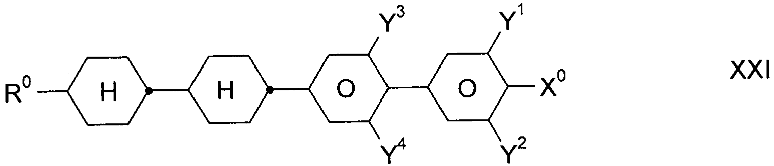 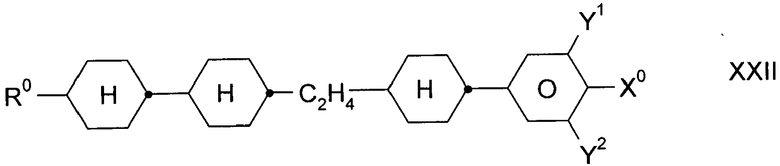 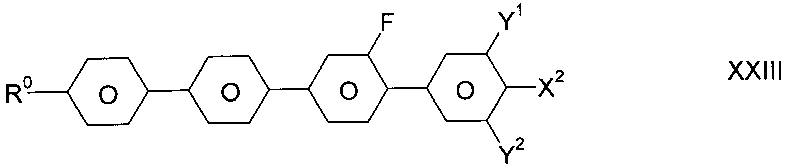 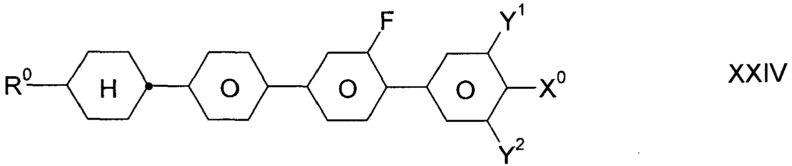 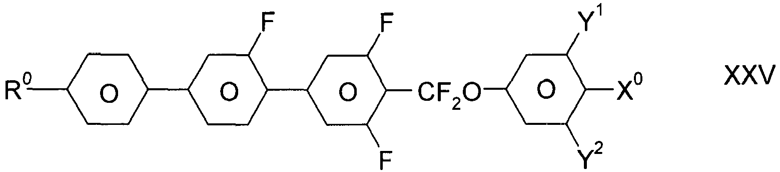 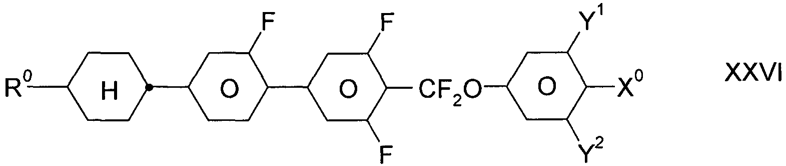 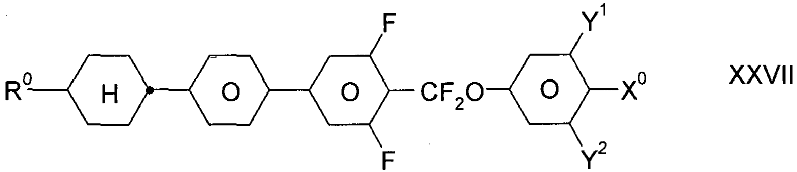 dans lesquelles :
Y¹⁻⁴ représentent chacun, indépendamment les uns des autres, H ou F,
X⁰ représente F, Cl, un radical alkyle ou alcoxy monofluoré ou polyfluoré comportant 1 à 6 atome(s) de C ou un radical alkényle ou alkényloxy monofluoré ou polyfluoré comportant 2 à 6 atomes de C, 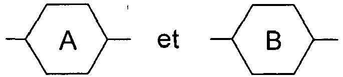 représentent chacun, indépendamment l'un de l'autre, 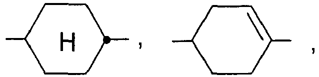 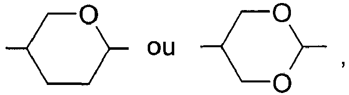
R¹ et R² représentent chacun, indépendamment l'un de l'autre, n-alkyle, alcoxy, oxaalkyle, fluoroalkyle, alkényloxy ou alkényle, dont chacun comporte jusqu'à 9 atomes de C.

2. Milieu cristallin liquide selon la revendication 1, **caractérisé en ce qu'**il comprend un ou plusieurs composé(s) des formules : 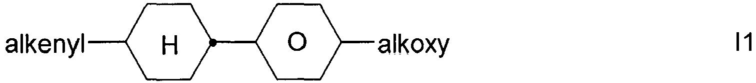 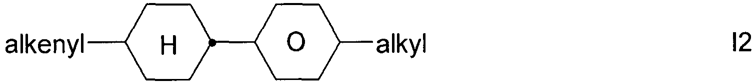 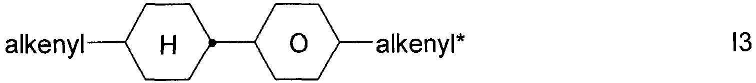 dans lesquelles :
alkenyl et alkenyl* représentent chacun, indépendamment l'un de l'autre, un radical alkényle en chaîne droite comportant 2 à 6 atomes de C,
alkoxy représente un radical alcoxy en chaîne droite comportant 1 à 6 atome(s) de C,
et
alkyl représente un radical alkyle en chaîne droite comportant 1 à 6 atome(s) de C.

3. Milieu cristallin liquide selon la revendication 1 ou 2, **caractérisé en ce qu'**il comprend un ou plusieurs composé(s) des formules :

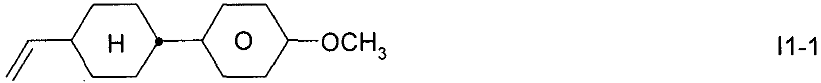

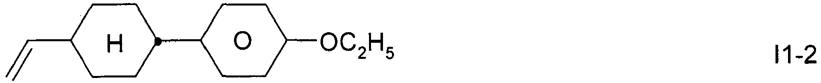

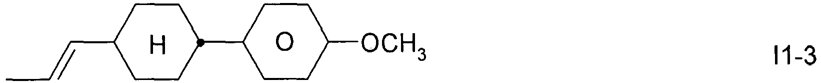

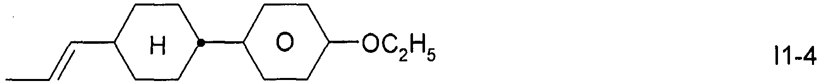

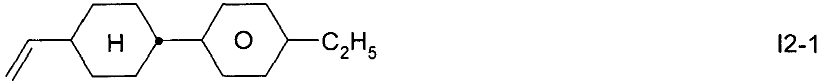

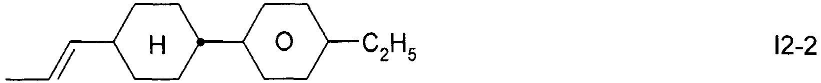

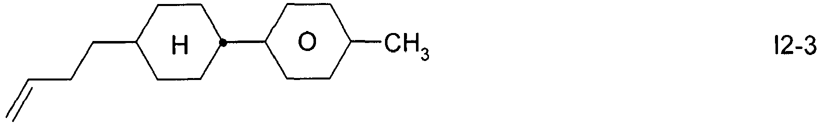

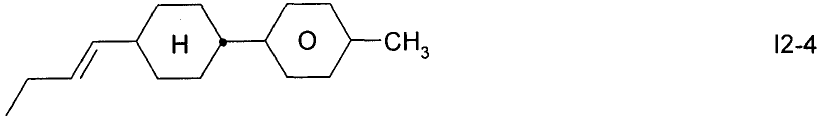

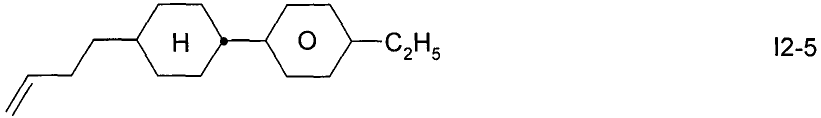

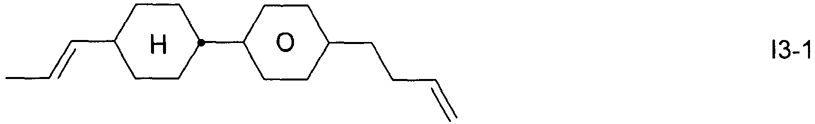

4. Milieu cristallin liquide selon une ou plusieurs des revendications 1 à 3, **caractérisé en ce qu'**il comprend au moins un composé pris parmi le groupe des composés des formules I2-2, I2-3 et I2-4 :

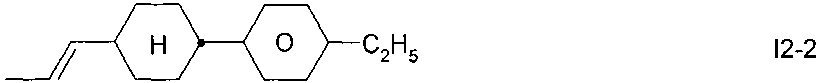

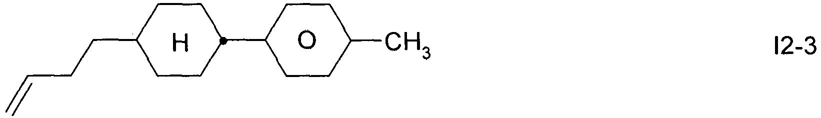

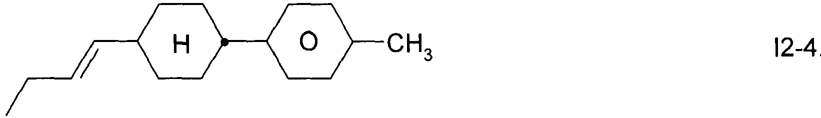

5. Milieu cristallin liquide selon une ou plusieurs des revendications 1 à 4, **caractérisé en ce qu'**il comprend de façon additionnelle un ou plusieurs composé(s) des formules II et/ou III : 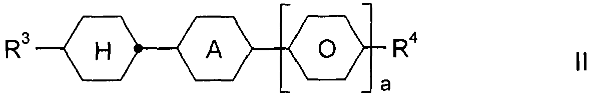 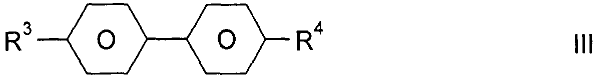 dans lesquelles:
cycle A représente 1,4-phénylène ou trans-1,4-cyclohexylène,
a est 0 ou 1, où, dans le cas où a = 0, cycle A représente trans-1,4-cyclohexylène,
R³ représente alkényle comportant 2 à 9 atomes de C,
et
R⁴ présente les significations indiquées pour R⁰ selon la revendication 1.

6. Milieu cristallin liquide selon une ou plusieurs des revendications 1 à 5, **caractérisé en ce qu'**il comprend de façon additionnelle un ou plusieurs composé(s) choisi(s) parmi les composés des formules : 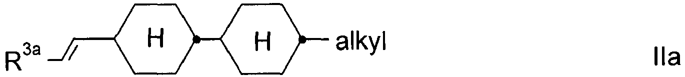 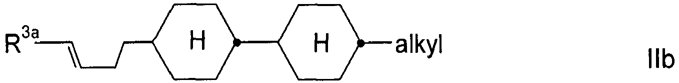 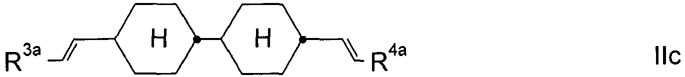 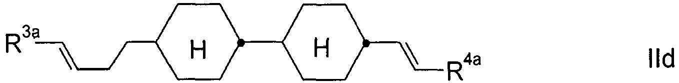 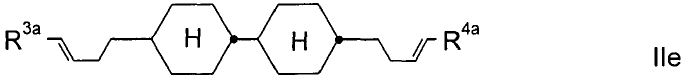 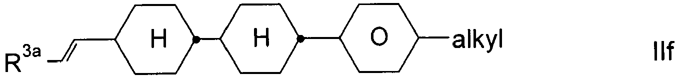 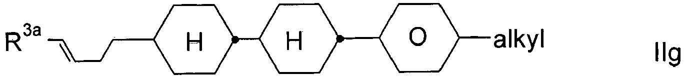 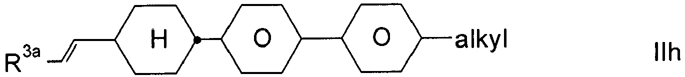 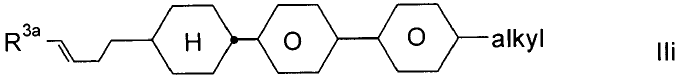 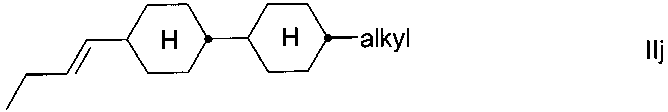 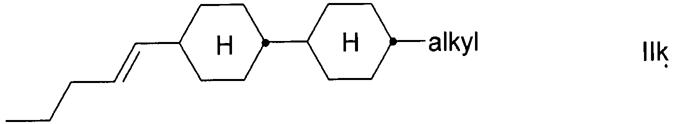 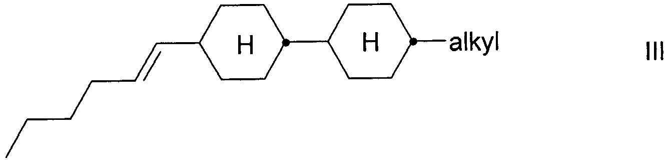 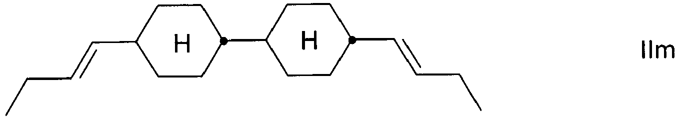 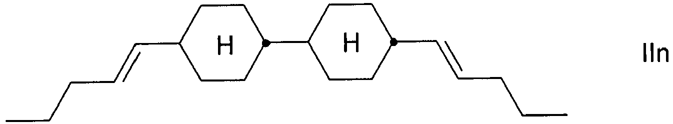 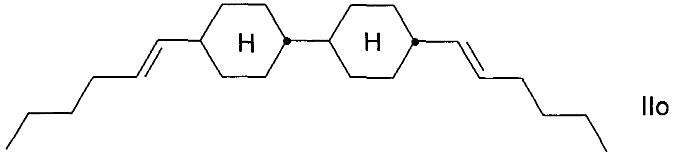 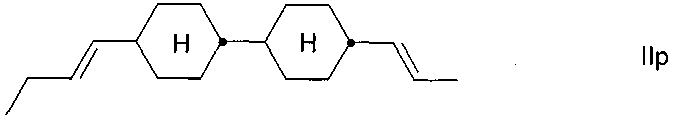 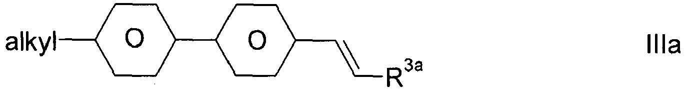 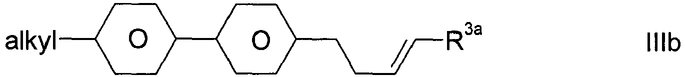 dans lesquelles R^{3a} et R^{4a} représentent chacun, indépendamment l'un de l'autre, H, CH₃, C₂H₅ ou C₃H₇, et "alkyl" représente un groupe alkyle en chaîne droite comportant 1 à 8 atome(s) de C.

7. Milieu cristallin liquide selon une ou plusieurs des revendications 1 à 6, **caractérisé en ce qu'**il comprend de façon additionnelle un ou plusieurs composé(s) choisi(s) parmi les composés des formules IV à VIII : 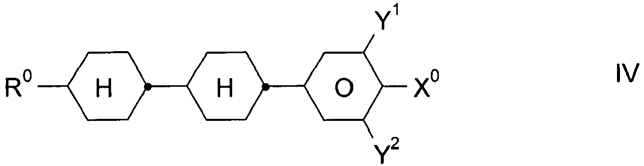 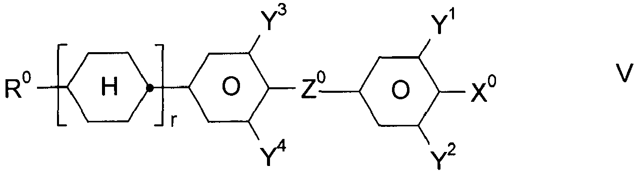 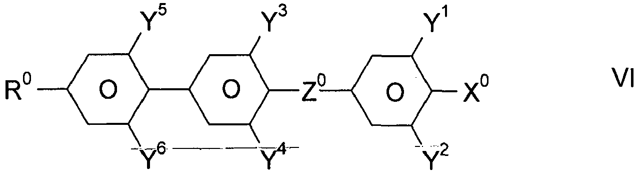 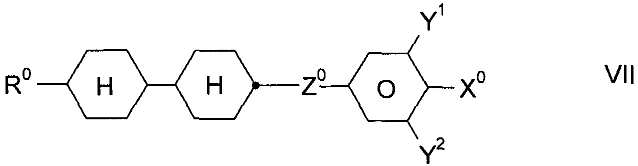 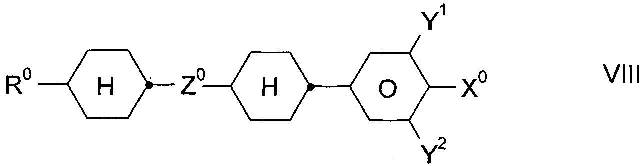 dans lesquelles :
R⁰ représente un radical alkyle ou alcoxy comportant 1 à 15 atome(s) de C, où, en outre, un ou plusieurs groupe(s) CH₂ dans ces radicaux peut/peuvent chacun être remplacé(s), indépendamment les uns des autres, par -C≡C-, -CF₂O-, -CH=CH-, 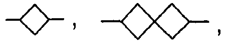 -O-, -CO-O- ou -O-CO- de telle sorte que des atomes de O ne soient pas liés directement les uns aux autres, et où, en outre, un ou plusieurs atome(s) de H peut/peuvent être remplacé(s) par halogène,
X⁰ représente F, CI, un radical alkyle ou alcoxy monofluoré ou polyfluoré comportant 1 à 6 atome(s) de C ou un radical alkényle ou alkényloxy monofluoré ou polyfluoré comportant 2 à 6 atomes de C,
Y¹⁻⁶ représentent chacun, indépendamment les uns des autres, H ou F,
Z⁰ représente -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- ou -OCF₂-, dans les formules V et VI également une liaison simple, et
r représente 0 ou 1.

8. Milieu cristallin liquide selon une ou plusieurs des revendications 1 à 7, **caractérisé en ce qu'**il comprend de façon additionnelle un ou plusieurs composé(s) choisi(s) parmi les composés des formules Va à Vj: 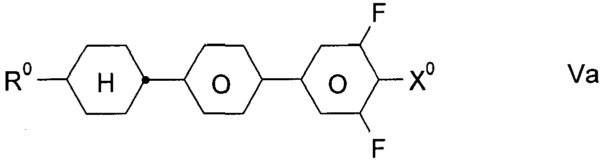 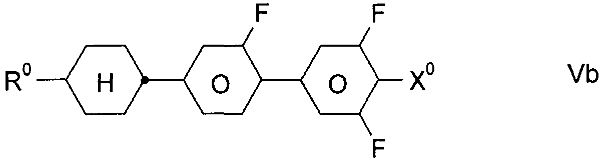 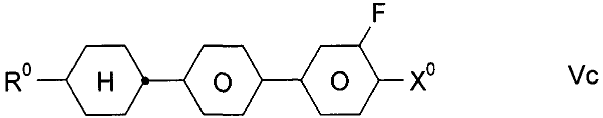 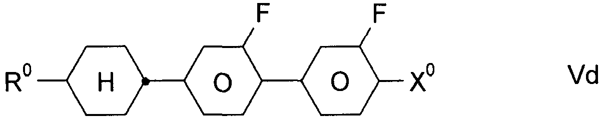 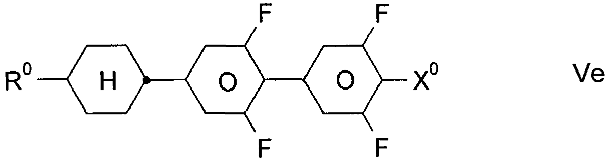 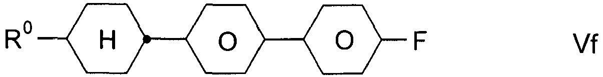 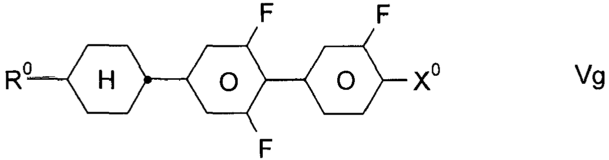 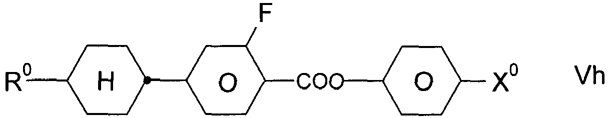 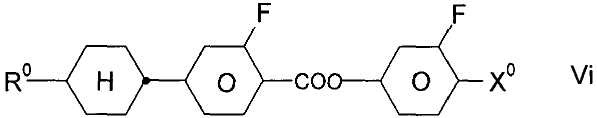 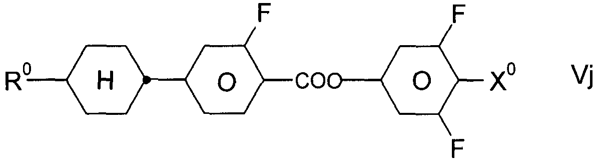 dans lesquelles R⁰ et X⁰ présentent les significations indiquées selon la revendication 1.

9. Milieu cristallin liquide selon une ou plusieurs des revendications 1 à 8, **caractérisé en ce que** le milieu comprend de façon additionnelle un ou plusieurs composé(s) choisi(s) des formules D1, D2 et/ou D3 : 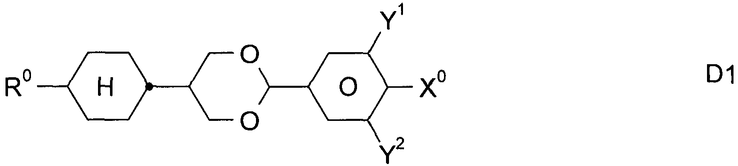 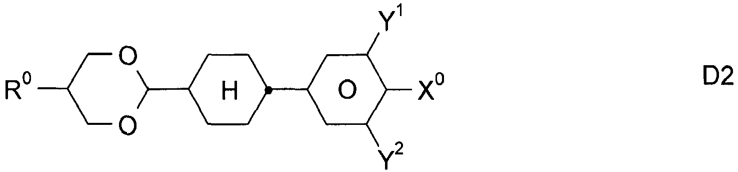 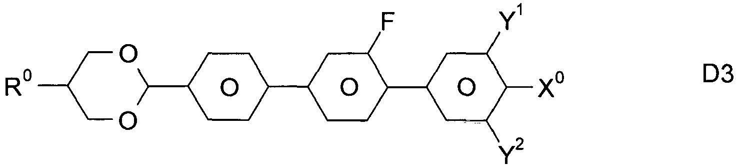 dans lesquelles Y¹, Y², R⁰ et X⁰ présentent les significations indiquées selon la revendication 1.

10. Milieu cristallin liquide selon une ou plusieurs des revendications 1 à 9, **caractérisé en ce qu'**il comprend un ou plusieurs composé(s) polymérisable(s) choisi(s) parmi les composés de la formule M :
R^{Ma}-A^{M1}-(Z^{M1}-A^{M2})ₘ₁-R^{Mb} M
dans laquelle les radicaux individuels présentent la signification qui suit:
R^{Ma} et R^{Mb} représentent chacun, indépendamment l'un de l'autre, P, P-Sp-, H, halogène, SF₅, NO₂, un groupe alkyle, alkényle ou alkynyle, où au moins l'un des radicaux R^{Ma} et R^{Mb} représente ou contient de façon préférable un groupe P ou P-Sp-,
P représente un groupe polymérisable,
Sp représente un groupe d'espaceur ou une liaison simple,
A^{M1} et A^{M2} représentent chacun, indépendamment l'un de l'autre, un groupe aromatique, hétéroaromatique, alicyclique ou hétérocyclique, de façon préférable comportant 4 à 25 atomes de cycle, de façon préférable atomes de C, lequel peut également inclure ou contenir des cycles fusionnés, et lequel peut en option être monosubstitué ou polysubstitué par L,
L représente P, P-Sp-, OH, CH₂OH F, CI, Br, I, -CN, -NO₂, -NCO, -NCS, -OCN, -SCN, -C(=O)N(R^{x})₂, -C(=O)Y¹, -C(=O)R^{x}, -N(R^{x})₂, silyle en option substitué, aryle en option substitué comportant 6 à 20 atomes de C, ou alkyle, alcoxy, alkylcarbonyle, alcoxycarbonyle, alkylcarbonyloxy ou alcoxycarbonyloxy en chaîne droite ou ramifié comportant 1 à 25 atome(s) de C, où, en outre, un ou plusieurs atome(s) de H peut/peuvent être remplacé(s) par F, Cl, P ou P-Sp-, de façon préférable P, P-Sp-, H, OH, CH₂OH halogène, SF₅, NO₂, un groupe alkyle, alkényle ou alkynyle,
Y¹ représente halogène,
Z^{M1} représente -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-, -COO-, -OCO-CH=CH-, CR⁰R⁰⁰ ou une liaison simple,
R⁰ et R⁰⁰ représentent chacun, indépendamment l'un de l'autre, H ou alkyle comportant 1 à 12 atome(s) de C,
R^{x} représente P, P-Sp-, H, halogène, alkyle en chaîne droite, ramifié ou cyclique comportant 1 à 25 atome(s) de C, où, en outre, un ou plusieurs groupe(s) CH₂ non adjacents peut/peuvent être remplacé(s) par -O-, -S-, -CO-, -CO-O-, -O-CO-, -O-CO-O- de telle sorte que des atomes de O et/ou de S ne soient pas liés directement les uns aux autres, et où, en outre, un ou plusieurs atome(s) de H peut/peuvent être remplacé(s) par F, CI, P ou P-Sp-, un groupe aryle ou aryloxy en option substitué comportant 6 à 40 atomes de C, ou un groupe hétéroaryle ou hétéroaryloxy en option substitué comportant 2 à 40 atomes de C,
m1 représente 0, 1, 2, 3 ou 4, et
n1 représente 1, 2, 3 ou 4,
où au moins un, de façon préférable un, deux ou trois, de façon particulièrement préférable un ou deux corps chimiques pris parmi le groupe R^{Ma}, R^{Mb} et les substituants L présents représente(nt) un groupe P ou P-Sp- ou contient/contiennent au moins un groupe P ou P-Sp-.

11. Milieu cristallin liquide selon une ou plusieurs des revendications 1 à 10, **caractérisé en ce qu'**il comprend un ou plusieurs composé(s) choisi(s) parmi les composés polymérisables des formules RM-1 à RM-74 :

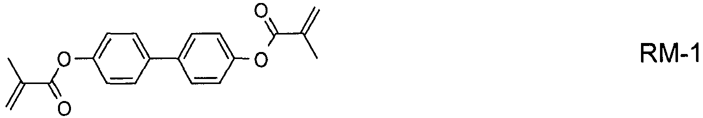

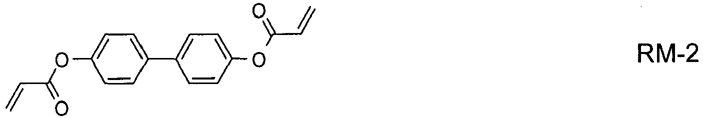

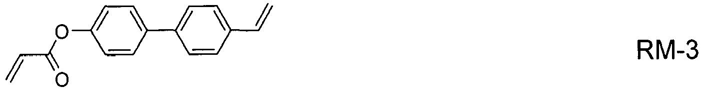

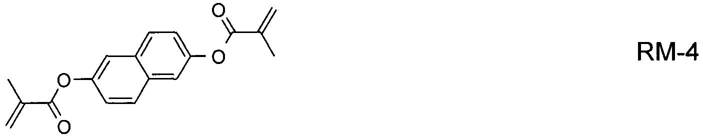

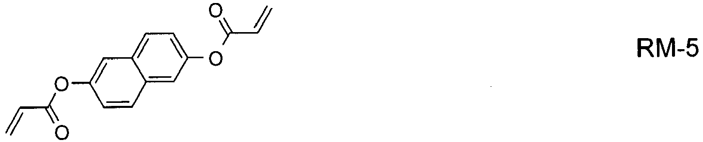

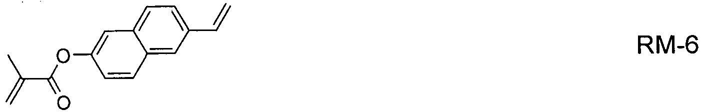

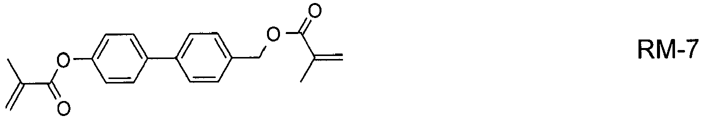

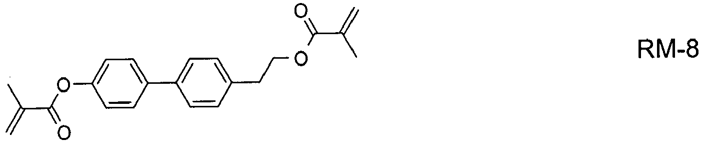

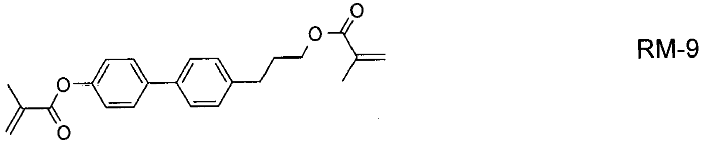

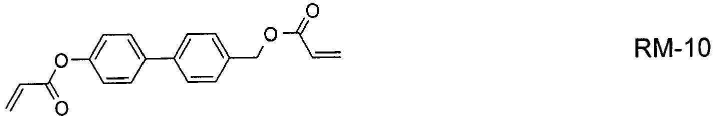

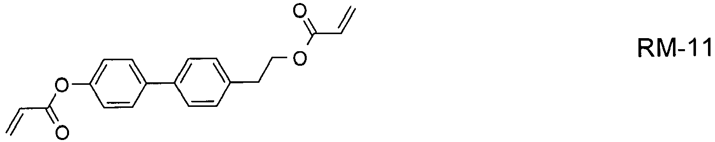

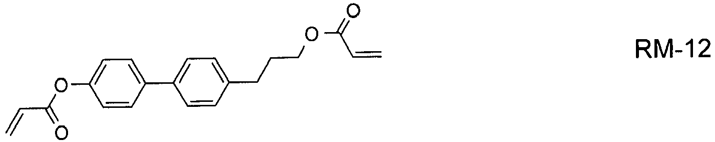

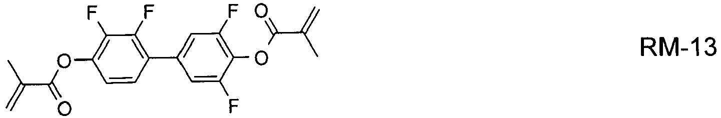

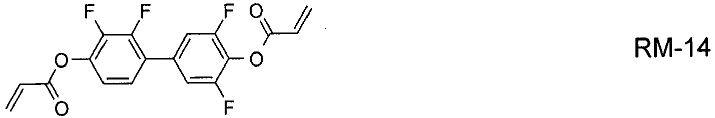

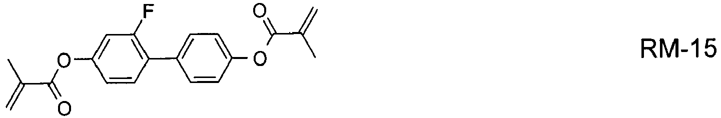

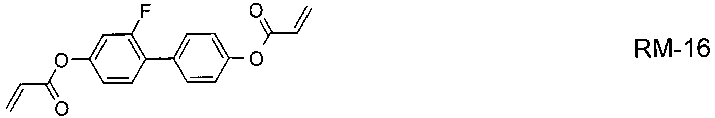

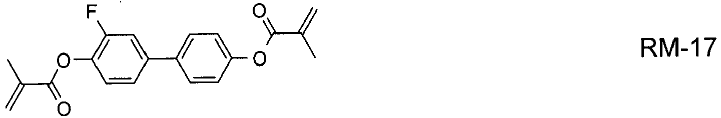

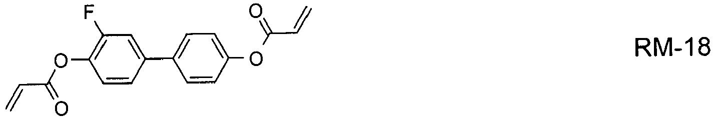

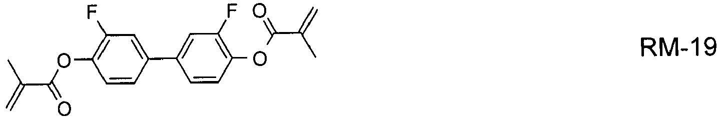

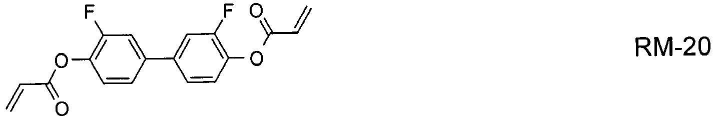

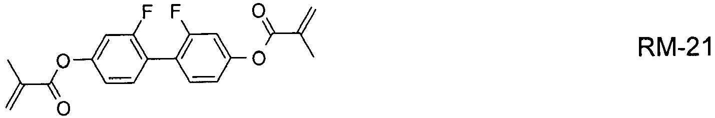

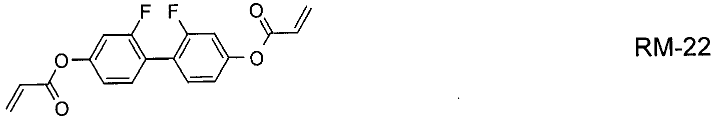

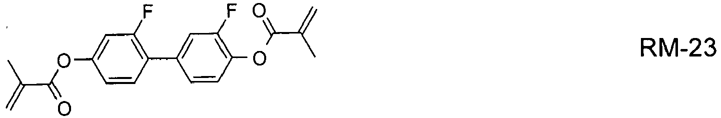

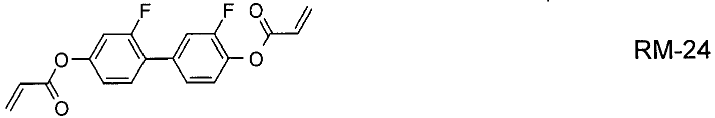

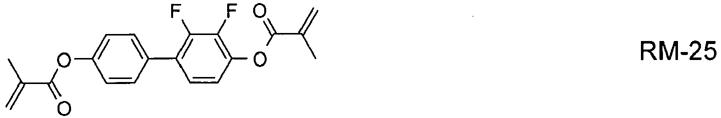

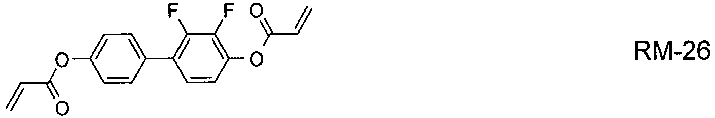

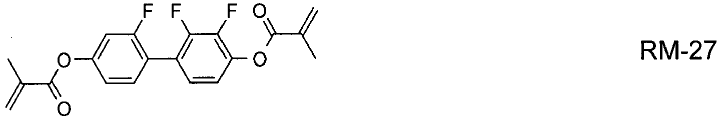

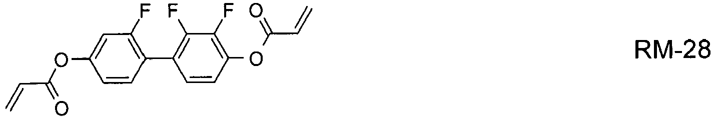

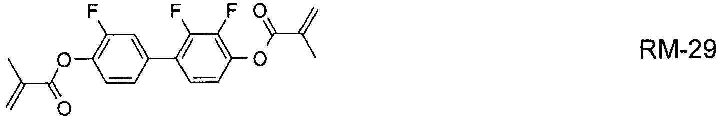

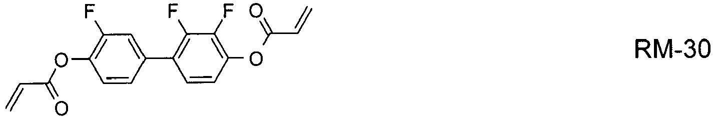

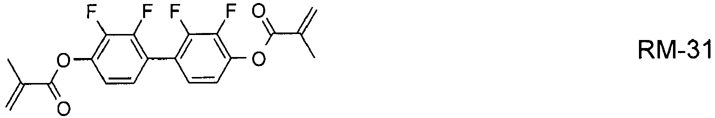

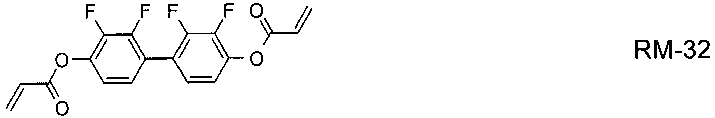

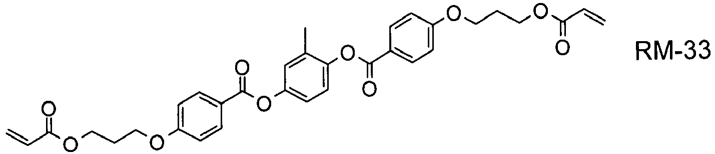

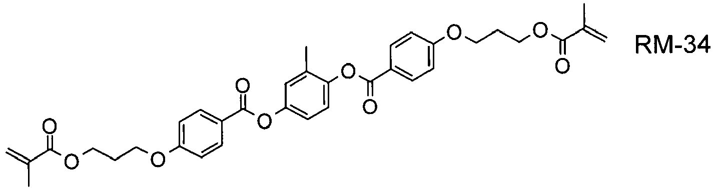

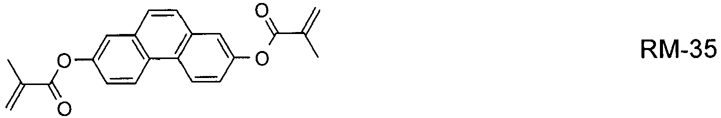

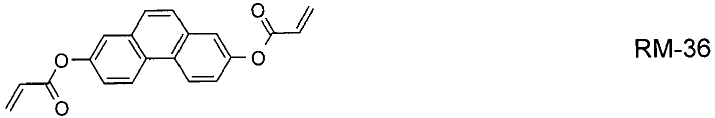

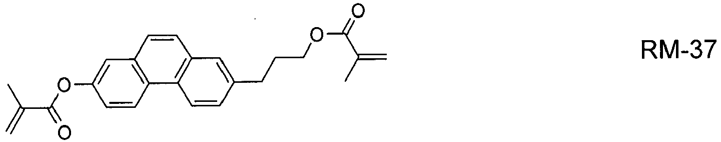

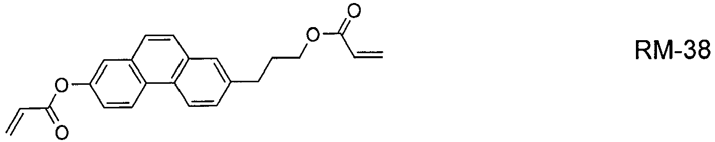

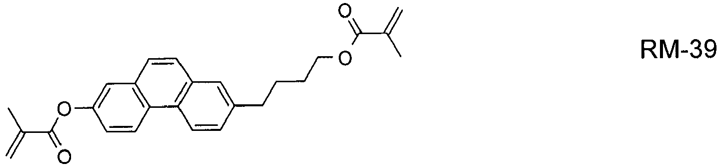

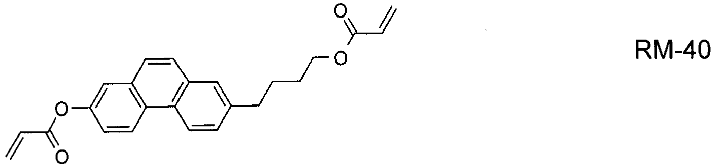

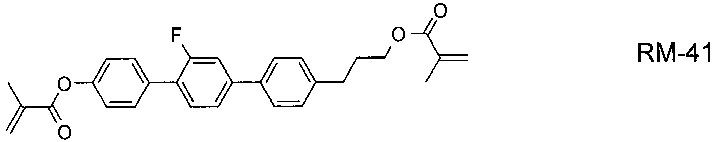

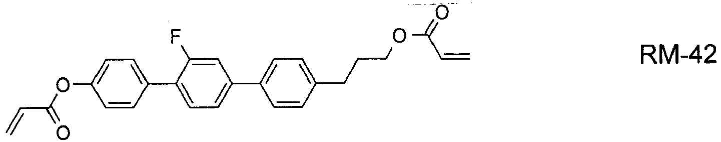

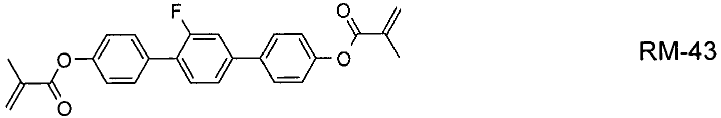

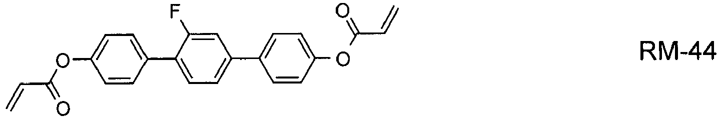

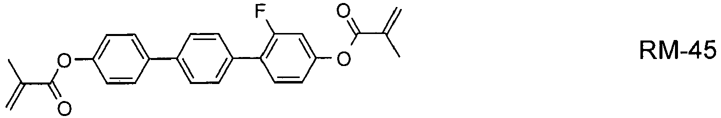

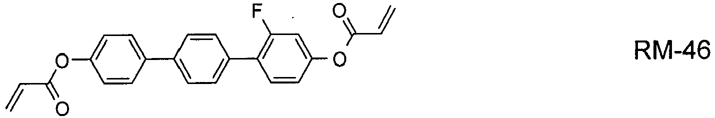

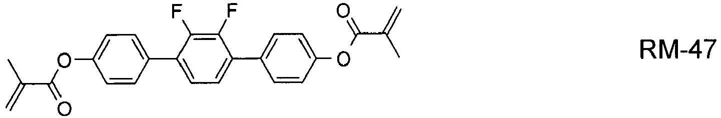

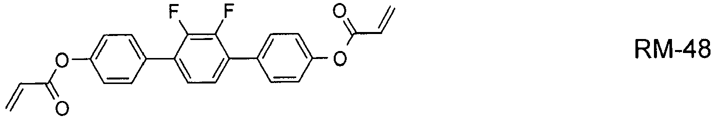

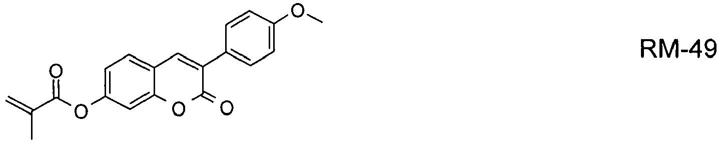

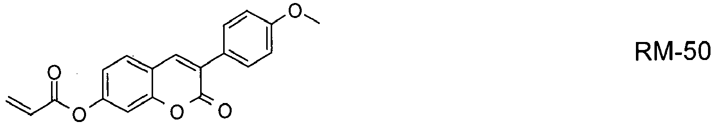

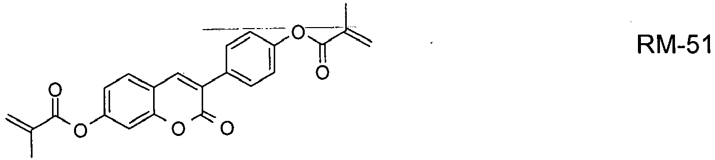

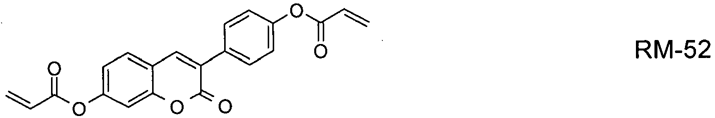

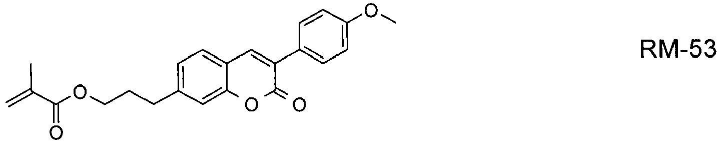

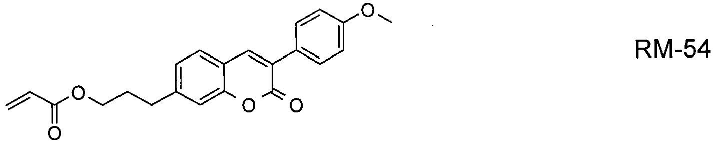

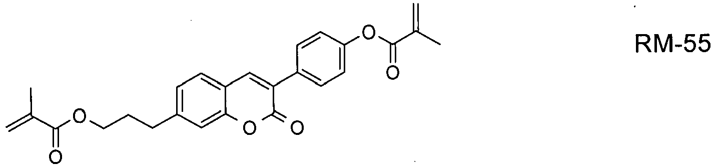

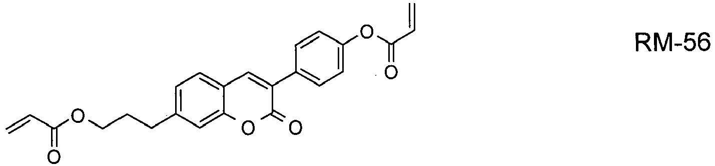

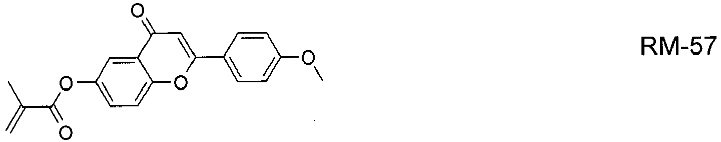

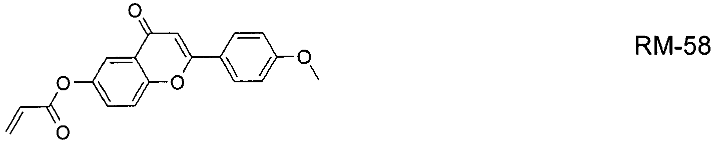

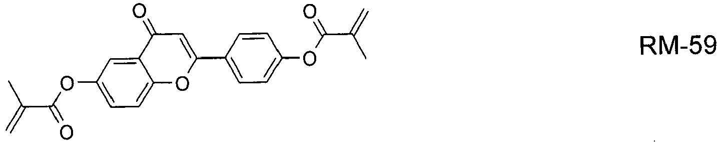

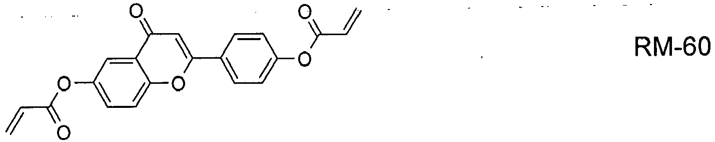

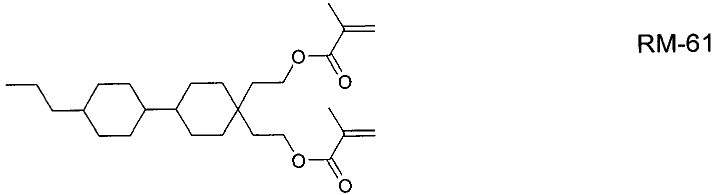

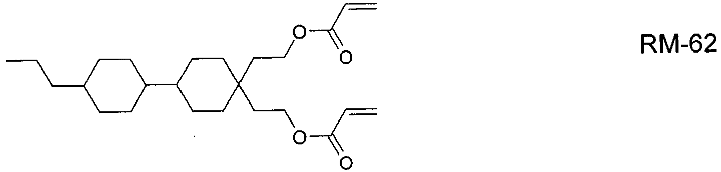

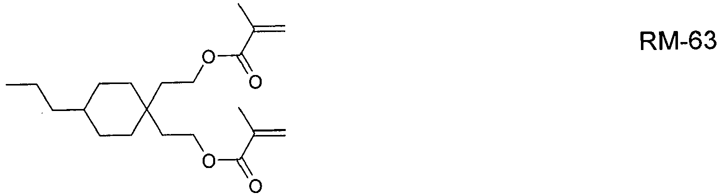

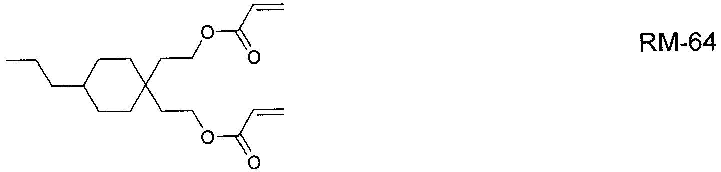

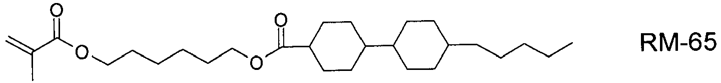

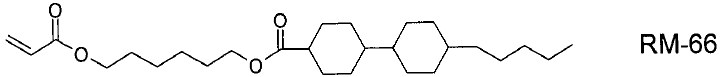

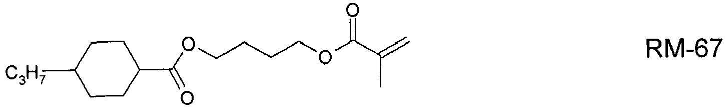

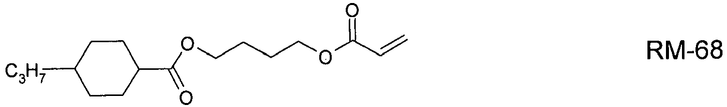

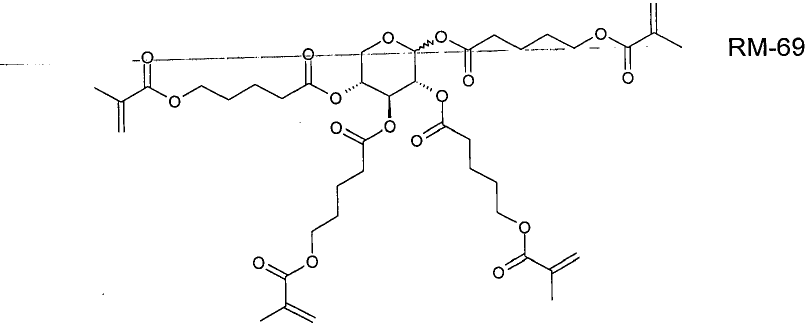

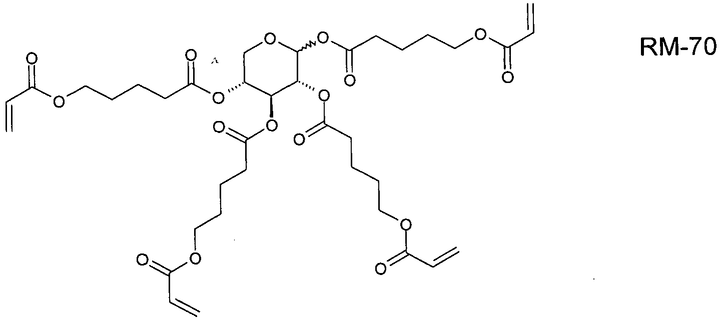

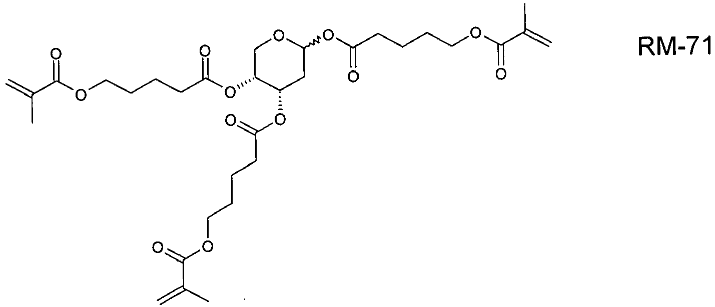

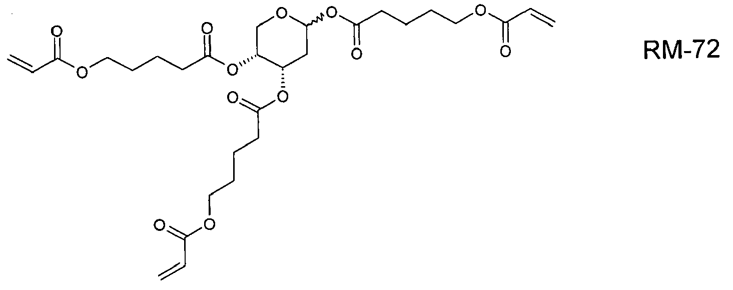

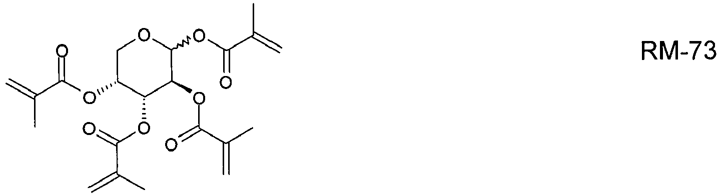

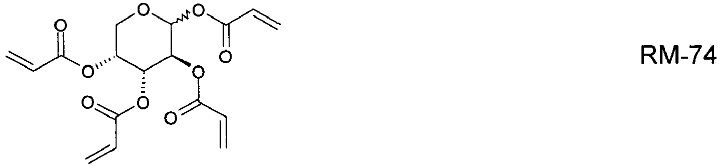

12. Milieu cristallin liquide selon une ou plusieurs des revendications 1 à 11, **caractérisé en ce qu'**il comprend 1-25% en poids de composés de la formule I.

13. Milieu cristallin liquide selon une ou plusieurs des revendications 1 à 12, **caractérisé en ce qu'**il comprend de façon additionnelle un ou plusieurs stabiliseurs UV et/ou antioxydants.

14. Utilisation d'un milieu cristallin liquide selon une ou plusieurs des revendications 1 à 13 à des fins électro-optiques.

15. Utilisation d'un milieu cristallin liquide selon la revendication 14 dans des affichages TN-TFT, OCB, IPS, FFS, VA positif, PS-TN-TFT, PS-IPS, PS-FFS.

16. Affichage à cristaux liquides électro-optique contenant un milieu cristallin liquide selon une ou plusieurs des revendications 1 à 13.

17. Procédé pour la préparation d'un milieu cristallin liquide selon une ou plusieurs des revendications 1 à 13, **caractérisé en ce qu'**un ou plusieurs composé(s) de la formule I sont mélangés avec au moins un autre composé mésogène et en option, avec un ou plusieurs additifs.

18. Composés des formules I2-2, I2-3 et I2-4 :
